(19) Europäisches Patentamt
European Patent Office
Office européen des brevets

(11) **EP 2 977 979 B1**

(12) **EUROPEAN PATENT SPECIFICATION**

(45) Date of publication and mention
of the grant of the patent:
**06.03.2019 Bulletin 2019/10**

(21) Application number: **14769261.0**

(22) Date of filing: **19.03.2014**

(51) Int Cl.:
*G09F 3/04* *(2006.01)*      *B32B 27/30* *(2006.01)*
*B32B 27/36* *(2006.01)*     *B65D 23/08* *(2006.01)*
*B65D 25/20* *(2006.01)*     *B32B 7/12* *(2006.01)*
*B32B 27/08* *(2006.01)*     *B32B 27/32* *(2006.01)*

(86) International application number:
**PCT/JP2014/057548**

(87) International publication number:
**WO 2014/148554 (25.09.2014 Gazette 2014/39)**

(54) **SHRINK LABEL AND METHOD FOR PRODUCING SAME**

SCHRUMPFETIKETT UND VERFAHREN ZUR HERSTELLUNG DAVON

ÉTIQUETTE RÉTRACTABLE ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2013   JP 2013056705**
**30.08.2013   JP 2013180522**
**27.12.2013   JP 2013272276**
**18.03.2014   JP 2014055671**
**18.03.2014   JP 2014055672**
**18.03.2014   JP 2014055673**
**18.03.2014   JP 2014055674**

(43) Date of publication of application:
**27.01.2016   Bulletin 2016/04**

(73) Proprietor: **Fuji Seal International, Inc.**
**Osaka-shi, Osaka 532-0003 (JP)**

(72) Inventors:
• **BANNO, Shinji**
**Osaka-shi**
**Osaka 532-0003 (JP)**
• **KAMEO, Takahiro**
**Osaka-shi**
**Osaka 532-0003 (JP)**
• **HIKIDA, Eiji**
**Osaka-shi**
**Osaka 532-0003 (JP)**
• **UMEDA, Hideaki**
**Osaka-shi**
**Osaka 532-0003 (JP)**

(74) Representative: **Grünecker Patent- und
Rechtsanwälte
PartG mbB
Leopoldstraße 4
80802 München (DE)**

(56) References cited:
**EP-A1- 1 752 285      EP-A1- 1 873 738
EP-A1- 2 008 811      EP-A1- 2 039 507
EP-A1- 2 189 280      WO-A1-2006/051628
WO-A1-2012/070130    WO-A1-2013/035706
CN-C- 100 526 065    JP-A- 2006 044 179
JP-A- 2009 237 561    JP-A- 2010 519 066**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a shrink label and a method for producing the same. More specifically, the present invention relates to a shrink label suitable for the purpose of being applied to containers for, for example, drinks, foods, toiletries, or pharmaceutical products, and a method for producing the same.

Currently, plastic bottles such as PET bottles, metal bottles such as bottle cans, and the like are widely used as containers for drinks such as tea or soft drinks. To these containers, plastic labels are often applied in order to impart display, decorativeness, or functionality thereto, and, for example, shrink labels comprising a print layer disposed on a shrink film (heat-shrinkable film) are widely used because of their advantages such as decorativeness, workability (the property of conforming to containers), and wide display areas.

A hybrid laminated film in which different resin materials are laminated for the purpose of imparting various functions to the films is known as the aforementioned shrink label. For example, a shrink label comprising a base film stretched 3.0 to 4.5 times, the base film consisting of an intermediate layer and outer surface layers laminated on both sides of the intermediate layer, wherein the outer surface layers are each made of a polyester resin containing 1,4-cyclohexanedimethanol as a diol component, the intermediate layer is made of a composite resin of a styrene resin and the polyester resin, the styrene resin comprises a resin containing butadiene, the intermediate layer and the outer surface layers are bonded directly to each other by welding, and the composite resin comprises 3 to 40% by weight of the polyester resin, is knowri as the aforementioned shrink label (see Patent Literature 1).

Alternatively, for example, a shrink label comprising a base film (1) in which outer surface layers (B1) each made of a polyester resin are laminated on both sides of an intermediate layer (A1) made of a polystyrene resin, wherein the polyester resin contains 1,4-cyclohexanedimethanol as a diol component, and the outer surface layers (B1) are laminated directly on both sides of the intermediate layer (A1), is known as the aforementioned shrink label (see Patent Literature 2). Since in the base film, the outer surface layers each made of a polyester resin are laminated directly by melt bonding or the like on both sides of the intermediate layer made of a polystyrene resin, this shrink label can avoid inhibiting shrinkage properties by an adhesive layer, has advantages brought about by both the polystyrene resin and the polyester resin, i.e., excellent heat resistance, solvent resistance, and low-temperature shrinkage properties, can omit the step of providing an adhesive layer, and can be produced easily at low cost because all of the 3 layers in the base film can be produced by a convenient method such as an extrusion method.

For example, a shrink film consisting an at least 3-layer laminate structure in which surface layers (layers A) each constituted by a resin composition containing an amorphous aromatic polyester resin as a main component and 0.5 to 20 parts by weight of a plasticizer with respect to 100 parts by weight of the amorphous-aromatic polyester resin, and a middle layer (layer B) constituted by a resin composition containing a styrene-conjugated diene copolymer and/or a hydrogenated form thereof as a main component are laminated in the order of layer A/layer B/layer A, is known as the shrink film used in the aforementioned shrink label (see Patent Literature 3). This shrink film is less likely to cause troubles associated with delamination even after a shrinking process because the shrinkage stress of the polyester resin layers as surface layers is reduced so as to be less different from the shrinkage stress of the middle layer.

Citation List

Patent Literature

Patent Literature 1: Japanese Patent No. 4028788
Patent Literature 2: Japanese Patent Laid-Open No. 2002-351332
Patent Literature 3: Japanese Patent Laid-Open No. 2009-178887

In recent years, shrink labels have been required to be thinned from the viewpoint of cost reduction and resource saving. Such shrink labels, however, tend to have reduced compressive strength resulting in defects responsible for poor application upon application of the labels to bottles using a labeler, because their stiffness or hardness is reduced in association with the thinning.

Thus, an object of the present invention is to provide a shrink label having high stiffness. Another object of the present invention is to provide a method for producing the shrink label having high stiffness.

The present inventors have previously attempted to produce a shrink label having high stiffness by forming a shrink film using a hard resin. The shrink label produced using the hard resin, however, tends to have reduced interlaminar strength resulting in delamination, particularly, during a shrinking process.

The shrink label made of a composite resin as disclosed in Patent Literature 1 has a gradual shrinkage rate as compared with a shrink film made of a polyester resin, but is difficult to shrink uniformly for thinning and may thus present such problems that the shrink label after application is creased and the upper or lower end of the shrink label after application is bent.

In recent years, shrink labels have been required to be thinned (to a thinner film) from the viewpoint of cost reduction and resource saving. A method for thinning a shrink label is generally a method for thinning a shrink film. In the case of thinning the shrink film having a laminate structure as disclosed in Patent Literature 2, however, this shrink film has reduced solvent resistance, and when a print layer is disposed thereon by coating with a printing ink containing a solvent as a dispersion medium, the shrink film tends to be invaded by the solvent or the like contained in the printing ink, resulting in such defects that the shrink label is ruptured when placed under relatively strong tension, for example, during printing, during bag making with the shrink label, or upon application of the label to a bottle using a labeler. Under present circumstances, therefore, there has been a demand for a shrink label that has the advantages of the polystyrene resin even when thinned, i.e., has excellent shrinkage properties of, for example, suppressing the creases of the shrink label or the bending of its end portion caused by rapid shrinkage upon thermal shrinkage, while comprising a shrink film being excellent in solvent resistance.

Even the shrink label comprising a shrink film as disclosed in Patent Literature 3 is more likely to be delaminated during a shrinking process, depending on conditions of the shrinking process, and is not effective for preventing delamination during the shrinking process. In the case of applying the shrink label to, for example, a container requiring high shrinkability or a bottle can made of a material having high thermal conductivity, such as aluminum or steel, it is required to increase the quantity of heat given to the label and also required to strictly adjust the conditions of the shrinking process for suppressing delamination during the shrinking process. Under present circumstances, therefore, there has been a demand for a shrink label comprising a hybrid laminated shrink film that eliminates the need of strictly adjusting the conditions of the shrinking process, has higher interlaminar strength than ever in a temperature zone during the shrinking process, and is less likely to be delaminated.

Such a shrink label is preferably easy to cut off in the vertical direction (direction orthogonal to the circumferential direction) of a shrink sleeve label so as to facilitate separating the label from the bottle even by a consumer for the recycling of the bottle after the label is applied to a container such as a PET bottle and used as the shrink sleeve label. For example, use of a film made of a favorably tearable material, decrease in the thickness of a film, and perforation of the label in the vertical direction are known as methods for rendering the label easy to cut off.

If the tearability of the shrink sleeve label in the vertical direction is improved by the method as described above for rending the label easy to cut off, the resulting label disadvantageously tends to be ruptured, for example, by drop impact when the label-applied container (labeled container) is dropped. Particularly, in the case of perforating the label, the easiness to cut off of the label is improved, whereas the perforation facilitates rupture and further worsens such a problem that the label tends to be ruptured by drop impact. Specifically, the tearability of the label correlates with the resistance of the dropped label to rupture (drop resistance of the label), and there has been no choice but to adjust the balance between the tearability of the label and the drop resistance of the label, for example, by adjusting the thickness of the film (or the label) or the size of perforation in the case of a perforated label.

US2013224412 discloses a heat-shrinkable multilayer film with structure A/B/C/B/A wherein the A layer comprises a polyester series resin as a main component, the B layer comprises a polyester and a polystyrene resin, and the C layer comprises a polystyrene resin as a main component. Several examples are disclosed where the content of polyester of layer A is 100%, the content of polyester in layer B is higher than 50% and the content of polystyrene in layer C is 100%. The Examples can be employed as a label.

As described above, the conventional shrink labels are required, in addition to stiffness, to have an adequate shrinkage rate, to be insusceptible to delamination, to be excellent in solvent resistance even after thinning, to be less likely to be delaminated during the shrinking process, to be excellent in drop resistance, to be excellent in label tearability, and to have high compressive strength.

The present invention provides a shrink label comprising a shrink film, wherein
the shrink film comprises a base layer part and surface layers disposed on both sides of the base layer part,
the surface layers each contain not less than 50% by weight of a polyester resin, and
the base layer part comprises 5 to 65 layers as layers, wherein the layers comprise at least a layer containing not less than 50% by weight of a polystyrene resin (layer A) and a layer containing not less than 50% by weight of a polyester resin (layer B) as the layers.

In another embodiment, the present invention provides a method for producing a shrink label, comprising a step of preparing a shrink film, wherein the step of preparing a shrink film comprises:

a first stage of melting a raw material (a) comprising a polystyrene resin content of not less than 50% by weight, a raw material (f) comprising a polyester resin content of not less than 50% by weight, and a raw material (c) comprising a polyester resin content of not less than 50% by weight, respectively;
a second stage of laminating the raw material (a) and the raw material (f) melted at the first stage, followed by further layer multiplication to form a laminate; and

a third stage of laminating the raw material (c) melted at the first stage one by one on both sides of the laminate formed at the second stage.

Preferred embodiments are set forth in the dependent claims.

The aspects belonging to the invention are described in the following sections (i.e. aspects 6 and 7). Also aspects not belonging to the invention are described. Those aspects not belonging to the invention are named "aspects of the specification" or simply "specification".

Specifically,
the present **specification** provides a shrink label comprising a shrink film, wherein the shrink film comprises a base layer part and surface layers disposed on both sides of the base layer part, the surface layers each contain not less than 50% by weight of a polyester resin, and the base layer part comprises 5 to 65 layers as layers, wherein the layers at least a layer containing not less than 50% by weight of a polystyrene resin (layer A).

The specific aspect (1) of the present **specification** provides the shrink label described above, wherein the shrink film comprises the surface layers laminated one by one directly on both sides of the base layer part, the base layer part comprises a total of 5 to 65 alternate layers of the layer A and an adhesive resin layer as the layers, and each outermost layer of the base layer part is the adhesive resin layer.

The specific aspect (3) of the present **specification** provides the shrink label described above, wherein the shrink film comprises at least a laminate structure in which a resin layer (R) and a resin layer (S) are adjacent to each other, the combination of the respective main component resins of the resin layer (R) and the resin layer (S) is a polyester resin and a polystyrene resin, a polyester resin and a polyolefin resin, or a polystyrene resin and a polyolefin resin, and the interlaminar strength in the 180° direction at 90°C of an interface formed by the resin layer (R) and the resin layer (S) adjacent to each other is larger than the shrinkage stress at 90°C of the shrink film.

The specific aspect (4) of the present **specification** provides the shrink label described above, wherein the base layer part comprises interfaces formed by the layers adjacent to each other, and not less than 3 of the interfaces are interfaces having T-peel strength lower than that between the surface layers and the base layer part (interfaces (L)).

The specific aspect (5) of the present **specification** provides the shrink label described above, wherein the shrink film comprises at least a laminate structure in which a resin layer (R) and a resin layer (S) are adjacent to each other, the combination of the respective main component resins of the resin layer (R) and the resin layer (S) is a polyester resin and a polystyrene resin, a polyester resin and a polyolefin resin, or a polystyrene resin and a polyolefin resin, the interlaminar strength in the 180° direction at 90°C of an interface formed by the resin layer (R) and the resin layer (S) adjacent to each other is not less than 2 N, and the interlaminar strength in the 180° direction at ordinary temperature of the interface formed by the resin layer (R) and the resin layer (S) adjacent to each other is more than 0 N and less than 1 N.

The specific aspect (2) of the present specification provides the shrink label described above, the shrink label compirising a print layer on at least one surface of the shrink film, wherein the overall thickness of the shrink film is 15 to 35 $\mu$m, the total thickness of the surface layers is not less than 40% of the overall thickness of the shrink film, and the print layer is a solvent drying-type print layer.

The specific aspect (6) of the present invention provides the shrink label described above, wherein the base layer part comprises at least a layer containing not less than 50% by weight of a polyester resin (layer B) as the layers.

The specific aspect (7) of the present invention provides the shrink label described above, wherein the base layer part comprises at least 3 layers of the layer B as the layers.

The present **specification** also provides a method for producing a shrink label, comprising a step of preparing a shrink film, wherein the step of preparing a shrink film comprises: a first stage of melting a raw material (a) comprising a polystyrene resin content of not less than 50% by weight, a raw material (f) comprising a thermoplastic resin as an essential component, and a raw material (c) comprising a polyester resin content of not less than 50% by weight, respectively; a second stage of laminating the raw material (a) and the raw material (f) melted at the first stage, followed by further layer multiplication to form a laminate; and a third stage of laminating the raw material (c) melted at the first stage one by one on both sides of the laminate formed at the second stage.

Advantageous Effects of Invention

The shrink label of the present invention has high label stiffness by virtue of the aforementioned specific constitution and can therefore prevent defects responsible for poor application upon application of the label to a bottle using a labeler.

The shrink label of the present **specification** according to the specific aspect (1) has an adequate shrinkage rate even after thinning, is excellent in stiffness, and is insusceptible to creases and delamination, by virtue of the aforementioned specific constitution.

The shrink label of the present **specification** according to the specific aspect (3) is less likely to be delaminated during the shrinking process by virtue of the aforementioned specific constitution and therefore eliminates the need of strictly adjusting the conditions of the shrinking process and thus, does not take much time to adjust conditions. Even when a shrink sleeve label is applied to a container or the like through the shrinking process, the shrink film (or the shrink label) can be easily applied to the container or the like without being delaminated.

The shrink label of the present **specification** according to the specific aspect (4) is excellent in the drop resistance and tearability of the label by virtue of the aforementioned specific constitution and therefore, is easy to cut off consciously and can be easily separated from the container, in spite of the fact that the label resists rupture by drop impact when the labeled container is dropped.

The shrink label of the present **specification** according to the specific aspect (5) is much less likely to be delaminated even during the shrinking process by virtue of the aforementioned specific constitution and therefore eliminates the need of strictly adjusting the conditions of the shrinking process and thus, does not take much time to adjust conditions. Even when a shrink sleeve label is applied to a container or the like through the shrinking process, the shrink film (or the shrink label) can be easily applied to the container or the like without being delaminated.

The shrink label of the present **specification** according to the specific aspect (5) is excellent in the drop resistance and tearability of the label and therefore, is easy to cut off consciously and can be easily separated from the container, in spite of the fact that the label resists rupture by drop impact when the labeled container is dropped.

The shrink label of the present **specification** according to the specific aspect (2) comprises a shrink film that is excellent in shrinkage properties even after thinning and is excellent in solvent resistance, by virtue of the aforementioned specific constitution, and therefore has the advantage of the polystyrene resin that the creases of the shrink label and the bending of its end portion caused by rapid shrinkage upon thermal shrinkage are suppressed, while being able to suppress such defects that the shrink label is ruptured when placed under relatively strong tension.

The shrink label of the present invention according to the specific aspect (6) is excellent in the drop resistance and tearability of the label and has high stiffness, by virtue of the aforementioned specific constitution, and therefore, is easy to cut off consciously and can be easily separated from the container, in spite of the fact that the label resists rupture by drop impact when the labeled container is dropped.

The shrink label of the present invention according to the specific aspect (7) has relatively high compressive strength by virtue of the aforementioned specific constitution and can therefore prevent defects responsible for poor application upon application of the label to a bottle using a labeler. This shrink label is also excellent in the tearability of the label by virtue of the aforementioned specific constitution and therefore, can be teared for consciously cutting off the label and easily separated from the container.

Brief Description of Drawings

Figure 1 is a schematic diagram (partial cross-sectional view) showing one example of the shrink label of the present invention.
Figure 2 is a schematic diagram (partial cross-sectional view) showing another example of the shrink label of the present invention.
Figure 3 is a schematic diagram (partial cross-sectional view) showing a further alternative example of the shrink label of the present invention.
Figure 4 is a schematic diagram showing one example of a shrink sleeve label, which is one embodiment of the shrink sleeve label of the present invention.
Figure 5 is a schematic diagram (fragmentary enlarged sectional view taken along the A-A' line of Figure 4) showing one example of the shrink sleeve label, which is one embodiment of the shrink sleeve label of the present invention.

Description of Embodiments

The shrink label of the present invention is a shrink label comprising a shrink film. In the present specification, the shrink film (i.e., the shrink film comprised in the shrink label of the present invention) is also referred to as the "shrink film of the present invention". The shrink label of the present invention may comprise a layer other than the shrink film of the present invention without impairing the effects of the present invention.

[Shrink film]

The shrink film of the present invention comprises surface layers laminated on both sides of a base layer part. Specifically, the shrink film of the present invention comprises a base layer part and surface layers disposed on both sides of the base layer part. Specifically, the shrink film of the present invention comprises a layer structure of surface layer/base layer part/surface layer, and preferably, the base layer part and the surface layers are directly laminated. In the shrink film of the present invention, the surface layers on both sides of the base layer part may be the same layers as each other or may be layers different from each other (layers differing in resin composition constituting each layer or in layer thickness). The shrink film of the present invention may be provided, on the outer surfaces of the surface layers, with an antistatic layer or an anchor coat layer without impairing the effects of the present invention. The surface of the shrink film of the present invention may be subjected, if necessary, to a common surface treatment such as corona discharge treatment, primer treatment, or frame treatment.

<Surface layer>

The surface layers (i.e., the surface layers disposed on both sides of the base layer part) in the shrink film of the present invention are layer each containing not less than 50% by weight of a polyester resin. These surface layers carried by the shrink label of the present invention can improve stiffness and strengthen hardness. They also improve thermal shrinkage percentage. By possessing the surface layers, the shrink label of the present invention is relatively excellent in solvent resistance.

The surface layers each contain a polyester resin as an essential component. Only one type may be used as the polyester resin, or not less than two polyester resins may be used. The surface layers are not particularly limited, but may contain a resin other than the polyester resin.

Examples of the polyester resin include a polyester constituted by a dicarboxylic acid component and a diol component as essential constituents (i.e., a polyester comprising at least a constitutional unit (structural unit) derived from a dicarboxylic acid and a constitutional unit derived from a diol), and a polylactic acid polymer. Typical examples of the polyester comprising at least a constitutional unit derived from a dicarboxylic acid and a constitutional unit derived from a diol include a polymer and a copolymer prepared by the condensation reaction between the dicarboxylic acid and the diol, and mixtures thereof. A soft polyester resin such as polyethylene terephthalate supplemented with a plasticizer may be used as the aforementioned polyester resin.

Examples of the dicarboxylic acid (dicarboxylic acid component) include: aromatic dicarboxylic acids such as terephthalic acid, isophthalic acid, phthalic acid, 2,5-dimethylterephthalic acid, 5-t-butylisophthalic acid, 4,4'-biphenyldicarboxylic acid, trans-3,3'-stilbenedicarboxylic acid, trans-4,4'-stilbenedicarboxylic acid, 4,4'-dibenzyldicarboxylic acid, 1,4-naphthalenedicarboxylic acid, 1,5-naphthalenedicarboxylic acid, 2,3-naphthalenedicarboxylic acid, 2,6-naphthalenedicarboxylic acid, 2,7-naphthalenedicarboxylic acid, 2,2,6,6-tetramethylbiphenyl-4,4'-dicarboxylic acid, 1,1,3-trimethyl-3-phenylindene-4,5-dicarboxylic acid, 1,2-diphenoxyethane-4,4'-dicarboxylic acid, diphenyl ether dicarboxylic acid, 2,5-anthracenedicarboxylic acid, 2,5-pyridinedicarboxylic acid, and their substituted forms; aliphatic dicarboxylic acids such as oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, heptadecanedioic acid, octadecanedioic acid, nonadecanedioic acid, icosanedioic acid, docosanedioic acid, 1,12-dodecanedionic acid, and their substituted forms; and alicyclic dicarboxylic acids such as 1,3-cyclopentanedicarboxylic acid, 1,2-cyclohexanedicarboxylic acid, 1,3-cyclohexanedicarboxylic acid, 1,4-cyclohexanedicarboxylic acid, 1,4-decahydronaphthalenedicarboxylic acid, 1,5-decahydronaphthalenedicarboxylic acid, 2,6-decahydronaphthalenedicarboxylic acid, and their substituted forms. Only one of these dicarboxylic acids may be used, or not less than two of them may be used.

Examples of the diol (diol component) include: aliphatic diols such as ethylene glycol, diethylene glycol, 1,2-propanediol, 1,3-propanediol, 1,3-butanediol, 1,4-butanediol, 1,5-pentanediol, 2,2-dimethyl-1,3-propanediol (neopentyl glycol), 1,6-hexanediol, 2-ethyl-2-methyl-1,3-propanediol, 2,2-diethyl-1,3-propanediol, 1,8-octanediol, 2-ethyl-2-butyl-1,3-propanediol, 2-ethyl-2,4-dimethyl-1,3-hexanediol, 1,10-decanediol, polyethylene glycol, and polypropylene glycol; alicyclic diols such as 1,2-cyclohexanedimethanol, 1,3-cyclohexanedimethanol, 1,4-cyclohexanedimethanol, and 2,2,4,4-tetramethyl-1,3-cyclobutanediol; and aromatic diols such as ethylene oxide adducts of bisphenol compounds such as 2,2-bis(4-β-hydroxyethoxyphenyl)propane and bis(4-β-hydroxyethoxyphenyl)sulfone, and xylylene glycol. Only one of these diols may be used, or not less than two of them may be used.

The polyester resin may contain, in addition to those described above, any of constitutional units derived from, for example: oxycarboxylic acids such as p-oxybenzoic acid and p-oxyethoxybenzoic acid; monocarboxylic acids such as benzoic acid and benzoylbenzoic acid; polyvalent carboxylic acids such as trimellitic acid; monohydric alcohols such as polyalkylene glycol monomethyl ether; and polyhydric alcohols such as glycerin, pentaerythritol, and trimethylolpropane.

Among them, the polyester resin is preferably an aromatic polyester resin from the viewpoint of stiffness, surface gloss, mechanical strength, heat resistance, drop resistance, shrinkage properties, abrasion resistance, and compressive strength. The aromatic polyester resin is a polyester resin containing not less than 50% by mol (preferably not less than 70% by mol) of an aromatic dicarboxylic acid in the whole dicarboxylic acid component and/or not less than 50% by mol (preferably not less than 70% by mol) of an aromatic diol in the whole diol component. The aromatic polyester resin is further preferably a polymer or a copolymer prepared by the condensation reaction between a dicarboxylic acid containing an aromatic dicarboxylic acid and a diol containing an aliphatic diol, or a mixture thereof.

The aromatic polyester resin is not constituted by single repeat units, but is preferably a modified aromatic polyester resin containing a modifying component (copolymerization component) from the viewpoint of preventing the delamination between the surface layers and the base layer part by increasing thermal shrinkage percentage and rendering the polyester resin amorphous and from the viewpoint of stretching properties, shrinkage properties, label tearability, and stiffness. The modified aromatic polyester resin is preferably, for example, a modified aromatic polyester resin in which at least one of the dicarboxylic acid component and the diol component is constituted by not less than 2 components, i.e., contains a modifying component in addition to the main component. In other words, the aromatic polyester resin is preferably a modified aromatic polyester resin containing at least not less than 2 types of dicarboxylic acid-derived constitutional units and/or at least not less than 2 types of diol-derived constitutional units.

Among those described above, preferred examples of the modified aromatic polyester resin include modified PET in which a portion of the dicarboxylic acid component and/or the diol component in polyethylene terephthalate (PET) containing terephthalic acid as the dicarboxylic acid component and ethylene glycol (EG) as the diol component has been replaced with a modifying component (i.e., an additional dicarboxylic acid component and/or an additional diol component).

Examples of the dicarboxylic acid component used as the modifying component (copolymerization component) in the modified aromatic polyester resin (particularly, modified PET) include cyclohexanedicarboxylic acid, adipic acid, and isophthalic acid. Among them, isophthalic acid is preferred. Examples of the diol component used as the modifying component include 1,4-cyclohexanedimethanol (CHDM), 2,2-dialkyl-1,3-propanediol such as neopentyl glycol (NPG), and diethylene glycol. Among them, CHDM or 2,2-dialkyl-1,3-propanediol (particularly, NPG) is preferred. Each of the alkyl groups in the 2,2-dialkyl-1,3-propanediol is preferably an alkyl group having 1 to 6 carbon atoms, and these two alkyl groups may be the same alkyl groups or may be different alkyl groups.

The aromatic polyester resin is not particularly limited, but is, specifically, preferably polyethylene terephthalate (PET) containing terephthalic acid as the dicarboxylic acid component and ethylene glycol (EG) as the diol component; a modified aromatic polyester resin containing terephthalic acid as the dicarboxylic acid component, ethylene glycol as the main component in the diol component, and 1,4-cyclohexanedimethanol (CHDM) as the copolymerization component in the diol component (also referred to as "CHDM-copolymerized PET"); or a modified aromatic polyester resin containing terephthalic acid as the dicarboxylic acid component, ethylene glycol as the main component in the diol component, and 2,2-dialkyl-1,3-propanediol as the copolymerization component in the diol component (also referred to as "2,2-dialkyl-1,3-propanediol-copolymerized PET") from the viewpoint of heat shrinkability (shrinkage properties) and label tearability. The 2,2-dialkyl-1,3-propanediol-copolymerized PET is particularly preferably a modified aromatic polyester resin containing terephthalic acid as the dicarboxylic acid component, ethylene glycol as the main component in the diol component, and neopentyl glycol (NPG) as the copolymerization component in the diol component (also referred to as "NPG-copolymerized PET"). The aromatic polyester resin is particularly preferably CHDM-copolymerized PET and/or 2,2-dialkyl-1,3-propanediol-copolymerized PET, further preferably CHDM-copolymerized PET and/or NPG-copolymerized PET, most preferably CHDM-copolymerized PET. The CHDM-copolymerized PET and the 2,2-dialkyl-1,3-propanediol-copolymerized PET may each contain a copolymerization component other than CHDM or 2,2-dialkyl-1,3-propanediol and may be further copolymerized with, for example, isophthalic acid or diethylene glycol.

In the modified aromatic polyester resin, the copolymerization ratio of the copolymerization component (modifying component) [ratio (proportion) of the copolymerizable dicarboxylic acid component to the whole dicarboxylic acid component, or ratio (proportion) of the copolymerizable diol component to the whole diol component] is not particularly limited, but is preferably not less than 10% by mol (e.g., 10 to 40% by mol), more preferably not less than 15% by mol (e.g., 15 to 40% by mol), from the viewpoint of optimizing the thermodeformational behavior of the surface layers and reducing delamination. Among them, the proportion of CHDM, for example, in the case of the CHDM-copolymerized PET, is preferably not less than 10% by mol (hot more than 90% by mol of EG), more preferably not less than 12% by mol (not more than 88% by mol of EG), further preferably not less than 15% by mol (not more than 85% by mol of EG), possibly not less than 20% by mol (not more than 80% by mol of EG) or not less than 25% by mol (not more than 75% by mol of EG), in the whole diol component. The upper limit of the proportion of CHDM is preferably not more than 40% by mol (not less than 60% by mol of EG), more preferably not more than 35% by mol (not less than 65% by mol of EG), further preferably not more than 30% by mol (not less than 70% by mol of EG), particularly preferably not more than 25% by mol (not less than 75% by mol of EG), in the whole diol component. The proportion of 2,2-dialkyl-1,3-propanediol, in the case of the 2,2-dialkyl-1,3-propanediol-copolymerized PET (the proportion of NPG in the case of NPG-copolymerized PET), is preferably not less than 10% by mol (not more than 90% by mol of EG), more preferably not less than 15% by mol (not more than 85% by mol of EG), in the whole diol component. The upper limit of the proportion of NPG is preferably not more than 40% by mol (not less than 60% by mol of EG), more preferably not more than 30% by mol (not less than 70% by mol of EG), in the whole diol component. A portion (preferably 1 to 30% by mol, more preferably 1 to 10% by mol, in the whole diol component) of the EG component may be further replaced with diethylene glycol.

The aromatic polyester resin is preferably a substantially amorphous aromatic polyester resin, more preferably an aromatic polyester resin that is an amorphous saturated polyester resin. The aromatic polyester resin is not particularly limited, but can be rendered substantially amorphous, for example, by modification, because the aromatic polyester resin is modified as mentioned above and thereby becomes difficult to crystalize. The aromatic polyester resin thus rendered amorphous can be extruded at a relatively low temperature. This enhances the layer formability of the surface layers during the extrusion process, thereby preventing the delamination between the surface layers and the base layer part and also improving the shrinkage properties of the shrink label. This can further improve the tearability of the label.

The crystallinity of the polyester resin measured by a differential scanning calorimetry (DSC) method (measured at a rate of temperature rise of 10°C/min) is preferably not more than 15%, more preferably not more than 10%. The polyester resin is most preferably a polyester resin that exhibits almost no melting point (melting peak) (i.e., crystallinity of 0%) when measured by the DSC method. The crystallinity can be calculated from the value of crystal melting heat obtained by the DSC measurement, with a sample having distinct crystallinity measured by an X-ray method or the like as a standard. The crystal melting heat can be determined from the area of the melting peak obtained by using, for example, a DSC (differential scanning calorimetry) apparatus manufactured by Seiko Instruments Inc. to carry out nitrogen seal at a rate of temperature rise of 10°C/min with a sample amount of 10 mg, temporarily raising the temperature to not less than the melting point, and lowering the temperature to ordinary temperature, followed by a temperature rise again. Although the crystallinity is preferably measured from a single resin, the melting peak of the aromatic polyester resin of interest, in the case of the measurement in a mixed state, can be determined by subtracting the melting peak of the mixed resin. The same holds true for the crystallinity of polyester resins contained in layers (layer A and layer E) in the base layer part.

The weight-average molecular weight (Mw) of the polyester resin is preferably 15,000 to 100,000, more preferably 15,000 to 90,000, further preferably 30,000 to 90,000, particularly preferably 30,000 to 80,000, from the viewpoint of melting behavior and shrinkage behavior. The weight-average molecular weight of the 2,2-dialkyl-1,3-propanediol-copolymerized PET is particularly preferably 50,000 to 70,000.

The glass transition temperature (Tg) of the polyester resin is preferably 60 to 80°C, more preferably 60 to 75°C, from the viewpoint of stretching properties and shrinkage properties. The Tg can be controlled by the type of the dicarboxylic acid, the diol, or the like constituting the polyester resin, or the copolymerization ratio of the copolymerization component (modifying component) used in modification.

In the present specification, the glass transition temperature (Tg) of a resin can be measured by DSC (differential scanning calorimetry), for example, in accordance with JIS K 7121. The DSC measurement is not particularly limited, but can be carried out using, for example, a differential scanning calorimeter "DSC6200" manufactured by Seiko Instruments Inc. under conditions involving a rate of temperature rise of 10°C/min.

A commercially available product may be used as the polyester resin, and, for example, "EMBRACE 21214" and "EMBRACE LV" manufactured by Eastman Chemical Company (all are CHDM-copolymerized PET), "BELLPET MGG200" manufactured by Bell Polyester Products, Inc. (2,2-dialkyl-1,3-propanediol-copolymerized PET), and "BELLPET E02" manufactured by Bell Polyester Products, Inc. (NPG-copolymerized PET) are available in the market.

The polylactic acid polymer means a polymer containing lactic acid (D-lactic acid, L-lactic acid, DL-lactic acid, or a mixture thereof) as a monomeric component and also includes a copolymer of lactic acid and an additional monomeric component (e.g., other hydroxycarboxylic acids, lactone, dicarboxylic acid, or diol). Examples of the other hydroxycarboxylic acids include glycolic acid, 2-methyllactic acid, 2-hydroxybutyric acid, 3-hydroxybutyric acid, 4-hydroxybutyric acid, 2-hydroxy-3-methylbutyric acid, 2-hydroxy-3,3-dimethylbutyric acid, and 2-hydroxycaproic acid. Examples of the lactone include $\gamma$-butyrolactone, $\delta$-valerolactone, and $\varepsilon$-caprolactone. Examples of the dicarboxylic acid include the dicarboxylic acids listed and described above as examples of the component constituting the polyester resin. Examples of the diol include the diols listed and described above as examples of the component constituting the polyester resin. These additional monomeric components may be mixed in a monomer state with the lactic acid and introduced into the polymer as a random copolymer, or may be introduced into the polymer as an oligomer polymerized as a polyester beforehand or in the form of a block copolymer formed by a prepolymer with the lactic acid.

Although the compositional ratio between optical isomers (content ratio between D and L forms) of the lactic acid constituting the polylactic acid polymer also differs depending on required physical properties and is not particularly limited, it is preferred that the proportion of D-lactic acid to the whole lactic acid component should be 1 to 20% by weight (preferably 1 to 15% by weight) or the proportion of L-lactic acid to the whole lactic acid component should be 1 to 20% by weight (preferably 1 to 15% by weight), from the viewpoint of crystallinity control. Among them, the proportion of D-lactic acid to the whole lactic acid component is more preferably 1 to 20% by weight.

The proportion of the lactic acid to all monomers constituting the polylactic acid polymer is not particularly limited, but is preferably not less than 50% by mol, more preferably not less than 65% by mol, further preferably not less than 80% by mol. The upper limit of the proportion is not particularly limited, but may be 100% by mol. Only one of these polylactic acid polymers may be used, or not less than two of them may be used. For example, not less than two polylactic acid polymers differing in the ratio between L-lactic acid and D-lactic acid can be used in combination.

The polylactic acid polymer can be produced by polymerizing lactic acid produced with starch obtained from, for example, corn or tubers and roots, as a raw material. The polymerization method is not particularly limited, and a publicly known or common method such as a polycondensation method or a ring-opening polymerization method can be adopted. For example, in the polycondensation method, the lactic acid, or the lactic acid and the additional monomeric component can be directly dehydrated and condensed to obtain a polylactic acid polymer having arbitrary composition. In the ring-opening polymerization method, lactide, which is a cyclic dimer of the lactic acid, can be polymerized in the presence of an appropriate catalyst to obtain a polylactic acid polymer having arbitrary composition.

The weight-average molecular weight (Mw) of the polylactic acid polymer is not particularly limited, but is on the order of usually 5,000 to 100,000, preferably 10,000 to 50,000, from the viewpoint of mechanical characteristics and melt viscosity. If the weight-average molecular weight is too small, mechanical physical properties or heat resistance may be poor. If the weight-average molecular weight is too large, moldability may be reduced.

The content of the polyester resin in each surface layer is not less than 50% by weight, preferably not less than 55% by weight, more preferably not less than 60% by weight, further preferably not less than 70% by weight, particularly preferably not less than 80% by weight, most preferably not less than 90% by weight, with respect to the gross weight (100% by weight) of the surface layer. The upper limit of the content is not particularly limited, but is 100% by weight or may be less than 100% and may be not more than 99% by weight or not more than 98% by weight. If the content is less than 50% by weight, thermal shrinkage percentage or label stiffness is reduced. In addition, the effect of improving the drop resistance of the label may not be obtained, or the solvent resistance, printability, or thermal shrinkage percentage of the shrink film may be reduced. The content of not less than 50% by weight is preferred, because the compressive strength of the label is further improved. The content of the polyester resin is the total content of all polyester resins contained in the surface layer.

The surface layers are not particularly limited, but may each contain a resin other than the polyester resin. Examples of the resin other than the polyester resin include thermoplastic resins such as polystyrene resins, polyolefin resins, vinyl chloride resins, polycarbonate resins, polyamide resins, and thermoplastic elastomers. Only one of these resins other than the polyester resin may be used, or not less than two of them may be used. When each surface layer contains the resin other than the polyester resin, the content of the resin is not more than 50% by weight (e.g., more than 0% by weight and not more than 50% by weight), preferably not more than 30% by weight, more preferably not more than 10% by weight, with respect to the gross weight (100% by weight) of the surface layer. The surface layer may contain the resin other than the polyester resin, but is most preferably free from this resin.

Examples of the polystyrene resins include the polystyrene resins listed and described as examples of the polystyrene resin contained in the layer A mentioned later. Examples of the polyolefin resins include the polyolefin resins listed and described as examples of the polyolefin resin that may be contained in the layer E mentioned later.

When each outermost layer of the base layer part is the layer B mentioned later, the surface layer further containing a polystyrene resin is preferred because the delamination between the layer B (outermost layer of the base layer part) and the surface layer can be prevented. In this case, the content of the polyester resin in the surface layer is not particularly limited, but is preferably 50 to 80% by weight, more preferably 55 to 70% by weight, with respect to the gross weight (100% by weight) of the surface layer. Also, the content of the polystyrene resin is not particularly limited, but is preferably not less than 20% by weight and less than 50% by weight, more preferably 30 to 45% by weight, with respect to the gross weight (100% by weight) of the surface layer.

In this case, the polystyrene resin is not particularly limited, but is, among other, preferably a styrene-diene copolymer, more preferably a styrene-butadiene copolymer, further preferably a styrene-butadiene block copolymer, particularly preferably a styrene-butadiene block copolymer having styrene blocks at both ends, most preferably SBS.

The content of the constitutional unit derived from the styrene monomer in the styrene-diene copolymer is not particularly limited, but is preferably 60 to 95% by weight, more preferably 70 to 90% by weight, with respect to the gross weight (100% by weight) of the styrene-diene copolymer from the viewpoint of shrinkage properties. The content of the constitutional unit derived from the diene in the styrene-diene copolymer is not particularly limited, but is preferably 5 to 40% by weight, more preferably 10 to 30% by weight, with respect to the gross weight (1010% by weight) of the styrene-diene copolymer from the viewpoint of shrinkage properties. When the styrene-diene copolymer contained in the surface layer comprises not less than two styrene-diene copolymers, the aforementioned content of the constitutional unit derived from the styrene monomer and the aforementioned content of the constitutional unit derived from the diene are their respective contents in all of the styrene-diene copolymers.

The surface layers may each contain additives such as a lubricant, a filler, a heat stabilizer, an antioxidant, an ultraviolet absorber, an antistatic agent, an antifogging agent, a fire retardant, a colorant, a pinning agent (alkaline earth metal), and a softening agent without impairing the effects of the present invention.

<Base layer part>

The base layer part in the shrink film of the present invention comprises 5 to 65 layers as layers. The base layer part comprises at least a layer containing not less than 50% by weight of a polystyrene resin (layer A) as the layers.

The shrink label of the present invention comprising the shrink film of the present invention comprising such a base layer part can have high stiffness. The base layer part is not particularly limited, but may a layer other than the layer A (layer E) as the layers. The shrink label of the present invention is excellent in tearability by the layer multiplication of the base layer part comprising the layer A.

In the present specification, the layer containing not less than 50% by weight of a polystyrene resin, comprised in the base layer part, is also referred to as "layer A". In the present specification, the "base layer part" refers to a portion sandwiched between the surface layers in the shrink film of the present invention. Specifically, the base layer part comprises at least the layer A. Of a plurality of layers A in the shrink film of the present invention, all layers or some layers may be the same layers, or may be layers different from each other (layers differing in resin composition constituting each layer or in layer thickness) without departing from the scope of the present application. Likewise, when a plurality of layers E are present in the shrink film of the present invention, of a plurality of layers E, all layers or some layers may be the same layers or may be layers different from each other (layers differing in resin composition constituting each layer or in layer thickness). Each outermost layer of the base layer part is not particularly limited and may be the layer A or may be the layer E. The layer E may be contained, for example, between the layers A or as the outermost layer of the base layer part.

(Layer A)

The layer A is a layer containing not less than 50% by weight of a polystyrene resin.

The layer A comprises a polystyrene resin as an essential component. Only one type may be used as the polystyrene resin, or not less than two polystyrene resins may be used. The layer A is not particularly limited, but may contain a resin other than the polystyrene resin.

The polystyrene resin is a polymer constituted by a styrene monomer as an essential monomeric component. Specifically, the polystyrene resin is a polymer containing at least a constitutional unit derived from the styrene monomer in its molecule (one molecule).

Examples of the styrene monomer include styrene, $\alpha$-methylstyrene, m-methylstyrene, p-methylstyrene, p-ethylstyrene, p-isobutylstyrene, p-t-butylstyrene, and chloromethylstyrene. Among them, styrene is preferred from the viewpoint of easy availability, material cost, etc. Only one of these styrene monomersl may be used, or not less than two of them may be used.

Examples of the polystyrene resin include: homopolymers of styrene monomers such as general-purpose polystyrene (GPPS), which is a styrene homopolymer; copolymers consisting of not less than two styrene monomers as monomeric components; styrene-diene copolymers; copolymers such as styrene-polymerizable unsaturated carboxylic acid ester copolymers; high impact polystyrene (HIPS) such as mixtures of polystyrene and synthetic rubber (e.g., polybutadiene or polyisoprene) and polystyrene composed of styrene graft-polymerized with synthetic rubber; polystyrene prepared by dispersing a rubber elastic material in the continuous phase of a polymer containing a styrene monomer (e.g., a copolymer of a styrene monomer and a (meth)acrylic acid ester monomer) to graft-polymerize the copolymer with the rubber elastic material (referred to as graft-type high impact polystyrene "graft HIPS"); and styrene elastomers. Among them, the polystyrene resin is preferably a styrene-diene copolymer. Only one of these polystyrene resins may be used, or not less than two of them may be used.

The styrene-diene copolymer is a copolymer constituted by a styrene monomer and a diene I(particularly, a conjugated diene) as essential monomeric components. Specifically, the styrene-diene copolymer is a polymer containing at least a constitutional unit derived from the styrene monomer and a constitutional unit derived from the diene (particularly, the conjugated diene) in its molecule (in one molecule).

The diene is not particularly limited, but is preferably a conjugated diene, and examples thereof include 1,3-butadiene, isoprene (2-methyl-1,3-butadiene), 2,3-dimethyl-1,3-butadiene, 1,3-pentadiene, 1,3-hexadiene, and chloroprene. Among them, 1,3-butadiene is particularly preferred. Specifically, the styrene-diene copolymer is preferably a styrene-butadiene copolymer. Only one of these dienes may be used, or not less than two of them may be used.

The monomeric component constituting the styrene-diene copolymer may further contain a monomeric component other than the styrene monomer and the diene. Examples of the monomeric component other than the styrene monomer and the diene include vinyl monomers, polymerizable unsaturated carboxylic acid ester, and polymerizable unsaturated carboxylic anhydride.

Examples of the copolymerization form of the styrene-diene copolymer include random copolymers, block copolymers, and graft copolymers. Among them, a block copolymer is preferred, and examples thereof include styrene block (S)-diene block (D) type, S-D-S type, D-S-D type, and S-D-S-D type.

Examples of the block copolymer of the styrene-diene copolymer (styrene-diene block copolymer) include: styrene-butadiene block copolymers such as styrene-butadiene-styrene block copolymer (SBS); styrene-isoprene block copolymers such as styrene-isoprene-styrene block copolymer (SIS); and styrene-butadiene-isoprene block copolymers such as styrene-butadiene/isoprene-styrene block copolymer (SBIS), among which a styrene-butadiene block copolymer is preferred. Only one of these block copolymers may be used, or not less than two of them may be used.

The styrene-butadiene block copolymer can be a copolymer alternately having a styrene block with only a styrene monomer polymerized and a butadiene block with only butadiene polymerized, and examples thereof include: styrene-butadiene block copolymers having styrene blocks at both ends, such as styrene-butadiene-styrene block copolymer (SBS) and styrene-butadiene-styrene-butadiene-styrene block copolymer (SBSBS); styrene-butadiene block copolymers having a styrene block and a butadiene block at the ends, such as styrene-butadiene copolymer (SB) and styrene-butadiene-styrene-butadiene copolymer (SBSB); and styrene-butadiene block copolymers having butadiene blocks at both ends, such as butadiene-styrene-butadiene copolymer (BSB) and butadiene-styrene-butadiene-styrene-butadiene copolymer (BSBSB). Among them, a styrene-butadiene block copolymer having styrene blocks at both ends is preferred, and SBS is more preferred. Only one of these styrene-butadiene block copolymers may be used, or not less than two of them may be used.

The styrene-diene block copolymer can be produced by a publicly known or common method for producing a block copolymer. Examples of the method for producing the styrene-diene block copolymer include living polymerization (living radical polymerization, living anionic polymerization, living cationic polymerization, etc.) by which the molecular weight, molecular weight distribution, and terminal structures, etc. of the styrene-diene block copolymer can be easily controlled. The living polymerization can be carried out by a publicly known or common method.

The content of the constitutional unit derived from the styrene monomer in the styrene-diene copolymer is not particularly limited, but is preferably 50 to 95% by weight, more preferably 60 to 90% by weight, further preferably 70 to 90% by weight, particularly preferably 75 to 90% by weight, with respect to the gross weight (100% by weight) of the styrene-diene copolymer. The content of not less than 50% by weight is preferred because the shrink film is moderately hard, the shrink label has moderately high stiffness, and shrinkage properties upon application of the shrink label are favorable. The content of not more than 95% by weight is preferred because moderate shrinkage stress and shrinkage properties can be obtained.

The content of the constitutional unit derived from the diene in the styrene-diene copolymer is not particularly limited, but is preferably 5 to 50% by weight, more preferably 10 to 40% by weight, further preferably 10 to 30% by weight, particularly preferably 10 to 25% by weight, with respect to the gross weight (100% by weight) of the styrene-diene copolymer. The content of not more than 50% by weight is preferred because the shrink film is moderately hard, the shrink label has moderately high stiffness, and shrinkage properties upon application of the shrink label are favorable. The content of not less than 5 % by weight is preferred because moderate shrinkage stress and shrinkage properties can be obtained.

When the styrene-diene copolymer contained in the I layer A comprises not less than two styrene-diene copolymers, the aforementioned content of the constitutional unit derived from the styrene monomer and the aforementioned content of the constitutional unit derived from the diene are their respective contents in all of the styrene-diene copolymers.

The content of the constitutional unit derived from the styrene monomer and the content of the constitutional unit derived from the diene can be controlled by the composition of the styrene-diene copolymer (content of each constitutional unit contained in each styrene-diene copolymer, and content of each styrene-diene copolymer in all styrene-diene copolymers contained in the layer A). More specifically, for example, when the styrene-diene copolymer is a resin mixture consisting of a styrene-diene copolymer (PS1) having content $s_1$ (% by weight) of the constitutional unit derived from the styrene monomer and content $d_1$ (% by weight) of the constitutional unit derived from the diene and a styrene-diene copolymer (PS2) having content $s_2$ (% by weight) of the constitutional unit derived from the styrene monomer and content $d_2$ (% by weight) of the constitutional unit derived from the diene and the content of PS1 and the content of PS2 are defined as $W_1$ (% by weight) and $W_2$ (% by weight), respectively, in 100% by weight of this resin mixture (resin mixture of PS1 and PS2), the content of the constitutional unit derived from the styrene monomer and the content of the constitutional unit derived from the diene in the resin mixture can generally be controlled as mentioned below. The same holds true for the content of the constitutional unit derived from the styrene monomer and the content of the constitutional unit derived from the diene in the styrene-diene copolymer that may be contained in the surface layer or the layer E.

$$\text{Content (\% by weight) of the constitutional unit derived from the styrene monomer} = (s_1 \times W_1 + s_2 \times W_2) / 100$$

$$\text{Content (\% by weight) of the constitutional unit derived from the diene} = (d_1 \times W_1 + d_2 \times W_2) / 100$$

These constitutional units (constitutional unit derived from the styrene monomer and constitutional unit derived from the diene) and the contents of the constitutional units are not particularly limited, but can be analyzed or measured by use of, for example, nuclear magnetic resonance (NMR) or a gas chromatography mass spectrometer (GCMS). Constitutional units in other resin layers (layer E, surface layers, etc.) and the contents of the constitutional units in the resins can be analyzed or measured in the same way as above.

The polystyrene resin is not particularly limited, but may be hydrogenated. Specifically, the polystyrene resin may be a hydrogenated polystyrene resin. The hydrogenated polystyrene resin is not particularly limited, but is preferably a hydrogenated styrene-diene copolymer such as hydrogenated styrene-butadiene-styrene block copolymer (SEBS) or hydrogenated styrene-isoprene-styrene block copolymer (SEPS), which is a resin prepared by the hydrogenation of SBS or SIS. Only one of these hydrogenated polystyrene resins may be used, or not less than two of them may be used.

A polar group may be introduced to the polystyrene resin without particular limitations. Specifically, the polystyrene resin may be a polar group-introduced polystyrene resin (modified polystyrene resin). The modified polystyrene resin includes a polar group-introduced hydrogenated polystyrene resin.

The modified polystyrene resin is a polystyrene resin having a polystyrene resin backbone to which a polar group has been introduced. Examples of the polar group include an acid anhydride group, a carboxylic acid group, a carboxylic acid ester group, a carboxylic acid chloride group, a carboxylic acid amide group, a carboxylate group, a sulfonic acid group, a sulfonic acid ester group, a sulfonic acid chloride group, a sulfonic acid amide group, a sulfonate group, an isocyanate group, an epoxy group, an amino group, an imide group, an oxazoline group, and a hydroxy group. Among them, an acid anhydride group, a carboxylic acid group, a carboxylic acid ester group, or an epoxy group is preferred, and a maleic anhydride group or an epoxy group is more preferred. Only one of these polar groups may be used, or not less than two of them may be used. The modified polystyrene resin has a polar group with high affinity for or reactable with the polyester resin and is compatible with the polystyrene resin, thereby enhancing adhesiveness at ordinary temperature to layers containing the polyester resin as a main component (e.g., surface layers and layer B) or layers containing the polystyrene resin as a main component (e.g., other layers A). Only one of these polar groups may be used, or not less than two of them may be used.

The modified polystyrene resin is not particularly limited, but is preferably a modified form of hydrogenated styrene-butadiene-styrene block copolymer (SEBS) or a modified form of hydrogenated styrene-propylene-styrene block copolymer (SEPS). Specifically, the modified polystyrene resin is not particularly limited, but is preferably acid anhydride-modified SEBS, acid anhydride-modified SEPS, epoxy-modified SEBS, or epoxy-modified SEPS, more preferably maleic anhydride-modified SEBS, maleic anhydride-modified SEPS, epoxy-modified SEBS, or epoxy-modified SEPS. Only one of these modified polystyrene resins may be used, or not less than two of them may be used.

The polystyrene resin is not particularly limited, but may be a soft polystyrene resin. The soft polystyrene resin is not particularly limited as long as the soft polystyrene resin can be used as a polystyrene resin that improves the adhesiveness between the layers in the plastic film of the present invention by its softness. Examples of the soft polystyrene resin include styrene elastomers, styrene-diene copolymers, HIPS (high impact polystyrene) rich in rubber component, and graft HIPS rich in rubber component. Among them, a styrene elastomer or a styrene-diene copolymer is preferred. Only one of these soft polystyrene resins may be used, or not less than two of them may be used. The styrene elastomer may be a styrene-diene copolymer elastomer containing a diene component. The HIPS rich in rubber component refers to HIPS containing a rubber component content of more than 30% by weight with respect to the gross weight (100% by weight) of the HIPS. Also, the graft HIPS rich in rubber component refers to graft HIPS containing a rubber component content of more than 30% by weight with respect to the gross weight (100% by weight) of the graft HIPS.

The soft polystyrene resin includes a hydrogenated soft polystyrene resin. The hydrogenated soft polystyrene resin is not particularly limited, but is preferably a hydrogenated styrene elastomer or a hydrogenated styrene-diene copolymer (particularly, a hydrogenated styrene-diene copolymer rich in diene component).

The content of the constitutional unit derived from the diene in the styrene-diene copolymer elastomer is preferably not less than 50% by weight, more preferably 60 to 95% by weight, further preferably 65 to 90% by weight, with respect to the gross weight (100% by weight) of the styrene-diene copolymer.

Among them, the polystyrene resin is preferably a styrene-diene copolymer, more preferably a styrene-butadiene copolymer, further preferably a styrene-butadiene block copolymer, particularly preferably a styrene-butadiene block copolymer having styrene blocks at both ends, most preferably SBS, from the viewpoint of the shrinkage properties and interlaminar strength of the shrink label.

A mixture of a styrene-diene copolymer with hydrogenated polystyrene and/or modified polystyrene can be preferably used as the polystyrene resin from the viewpoint of adjusting the adhesive strength between the layers in the base layer part.

When the polystyrene resin is the mixture of a styrene-diene copolymer with hydrogenated polystyrene and/or modified polystyrene, the content of the styrene-diene copolymer in the polystyrene resin is not particularly limited, but is preferably 10 to 90% by weight with respect to the gross weight (100% by weight) of the polystyrene resin in the layer A from the viewpoint of the adhesiveness between the layers in the base layer part. In this case, the total content of the hydrogenated polystyrene and the modified polystyrene in the polystyrene resin is not particularly limited, but is preferably 10 to 90% by weight with respect to the gross weight (100% by weight) of the polystyrene resin in the layer A.

For example, a mixture of a styrene-diene copolymer with not less than one polystyrene resin selected from the group consisting of GPPS, HIPS, and graft HIPS can be used as the polystyrene resin from the viewpoint of improving the impact resistance, shrink performance, and stiffness of the layer A.

When the polystyrene resin is the mixture of a styrene-diene copolymer with not less than one polystyrene resin selected from the group consisting of GPPS, HIPS, and graft HIPS, the total content of GPPS, HIPS, and graft HIPS is not particularly limited, but is preferably 5 to 40% by weight with respect to the gross weight (100% by weight) of the layer A from the viewpoint of the stretching properties of the film and the stiffness, flexibility, and impact resistance of the shrink label. In this case, the content of the styrene-diene copolymer is not particularly limited, but is preferably 40 to 95% by weight with respect to the gross weight (100% by weight) of the layer A.

A commercially available product may be used as the polystyrene resin, and examples thereof include "CLEAREN 530L" and "CLEAREN 730L" manufactured by Denki Kagaku Kogyo Kabushiki Kaisha (Denka), "TUFPRENE 126S" and "ASAPRENE T411" manufactured by Asahi Kasei Corp., "KRATON D1102A" and "KRATON D1116A" manufactured by Kraton Polymers Japan Ltd., "STYROLUX S" and "STYROLUX T" manufactured by Styrolution Group GmbH, and "ASAFLEX 840" and "ASAFLEX 860" manufactured by Asahi Kasei Chemicals Corp. (all are SBS), "679", "HF77", and "SGP10" manufactured by PS Japan Corp., and "DIC Styrene XC-515" and "DIC Styrene XC-535" manufactured by DIC Corp. (all are GPPS), and "475D", "H0103", and "HT478" manufactured by PS Japan Corp., and "DIC Styrene GH-8300-5" manufactured by DIC Corp. (all are HIPS). Examples of the hydrogenated polystyrene resin include "TUFTEC H series" manufactured by Asahi Kasei Chemicals Corp., and "KRATON G series" manufactured by Shell Japan Ltd. (all are SEBS), "DYNARON" manufactured by JSR Corp. (hydrogenated styrene-butadiene random copolymer), and "SEPTON" manufactured by Kuraray Co., Ltd. (SEPS). Examples of the modified polystyrene resin include "TUFTEC M series" manufactured by Asahi Kasei Chemicals Corp., "EPOFRIEND" manufactured by Daicel Corp., "Polar Group-Modified DYNARON" manufactured by JSR Corp., and "RESEDA" manufactured by ToaGosei Co., Ltd.

The content of the polystyrene resin in the layer A is not less than 50% by weight, preferably not less than 55% by weight, more preferably not less than 60% by weight, with respect to the gross weight (100% by weight) of the layer A. The upper limit of the content may be 100% by weight. If the content is less than 50% by weight, shrinkage properties are reduced. In addition, the effect of improving the tearability of the label may not be obtained. When the layer A contains not less than two polystyrene resins, the aforementioned "content of the polystyrene resin in the layer A" is the total content of all of the polystyrene resins contained in the layer A.

The layer A is not particularly limited, but may contain a resin other than the polystyrene resin. Examples of the resin other than the polystyrene resin include thermoplastic resins such as polyester resins, polyolefin resins, vinyl chloride resins, polycarbonate resins, polyamide resins, and thermoplastic elastomers. When the layer A contains the resin other than the polystyrene resin, among them, a polyester resin is preferred. Only one of these resins other than the polystyrene resin may be used, or not less than two of them may be used. When the layer A contains the resin other than the polystyrene resin, the content of the resin is not more than 50% by weight (e.g., more than 0% by weight and not more than 50% by weight), preferably 5 to 45% by weight, more preferably 15 to 40% by weight, with respect to the gross weight (100% by weight) of the layer A. When the layer A contains the resin other than the polystyrene resin, the upper limit of the content of the polystyrene resin in the layer A may be less than 100% by weight and is preferably not more than 95% by weight, more preferably not more than 85% by weight.

The polyester resin that may be contained in the layer A may be the same polyester resin as the polyester resin contained in the layer B mentioned later or may be a polyester resin different therefrom.

When the resin other than the polystyrene resin is a polyester resin, the content of the polyester resin in the layer A is preferably not less than 5% by weight, more preferably not less than 10% by weight, with respect to the gross weight (100% by weight) of the layer A, particularly, from the viewpoint of adhesiveness to the surface layers, shrinkage properties, etc. The upper limit of the content is not particularly limited, but is preferably less than 50% by weight, more preferably not more than 40% by weight, further preferably not more than 30% by weight.

Examples of the polyester resin include the polyester resins listed and described above as examples of the polyester resin contained in the surface layers. The polyester resin may be the same polyester resin as the polyester resin contained in the surface layers or may be a polyester resin different therefrom, but is preferably the same polyester resin.

Examples of the polyolefin resin include the polyolefin resins listed and described as examples of the polyolefin resin that may be contained in the layer E mentioned later. When the base layer part contains the layer E, the polyolefin resin may be the same polyolefin resin as the polyolefin resin that may be contained in the layer E or may be a polyolefin resin different therefrom, but is preferably the same polyolefin resin.

The layer A may contain additives such as a lubricant, a filler, a heat stabilizer, an antioxidant, an ultraviolet absorber, an antistatic agent, an antifogging agent, a fire retardant, a colorant, a pinning agent (alkaline earth metal), and a softening agent without impairing the effects of the present invention. Only one of these components may be used, or not less than two of them may be used. The layer A may also contain a recovered raw material obtained by the repelletizing of film pieces during film formation.

(Layer E)

The layer E is a layer comprised in the base layer part and is a layer different from the layer A. The layer E is not particularly limited as long as the layer can be laminated with the surface layers or the layer A, or both. Examples of the layer E include a layer for improving the adhesiveness between the surface layers and the base layer part, and a layer that imparts various functions to the shrink film of the present invention or the shrink label of the present invention. When each outermost layer of the base layer part comprises the layer for improving the adhesiveness, the adhesiveness between the surface layers and the base layer part can be improved so that delamination is less likely to occur. In the base layer part, the layer E intervenes between the layers A and thereby, can also be used for optimizing shrinkage rate and enhancing the stiffness of the shrink label.

The layer E is not particularly limited, but is preferably a resin layer containing a thermoplastic resin such as a polyester resin, a polystyrene resin, a polyolefin resin, a vinyl chloride resin, a polycarbonate resin, a polyamide resin, or a thermoplastic elastomer as a main component. Only one of these thermoplastic resins may be used, or not less than two of them may be used.

Examples of the polyester resin that may be contained in the layer E include the polyester resins listed and described above as examples of the polyester resin contained in the surface layers.

Examples of the polystyrene resin that may be contained in the layer E include the polystyrene resins listed and described above as examples of the polystyrene resin contained in the layer A.

The polyolefin resin is a polymer (including an olefin elastomer) constituted by an olefin as an essential monomeric component, i.e., a polymer containing at least a constitutional unit derived from the olefin in its molecule (in one molecule). Examples of the olefin include $\alpha$-olefins such as ethylene, propylene, 1-butene, and 4-methyl-1-pentene.

Examples of the polyolefin resin include polymers constituted by ethylene as an essential monomeric component (polyethylene resins), polymers constituted by propylene as an essential monomeric component (polypropylene resins), ionomers, and amorphous cyclic olefin polymers. The polyolefin resin is not particularly limited, but is, among them, preferably a polyethylene resin, a polypropylene resin, or an amorphous cyclic olefin polymer, more preferably a polyethylene resin or a polypropylene resin. Only one of these polyolefin resins may be used, or not less than two of them may be used.

The polyethylene resin is a polymer constituted by ethylene as an essential monomeric component, i.e., a polymer containing at least an ethylene-derived constitutional unit in its molecule (in one molecule). Examples of the polyethylene resin include ethylene homopolymers, and copolymers constituted by ethylene and not less than one monomeric component (monomeric component other than ethylene) as essential monomeric components (ethylene copolymers).

Examples of the monomeric component other than ethylene include: $\alpha$-olefins; vinyl monomers such as vinyl chloride; unsaturated carboxylic acids such as (meth)acrylic acid, maleic acid, fumaric acid, crotonic acid, itaconic acid, citraconic acid, and 5-norbornene-2,3-dicarboxylic acid; unsaturated carboxylic anhydrides such as maleic anhydride, citraconic anhydride, 5-norbornene-2,3-dicarboxylic anhydride, and tetrahydrophthalic anhydride; unsaturated carboxylic acid esters such as methyl (meth)acrylate, ethyl (meth)acrylate, propyl (meth)acrylate, butyl (meth)acrylate, 2-ethylhexyl (meth)acrylate, 2-hydroxyethyl (meth)acrylate, 3-hydroxypropyl (meth)acrylate, glycidyl (meth)acrylate, monoethyl maleate, and diethyl maleate; unsaturated amides or imides such as acrylamide, methacrylamide, and maleimide; unsaturated carboxylates such as sodium (meth)acrylate and zinc (meth) acrylate; and vinyl acetate. Only one of these monomeric components other than ethylene may be used, or not less than two of them may be used.

Examples of the $\alpha$-olefins include $\alpha$-olefins having 4 to 20 carbon atoms (preferably $\alpha$-olefins having 4 to 8 carbon atoms), such as 1-butene, 1-pentene, 4-methyl-1-pentene, 1-hexene, 1-heptene, 1-octene, 1-nonene, and 1-decene. Only one of these $\alpha$-olefins may be used, or not less than two of them may be used.

Examples of the ethylene copolymers include: copolymers constituted by ethylene and not less than one $\alpha$-olefin as essential monomeric components (ethylene-$\alpha$-olefin copolymers); ethylene-vinyl acetate copolymer (EVA); ethylene-carboxylic acid copolymers such as ethylene-acrylic acid copolymer (EAA) and ethylene-methacrylic acid copolymer (EMAA); and ethylene-carboxylic acid ester copolymers such as ethylene-ethyl acrylate copolymer (EEA) and ethylene-methyl methacrylate copolymer (EMMA).

Examples of the polyethylene resin include low density polyethylene (LDPE) and linear low density polyethylene (LLDPE), among which LLDPE is particularly preferred from the viewpoint of heat shrinkability. The LDPE refers to polyethylene that contains at least an ethylene-derived constitutional unit, is produced by a high-pressure method, and has a low density on the order of 0.850 to 0.945 g/cm$^3$. The LLDPE refers to polyethylene that contains at least an ethylene-derived constitutional unit, is produced by a low- or medium-pressure method, has a short-chain branch, and has a low density on the order of 0.850 to 0.945 g/cm$^3$.

The content of the ethylene-derived constitutional unit in the polyethylene resin (100% by weight), i.e., the content of ethylene in all monomeric components (100% by weight) constituting the polyethylene resin, is not particularly limited, but is preferably not less than 80% by weight, more preferably not less than 85% by weight, further preferably not less than 90% by weight, and the upper limit thereof may be 100% by weight, 99% by weight, 98% by weight, or 95% by weight. The content of the constitutional unit derived from the $\alpha$-olefin in the ethylene-$\alpha$-olefin copolymer (100% by weight), i.e., the content of the $\alpha$-olefin in all monomeric components (100% by weight) constituting the ethylene-$\alpha$-olefin copolymer is not particularly limited, but is preferably 1 to 20% by weight, more preferably 2 to 15% by weight, further preferably 5 to 10% by weight.

The density of the polyethylene resin is not particularly limited, but is preferably not less than 0.800 $g/cm^3$, more preferably not less than 0.850 $g/cm^3$, further preferably not less than 0.870 $g/cm^3$, particularly preferably not less than 0.890 $g/cm^3$. The upper limit of the density is not particularly limited, but is preferably 0.950 $g/cm^3$, more preferably 0.935 $g/cm^3$. The melt flow rate (MFR) (temperature: 190°C, load: 2.16 kg) of the polyethylene resin is not particularly limited, but is preferably 1 to 30 g/10 min, more preferably 1 to 10 g/10 min, from the viewpoint of melt extrudability and productivity.

The polyethylene resin is not particularly limited, but is preferably a polyethylene resin obtained by polymerization using a metallocene catalyst (metallocene-catalyzed polyethylene resin). A publicly known or common metallocene catalyst for olefin polymerization can be used as the metallocene catalyst. Examples of the polymerization method (copolymerization method) for the polyethylene resin include publicly known polymerization methods such as a slurry method, a solution polymerization method, and an gas phase method.

A commercially available product may be used as the polyethylene resin, and, for example, "UMERIT 4540F", "UMERIT 3540F", "UMERIT 2540F", "UMERIT 1540F", "UMERIT 0540F", "UMERIT 2040FC", "UMERIT 0520F", "UMERIT 1520F", "UMERIT 0520F", and "UMERIT 715FT" manufactured by Ube Maruzen Polyethylene Co., Ltd., and "EVOLUE SP1520" and "EVOLUE SP2040" manufactured by Prime Polymer Co., Ltd. (all are metallocene-catalyzed LLDPE), "KERNEL KF260T", "KERNEL KF360T", "KERNEL KF380", and "KERNEL KS340T" manufactured by Japan Polyethylene Corp. (all are metallocene-catalyzed ethylene-$\alpha$-olefin copolymers), "F234" manufactured by Ube Maruzen Polyethylene Co., Ltd. (LDPE), and "V206" manufactured by Ube Maruzen Polyethylene Co., Ltd. and "NOVATEC EVA series" manufactured by Japan Polyethylene Corp. (all are EVA) are available in the market.

Examples of the polypropylene resin include propylene homopolymers (homopolypropylene), and copolymers constituted by propylene and not less than one olefin (olefin other than propylene) as essential monomeric components (propylene copolymers). Among others, a copolymer constituted by propylene and not less than one $\alpha$-olefin as essential monomeric components (propylene-$\alpha$-olefin copolymer) is preferred as the aforementioned propylene copolymer. The propylene copolymer is a copolymer containing at least a propylene-derived constitutional unit and a constitutional unit derived from the olefin in its molecule (in one molecule). The propylene-$\alpha$-olefin copolymer is a copolymer containing at least a propylene-derived constitutional unit and a constitutional unit derived from the $\alpha$-olefin in its molecule (in one molecule). Examples of the $\alpha$-olefin used as a copolymerization component in the propylene-$\alpha$-olefin copolymer include $\alpha$-olefins having 2 to 20 carbon atoms (except for propylene), such as ethylene, 1-butene, 1-pentene, 4-methyl-1-pentene, 1-hexene, 1-heptene, 1-octene, 1-nonene, and 1-decene. Only one of these $\alpha$-olefins may be used, or not less than two of them may be used. The propylene copolymer (propylene-$\alpha$-olefin copolymer, etc.) may be a block copolymer, may be a random copolymer, or a may be a graft copolymer. Among them, a random copolymer is preferred.

The content of the propylene-derived constitutional unit in the propylene copolymer is not particularly limited, but is preferably not less than 50% by weight, more preferably not less than 70% by weight, further preferably not less than 80% by weight, with respect to the gross weight (100% by weight) of the propylene copolymer.

Among those described above, the propylene copolymer is particularly preferably a propylene-ethylene copolymer. The ratio between ethylene and propylene in the propylene-ethylene copolymer can be selected from the range of, for example, former/later (weight ratio) = approximately 1/99 to 30/70 (preferably 2/98 to 25/75, more preferably 5/95 to 20/80). The propylene-ethylene copolymer may be any form of a block copolymer, a random copolymer, and a graft copolymer and may be further copolymerized with an additional $\alpha$-olefin other than ethylene and propylene. The propylene copolymer (particularly, the propylene-ethylene copolymer) preferably has an isotactic index of not less than 90% from the viewpoint of low-temperature shrinkage properties and the strong hardness of the shrink label.

The polypropylene resin is not particularly limited, but is preferably a polypropylene resin obtained by polymerization using a metallocene catalyst (metallocene-catalyzed polypropylene resin). A publicly known or common metallocene catalyst for olefin polymerization can be used as the metallocene catalyst. Examples of the polymerization method (copolymerization method) for the polypropylene resin include publicly known polymerization methods such as a slurry method, a solution polymerization method, and an gas phase method.

The density of the polypropylene resin is not particularly limited, but is preferably not less than 0.800 $g/cm^3$, more preferably not less than 0.850 $g/cm^3$. The upper limit of the density is not particularly limited, but is preferably 0.950 $g/cm^3$.

A commercially available product may be used as the polypropylene resin, and, for example, "WINTEC WFX6" and "WINTEC 1987FC" manufactured by Japan Polypropylene Corp. (all are metallocene-catalyzed propylene-ethylene random copolymers), and "ZELAS #7000" and "ZELAS #5000" manufactured by Mitsubishi Chemical Corp., and "Vistamaxx 3020FL" manufactured by Exxon Mobil Corp. (all are polypropylene resins) are available in the market.

Examples of the amorphous cyclic olefin polymer include copolymers of $\alpha$-olefins, for example, ethylene, propylene, 1-butene, 1-hexene, or 4-methyl-1-pentene, and at least one cyclic olefin (also referred to as "cyclic olefin copolymers"), and ring-opened polymers of cyclic olefins and hydrogenated forms thereof (also referred to as "cyclic olefin ring-opened polymers or hydrogenated forms thereof"). These cyclic olefin copolymers and cyclic olefin ring-opened polymers or hydrogenated forms thereof also include their respective graft-modified forms.

Examples of the cyclic olefin used in the amorphous cyclic olefin polymer include polycyclic olefins such as bicyclo[2.2.1]hept-2-ene (norbornene), tetracyclo $[4.4.0.1^{2,5}.1^{7,10}]$-3-dodecene, hexacyclo $[6.6.1.1^{3,6}.1^{10,13}.0^{2,7}.0^{9,14}]$-4-heptadecene, octacyclo $[8.8.0.1^{2,9}.1^{4,7}.1^{11}.18.1^{13,16}.0^{3,8}.0^{12,17}]$-5-dococene, pentacyclo $[6.6.1.1^{3,6}.0^{2,7}.0^{9,14}]$-4-hexadecene, heptacyclo-5-icosene, heptacyclo-5-heneicosene, tricyclo $[4.3.0.1^{2,5}]$-3-decene, tricyclo $[4.4.0.1^{2,5}]$-3-undecene, pentacyclo $[6.5.1.1^{3,6}.0^{2,7}.0^{9,13}]$-4-pentadecene, pentacyclopentadecadiene, pentacyclo $[4.7.0.1^{2\text{-}5}.0^{8.13}.1^{9,12}]$-3-pentadecene, and nonacyclo $[9.10.1.1^{4.7}.1^{13,20}.1^{15,18}.0^{2.10}.0^{12,21}.0^{14,19}]$-5- pentacocene. Among them, norbornene is preferred. These cyclic olefins may have, on their rings, a substituent such as an ester group (e.g., a methoxycarbonyl group or an ethoxycarbonyl group), an alkyl group (e.g., a methyl group), a haloalkyl group, a cyano group, or a halogen atom.

The cyclic olefin copolymers can be obtained, for example, by polymerizing the $\alpha$-olefin and the cyclic olefin using a catalyst such as a so-called Ziegler catalyst or a metallocene catalyst in a hydrocarbon solvent such as hexane, heptane, octane, cyclohexane, benzene, toluene, or xylene. Such cyclic olefin copolymers are commercially available, and, for example, "APEL" manufactured by Mitsui Chemicals, Inc. and "TOPAS" manufactured by Polyplastics Co., Ltd. can be used.

The cyclic olefin ring-opened polymers or hydrogenated forms thereof can be produced, for example, by subjecting one or not less than two of the aforementioned cyclic olefins to metathesis polymerization (ring-opening polymerization) using a molybdenum compound or a tungsten compound as a catalyst and, usually, further hydrogenating the obtained polymer. Such cyclic olefin ring-opened polymers or hydrogenated forms thereof are commercially available, and, for example, "ARTON" manufactured by JSR Corp. and "ZEONEX" and "ZEONOR" manufactured by Zeon Corp. can be used.

The amorphous cyclic olefin polymer is not particularly limited, but is more preferably a cyclic olefin copolymer. The cyclic olefin copolymer is highly miscible and compatible with a polyolefin resin when mixed with the polyolefin resin so that a shrink film having much better transparency and impact resistance can be obtained.

The glass transition temperature (Tg) of the amorphous cyclic olefin polymer is not particularly limited, but is preferably 50 to 80°C, more preferably 60 to 80°C, further preferably 60 to 75°C, most preferably 65 to 75°C (particularly, approximately 70°C), from the viewpoint ofl stretching properties. The glass transition temperature of the amorphous cyclic olefin polymer can be adjusted by the types of its monomeric components (e.g., a cyclic olefin), the blending ratios thereof, etc.

When the amorphous cyclic olefin polymer is a cyclic olefin copolymer, the content of the constitutional unit derived from the cyclic olefin (e.g., norbornene) in the cyclic olefin copolymer is not particularly limited, but is preferably 50 to 75% by weight, more preferably 60 to 70% by weight, with respect to the gross weight (100% by weight) of the cyclic olefin copolymer from the viewpoint of heat shrinkability. For example, it is preferred that the content of norbornene in the cyclic olefin copolymer (norbornene content in COC) should fall within the aforementioned range.

When the layer E is the layer containing a thermoplastic resin as a main component, the content of the thermoplastic resin as a main component in the layer E is not particularly limited, but is preferably not less than 50% by weight, more preferably not less than 55% by weight, further preferably not less than 70% by weight, particularly preferably not less than 90% by weight, with respect to the gross weight (100% by weight) of the resin layer. The upper limit of the content is not particularly limited, but can be not more than 100% by weight.

The layer E may contain a tackifier resin (e.g., a rosin resin, a hydrogenated rosin resin, a terpene resin, a terpene-phenol resin, a hydrogenated terpene resin, a coumarone resin, a hydrogenated coumarone resin, or a petroleum resin), an aromatic hydrocarbon resin, a phenol resin, or an alicyclic hydrocarbon resin without impairing the effects of the present invention. In addition, the layer E may contain additives such as a lubricant, a filler, a heat stabilizer, an antioxidant, an ultraviolet absorber, an antistatic agent, an antifogging agent, a fire retardant, a colorant, a pinning agent (alkaline earth metal), and a softening agent without impairing the effects of the present invention. The layer E may also contain a recovered raw material obtained by the repelletizing of film pieces during film formation.

(Layer structure, physical properties, etc., of base layer part)

The number of layers contained in the base layer part is 5 to 65 layers, preferably 5 to 33 layers, more preferably 9 to 33 layers. If the number of layers is less than 5 layers, the layer multiplication of the base layer part is low effective so that the effect of improving stiffness cannot be obtained. On the other hand, if the number of layers is more than 65 layers, in the case of setting the thickness (overall thickness) of the shrink film to within a range suitable for the shrink label, the thickness (thickness per layer) of the layer A is too small so that use of the layer A is low effective, resulting in the reduced stiffness and weakened hardness of the shrink film and the shrink label. In the specific aspect (3), the number of layers of not less than 5 layers is preferred because the layer multiplication tends to improve the stiffness of the shrink label and strengthen hardness while the small thickness of each layer in the base layer part tends to reduce the shrinkage stress of the shrink film. On the other hand, the number of layers of not more than 65 layers is preferred because, in the case of setting the thickness (overall thickness) of the shrink film to within a range suitable for the shrink label, the thickness per layer of the resin layer (R) or the resin layer (S) can be kept above a given thickness and therefore, stiffness is not reduced. In the specific aspect (4), if the number of layers is less than 5 layers, the layer multiplication of the base layer part is low effective so that the effect of improving the drop resistance of the label cannot be obtained. On the other hand, if the number of layers is more than 65 layers, in the case of setting the thickness (overall thickness) of the shrink film to within a range suitable for the shrink label, the thickness (thickness per layer) of each layer in the base layer part is too small so that the drop resistance of the shrink label is reduced. In the specific aspect (5), the number of layers of not less than 5 layers is preferred because the layer multiplication decreases the thickness of each layer in the base layer part and softens each layer in the shrink film and therefore facilitates the flexibility of the layer so that delamination is less likely to occur even at ordinary temperature. It is also preferred because the tearability of the shrink label is further improved. It is further preferred because the layer multiplication tends to improve label stiffness and therefore improve drop resistance. On the other hand, the number of layers of not more than 65 layers is preferred because, in the case of setting the thickness (overall thickness) of the shrink film to within a range suitable for the shrink label, the thickness per layer of the resin layer (R) or the resin layer (S) can be kept above a given thickness and therefore, label stiffness is not reduced. In the specific aspect (6), if the number of layers is less than 5 layers, the layer multiplication of the base layer part is low effective so that the effect of improving the drop resistance or stiffness of the label cannot be obtained. On the other hand, if the number of layers is more than 65 layers, in the case of setting the thickness (overall thickness) of the shrink film to within a range suitable for the shrink label, the thickness (thickness per layer) of the layer A and/or the layer B is too small so that use of the layer A and/or the layer B is low effective, resulting in the reduced stiffness and weakened hardness of the shrink film and the shrink label. In the specific aspect (7), if the number of layers is less than 5 layers, the layer multiplication of the base layer part is low effective so that the effect of improving compressive strength cannot be obtained. On the other hand, if the number of layers is more than 65 layers, in the case of setting the thickness (overall thickness) of the shrink film to within a range suitable for the shrink label, the thickness (thickness per layer) of the layer B is too small so that use of the layer B is low effective, resulting in the reduced compressive strength of the shrink film and the shrink label. The total number of layers as the layer A and the layer B contained in the base layer part is not particularly limited, but preferably falls within the aforementioned range.

The base layer part comprises not less than one, preferably not less than two, more preferably not less than three layers A as the layers. The upper limit of the number of layers as the layer A is not particularly limited, but can be not more than 65 layers and is preferably not more than 33 layers, more preferably not more than 17 layers.

The base layer part can contain at least one layer A. When the base layer part consists of the layer A and the layer containing a thermoplastic resin as an essential component (layer F), the laminate structure of the base layer part is not particularly limited, but is, specifically, preferably a laminate structure in which a repeat unit "layer A/layer F" is repeated (layer A/layer F/layer A/layer F/ .... /layer A/layer F/layer A), (layer F/layer A/layer F/layer A/ .... /layer F/layer A/layer F), (layer A/layer F/layer A/layer F/ .... /layer A/layer F), or (layer F/layer A/layer F/layer A/ .... /layer F/layer A). The outermost layers on both sides of the base layer part may each be the layer A or the layer F. The layer F is a layer that forms the base layer part and is the layer A or the layer E.

When the base layer part consists of the layer A (i.e., the layer F = layer A), it is more preferred, without particular limitations, that two layers A differing in raw material composition (layer A1 and layer A2) in the base layer part should be alternately laminated directly without the mediation of other layers. Specifically, the base layer part particularly preferably comprises a total of 5 to 65 alternate layers of two layers A differing in raw material composition (layer A1 and layer A2) as the layers.

When the base layer part consists of the layer A, the laminate structure of the base layer part is not particularly limited, but is, specifically, preferably a laminate structure in which two layers A differing in raw material composition (layer A1 and layer A2) are used and a repeat unit "layer A1/layer A2" is repeated (layer A1/layer A2/layer A1/layer A2/ .... /layer A1/layer A2/layer A1), (layer A2/layer A1/layer A2/layer A1/ .... /layer A2/layer A1/layer A2), (layer A1/layer A2/layer A1/layer A2/ .... /layer A1/layer A2), or (layer A2/layer A1/layer A2/layer A1/ .... /layer A2/layer A1). The outermost layers on both sides of the base layer part may each be the layer A1 or the layer A2.

When the base layer part comprises the layer A and the layer E (i.e., the layer F = layer E), it is preferred, without particular limitations, that the layer A and the layer E in the base layer part should be alternately laminated, and it is more preferred that these layers should be alternately laminated directly without the mediation of other layers. Specifically, the base layer part particularly preferably comprises a total of 5 to 65 alternate layers of the layer A and the layer E as the layers.

When the base layer part comprises the layer A and the layer E, the laminate structure of the base layer part is not particularly limited, but is, specifically, preferably a laminate structure in which a repeat unit "layer A/layer E" is repeated (layer A/layer E/layer A/layer E/ .... /layer A/layer E/layer A), (layer E/layer A/layer E/layer A/ .... /layer E/layer A/layer E), (layer A/layer E/layer A/layer E/ .... /layer A/layer E), or (layer E/layer A/layer E/layer A/ .... /layer E/layer A). The outermost layers on both sides of the base layer part may each be the layer A or the layer E.

When the base layer part comprises the layer A and the layer E, it is preferred, without particular limitations, that all of the layers A in the base layer part should be made of the same raw material, and it is also preferred that all of the layers E should be made of the same raw material. Specifically, it is preferred that the layers A and the layers E should be each made of the same raw materials respectively. Particularly, it is preferred that all of the layers A should be layers with the same composition, and it is also preferred that all of the layers E should be layers with the same composition.

(Constitution, physical properties, etc., of shrink film of present invention)

The shrink film of the present invention comprises the base layer part land the surface layers. The surface layers are laminated on both sides of the base layer part and provided on one side and the other side of the base layer part.

The thickness (overall thickness) of the shrink film of the present invention is not particularly limited, but is preferably 10 to 100 μm, more preferably 15 to 50 μm, further preferably 20 to 45 μm. The thickness of not less than 10 μm is preferred because stiffness is further improved, and hardness is further strengthened. In addition, it is preferred because the resulting label can have strength necessary for mechanical application, the shrinkage stress of the shrink film can be further reduced, and the drop resistance and compressive strength of the label are further improved. The thickness of not more than 100 μm is preferred because the label has much better tearability.

The thickness (thickness per layer) of the surface layers is not particularly limited, but is preferably 1 to 15 μm, more preferably 2 to 10 μm, further preferably 2.5 to 8 μm, particularly preferably 5 to 8 μm. The thickness of not less than 1 μm is preferred because label stiffness is further improved. In the specific aspect (2), the thickness of not less than 5 μm is preferred because solvent resistance to a solvent drying-type ink for forming a print layer can be improved. The thickness of not more than 15 μm is preferred because delamination is less likely to occur between the surface layers and the base layer part. The respective thicknesses of the surface layers on both sides of the base layer part in the shrink film of the present invention may be the same or may be different from each other.

The thickness of the base layer part is not particularly limited, but is preferably not less than 5 μm, more preferably 8 to 90 μm, further preferably 10 to 45 μm, particularly preferably 11 to 40 μm. The thickness of not less than 8 μm is preferred because label stiffness is further improved, and shrinkage rate becomes moderate so that creases are less likely to occur. The thickness of not more than 90 μm is preferred because delamination is less likely to occur even if the interlaminar strength of the interface between the layers in the base layer part is relatively low.

The thickness (thickness per layer) of each layer in the base layer part is not particularly limited, but is preferably not less than 0.2 μm (e.g., 0.2 to 10 μm), more preferably not less than 0.3 μm (e.g., 0.3 to 5 μm). All or some of the respective thicknesses of a plurality of layers in the base layer part may be the same or may be different from each other. For example, the layers that serve as the outermost layers of the base layer part in contact with the surface layers may each be thinner than each inner layer of the base layer part.

The thickness (thickness per layer) of the layer A is not particularly limited, but is preferably not less than 0.2 μm, more preferably not less than 0.3 μm, further preferably not less than 0.6 μm. The thickness of not less than 0.2 μm is preferred because the effect of improving stiffness is enhanced, and delamination is less likely to occur between the surface layers and the base layer part. The thickness of not less than 0.3 μm is preferred because the effect of optimizing the shrinkage rate of the shrink label is sufficiently obtained, the effect of improving stiffness is further enhanced, and hardness is strengthened, and also from the viewpoint of the shrinkage finish of the shrink label. The upper limit of the thickness is not particularly limited, but is preferably 15 μm, more preferably 10 μm, further preferably 5 μm. All or some of the respective thicknesses of a plurality of layers A in the shrink film of the present invention may be the same or may be different from each other. For example, the layers A in the base layer part in contact with the surface layers may each be thinner than each inner layer A (layer A between the layers E) of the base layer part.

l l The thickness (thickness per layer) of the layer E is not particularly limited, but is preferably not less than 0.2 μm, more preferably not less than 0.3 μm, further preferably not less than 0.6 μm. The upper limit of the thickness is not particularly limited, but is preferably 15 μm, more preferably 10 μm, further preferably 7 μm, particularly preferably 5 μm. All or some of the respective thicknesses of a plurality of layers E in the shrink film of the present invention may be the same or may be different from each other. For example, the layers E in the base layer part in contact with the surface layers may each be thinner than each inner layer E (layer E between the layers A) of the base layer part.

The ratio of the thickness of the surface layers (total thickness of all of the surface layers) to the thickness of the base layer part in the shrink film of the present invention [(thickness of the surface layers):(thickness of the base layer part)] is not particularly limited, but is preferably 2:1 to 1:10, more preferably 1:1 to 1:4. The base layer part thicker than the ratio of 2:1 is preferred because creases and the delamination between the surface layers and the base layer part are less likely to occur. On the other hand, the surface layers thicker than the ratio of 1:10 are preferred because the stiffness and abrasion resistance of the label are further improved.

When an interface formed by two resin layers (resin layer (P) and resin layer (Q)) adjacent to each other in which the combination of their respective main component resins is a polyester resin and a polystyrene resin, a polyester resin and a polyolefin resin, or a polystyrene resin and a polyolefin resin is present in the shrink film of the present invention, the interlaminar strength in the 180° direction at 90°C of the interface [P/Q] is not particularly limited, but is preferably not less than 2 N, more preferably not less than 3 N, further preferably not less than 4 N. The upper limit of the interlaminar strength in the 180° direction at 90°C is not particularly limited, but is preferably 10 N, more preferably 8 N. If the interlaminar strength in the 180° direction at 90°C is not less than 2 N, delamination can be prevented even during the shrinking process. In the present specification, the interface formed by the resin layer (P) and the resin layer (Q) adjacent to each other is also referred to as "interface [P/Q]". When a plurality of interfaces [P/Q] are present in the shrink film of the present invention, the interlaminar strength in the 180° direction at 90°C is not less than 2 N at all of the interfaces [P/Q]. When a plurality of identical interfaces [P/Q] are present in the shrink film, the interlaminar strength in the 180° direction at 90°C may be regarded as being the same among the identical interfaces [P/Q].

In the present specification, the interlaminar strength in the 180° direction at 90°C of the interface is not particularly limited, but can be determined, for example, by measuring the interlaminar strength in the 180° direction in a state heated to 90°C in accordance with JIS K 6854-2. Specifically, the interlaminar strength in the 180° direction at 90°C can be measured by a method described below.

(Method for measuring interlaminar strength in 180° direction at 90°C of interface)

The shrink label (or the shrink film) is partially separated at the interface to be assayed from the end face in the main orientation direction to prepare a sample having a separating-side portion (separating portion) and the remaining portion after the separation (separated portion). This sample is fixed through the separated portion to a glass plate using a pressure-sensitive adhesive tape. Then, the sample is heated to 90°C from the glass plate side. Then, the glass plate is immovably fixed, and the separating portion is pulled at a tensile speed of 200 mm/min in the 180° direction with a measurement width set to 15 mm The strength during this pulling is measured, and this strength is defined as the interlaminar strength in the 180° direction at 90°C of the interface to be assayed. The separating portion refers to a portion having a smaller thickness in the shrink label after the separation, and the separated portion refers to a portion having a larger thickness after the separation.

In the present specification, the "main component" refers to the most abundant material (component) among the materials (components) contained in each layer. A layer in which not less than two most abundant resins are present among resins contained in the layer (mixed resin layer) corresponds to any of layers containing these not less than two resins as the main component, as a rule. For example, a mixed resin layer containing 50% by weight of a polyester resin and 50% by weight of a polystyrene resin is a layer containing the polyester resin as a main component and is also a layer containing the polystyrene resin as a main component. However, when the mixed resin layer is adjacent to a layer containing, as a main component, one resin that is a main component in the mixed resin layer, this mixed resin layer corresponds to a layer containing a resin other than the one resin as a main component. For example, when a mixed resin layer containing 50% by weight of a polyester resin and 50% by weight of a polystyrene resin lis adjacent to a layer containing the polyester resin as a main component, the mixed resin layer is a layer containing the polystyrene resin as a main component.

When the interface [P/Q] is present in the shrink film of the present invention, the interlaminar strength in the 180° direction at ordinary temperature of the interface [P/Q] is not particularly limited, but is preferably less than 1 N, more preferably not more than 0.9 N, further preferably not more than 0.8 N. The lower limit of the interlaminar strength in the 180° direction at ordinary temperature is not particularly limited, but is preferably more than 0 N, more preferably not less than 0.1 N, further preferably not less than 0.2 N. If the interlaminar strength in the 180° direction at ordinary temperature is less than 1 N, the interlaminar strength at ordinary temperature of the interface [P/Q] is not too strong, and the shrink film is softened so that the tearability of the label is improved. When a plurality of interfaces [P/Q] are present in the shrink film of the present invention, the interlaminar strength in the 180° direction at ordinary temperature is more than 0 N and less than 1 N at all of the interfaces [P/Q]. When a plurality of identical interfaces [P/Q] are present in the shrink film, the interlaminar strength in the 180° direction at ordinary temperature may be regarded as being the same among the identical interfaces [P/Q].

In the present specification, the interlaminar strength in the 180° direction at ordinary temperature of the interface is not particularly limited, but can be determined, for example, by measuring the interlaminar strength in the 180° direction at ordinary temperature in accordance with JIS K 6854-2. Specifically, the interlaminar strength in the 180° direction at ordinary temperature can be measured by a method described below.

(Method for measuring interlaminar strength in 180° direction at ordinary temperature of interface)

The shrink label (or the shrink film) is partially separated at the interface to be assayed from the end face in the main orientation direction to prepare a sample having a separating-side portion (separating portion) and the remaining portion after the separation (separated portion). This sample is fixed through the separated portion to a glass plate using a pressure-sensitive adhesive tape. Then, in an environment having ordinary temperature (23°C), the glass plate is immovably fixed, and the separating portion is pulled at a tensile speed of 200 mm/min in the 180° direction with a measurement width set to 15 mm. The strength during this pulling is measured, and this strength is defined as the interlaminar strength in the 180° direction at ordinary temperature of the interface to be assayed. The separating portion refers to a portion having a smaller thickness in the shrink label after the separation, and the separated portion refers to a portion having a larger thickness after the separation.

The interlaminar strength in the 180° direction at ordinary temperature and the interlaminar strength in the 180° direction at 90°C can be adjusted by, for example, the composition of raw materials, the physical properties of the raw materials constituting the resin layer (P) or the resin layer (Q), or film production conditions (e.g., extrusion temperature, stretching temperature, and stretch ratio).

The shrinkage stress at 90°C of the shrink film of the present invention is not particularly limited, but is preferably 1 to 10 N, more preferably 1 to 7 N, further preferably 1 to 5 N, particularly preferably 1 to 3 N. The shrinkage stress of not less than 1 N is preferred because the resulting shrink label has the improved property of conformability to a container or the like. The shrinkage stress can be adjusted by, for example, the thickness, layer structure, or raw material composition of the shrink film, the composition of raw materials constituting the surface layers or the layers in the base layer part (layer A and layer E), or their thicknesses. In the present specification, the shrinkage stress was measured with a measurement width set to 15 mm.

The shrinkage stress at 90°C of the shrink film of the present invention is preferably smaller than the interlaminar strength in the 180° direction at 90°C of the interface [P/Q]. This case is preferred because delamination can be further prevented even during the shrinking process. When a plurality of interfaces [P/Q] are present in the base layer part, the shrinkage stress at 90°C of the shrink film of the present invention is preferably smaller than the interlaminar strength in the 180° direction at 90°C at all of the interfaces [P/Q].

The shrinkage stress at 90°C of the shrink film of the present invention is not particularly limited, but can be determined, for example, by fixing both ends of the shrink film without the slack of the shrink film, dipping the shrink film in hot water of 90°C, and measuring the stress to thermally shrink the shrink film. Examples of a measuring instrument for use in the measurement of the shrinkage stress include "Shimadzu Autograph (AGS-50G: load cell type 500N)" manufactured by Shimadzu Corp.

In the shrink film of the present invention, the interface [P/Q] may be, for example, an interface formed by each outermost layer of the base layer part and the surface layer adjacent to each other, an interface formed by the layer A and the layer E adjacent to each other, or an interface formed by two layers E differing in raw material composition (layer E1 and layer E2) adjacent to each other. In this case, examples of the resin layer (P) and the resin layer (Q) include each outermost layer of the base layer part and the surface layer (particularly, the layer A or the layer E serving as the outermost layer of the base layer part and the surface layer), the layer A and the layer E, and two layers E differing in raw material composition (layer E1 and layer E2).

In the shrink film of the present invention, it is preferred, without particular limitations, that not less than 3, more preferably not less than 4, further preferably not less than 5, particularly preferably not less than 8, of the interfaces formed by the layers adjacent to each other in the base layer part should be interfaces having T-peel strength lower than that between the surface layers and the base layer part (interfaces (L)). In the present specification, of the interfaces formed by the layers adjacent to each other in the base layer part, the interfaces having T-peel strength lower than that between the surface layers and the base layer part are also referred to as "interfaces (L)". The T-peel strength can be measured, for example, by a T-peel test in accordance with JIS K 6854-3. When a plurality of identical interfaces are present in the base layer part, the T-peel strength may be regarded as being the same among all of the identical interfaces.

The upper limit of the number of interfaces (L) is not particularly limited as long as the number of interfaces (L) is not more than the number of interfaces formed by the layers adjacent to each other in the base layer part. Among others, it is particularly preferred that all of the interfaces formed by the layers adjacent to each other in the base layer part should be the interfaces (L). Since the interfaces (L) have relatively weak T-peel strength in the shrink film of the present invention, the base layer part comprising not less than 3 interfaces (L) is preferred because the tearability of the label is improved, stress attributed by drop impact is spread to these interfaces and thereby relieved when the shrink film is dropped, and drop resistance is also improved. Since the base layer part comprises multiple layers, the label is less likely to be delaminated even if the interfaces formed by the layers adjacent to each other in the base layer part have relatively weak T-peel strength.

The T-peel strength of the interfaces (L) is ndt particularly limited, but is preferably 0.1 to 1.5 N, more preferably 0.1 to 1.0 N, further preferably 0.2 to 0.8 N. The T-peel strength of not less than 0.1 N (particularly, not less than 0:2 N) is preferred because delamination within the base layer part can be suppressed. The T-peel strength of not more than 1.5 N (particularly, not more than 1.0 N) is preferred because the spreadability of the stress on the label is improved so that the label has much better drop resistance. In the present specification, the T-peel strength was measured with a measurement width set to 15 mm.

The T-peel strength between the surface layers and the base layer part is not particularly limited, but is preferably more than 0.8 N, more preferably more than 0.9 N, further preferably more than 1 N. The upper limit of the T-peel strength is not particularly limited, but is preferably not more than 10 N, more preferably not more than 8 N. The T-peel strength of more than 0.8 N is preferred because the delamination between the surface layers and the base layer part can be suppressed.

In the shrink film of the present invention, the interfaces (L) are not particularly limited, but may be the interfaces [P/Q] present in the base layer part. Specifically, the base layer part preferably complrises the interfaces [P/Q], not less than 3 of which are the interfaces (L). Particularly, all of the interfaces [P/Q] in the base layer part are preferably the interfaces (L).

The shrink film of the present invention is preferably a film oriented at least in the uniaxial direction (e.g., uniaxially, biaxially, or multiaxially oriented film) from the viewpoint of exerting shrinkage properties. Furthermore, all of the film layers (surface layers and each layer in the base layer part including the layer A) are preferably films oriented at least in the uniaxial direction. Particularly, a film oriented in the uniaxial direction (uniaxially oriented film) or a film oriented in the biaxial direction (biaxially oriented film) is often used as the shrink film, and among them, a uniaxially oriented film (substantially uniaxially stretched film) is generally used as the shrink label. Particularly, a film uniaxially oriented in the width direction is preferred.

The film oriented at least in the uniaxial direction is obtained by stretching an unstretched film at least in the uniaxial direction. When the film oriented at least in the uniaxial direction is, for example, a uniaxially oriented film, this film is obtained by stretching an unstretched film in the uniaxial direction. When the film oriented at least in the uniaxial direction is a biaxially oriented film, this film is obtained by stretching an unstretched film in the biaxial direction (e.g., a uniaxial direction and a direction orthogonal to the uniaxial direction). The shrink label of the present invention can be thermally shrunk mainly in the orientation direction of the shrink film of the present invention.

The thermal shrinkage percentage at 90°C for 10 seconds (hot water treatment) (also referred to as "thermal shrinkage percentage (90°C, 10 sec)") in the main orientation direction of the shrink film of the present invention (before the shrinking process) is not particularly limited, but is preferably not less than 45% (e.g., 45 to 80%), more preferably not less than 60% (e.g., 60 to 80%). If the thermal shrinkage percentage (90°C, 10 sec) is less than 45%, the shrink label may rarely conform to the shape of a container due to insufficient shrinkage in the shrinking process step of allowing the shrink label to adhere to the container by heat, resulting in poor finish, particularly, for a container having a complicated shape.

The thermal shrinkage percentage (90°C, 10 sec) in a direction orthogonal to the main orientation direction of the shrink film of the present invention (before the shrinking process) is not particularly limited, but is preferably -5 to 10%.

When the shrink film of the present invention is transparent, the haze value [in accordance with JIS K 7136, based on the thickness of 40 $\mu$m, unit: %] of the shrink film is not particularly limited, but is preferably not more than 10%, more preferably not more than 7%, further preferably not more than 5%. If the haze value is more than 10%, in the case of conducting printing on the inside (surface that becomes the container side when the shrink label is applied to a container) of the shrink film to prepare a shrink label that displays the print through the shrink film (back printed shrink label), the resulting product may have cloudy print and low decorativeness. However, even if the haze value is more than 10%, the shrink film may be opaque and sufficiently usable for purposes other than the aforementioned purpose of displaying the print through the shrink film (front printed shrink label).

[Shrink label]

The shrink label of the present invention is a shrink label comprising at least the shrink film of the present invention. The shrink label of the present invention may comprise a layer other than the shrink film of the present invention.

(Layer other than shrink film of present invention)

Examples of the layer other than the shrink film of the present invention comprised in the shrink label of the present invention include print layers (including solvent drying-type print layers), other film layers such as nonwoven fabrics and foamed sheets, adhesive layers (pressure-sensitive adhesive layers, heat-sensitive adhesive layers, etc.), protective layers, anchor coat layers, primer coat layers, coating layers, antistatic layers, and vapor-deposited layers of aluminum.

(Print layer)

Examples of the print layers include publicly known or common print layers for use in shrink labels. Other examples of the print layers include designed print layers (color print layers, etc.) for stretchings or designs such as trade names, illustrations, or precautions in handling, background print layers formed in single color such as white color, protective print layers disposed for protecting films or print layers, and primer print layers disposed for enhancing the adhesion between films and print layers. Such a print layer is not particularly limited, but may be disposed only on one side of the shrink film of the present invention or may be disposed on both sides of the shrink film of the present invention. Alternatively, the print layer may be disposed throughout the surface (surface on the side where the print layer is to be disposed) of the shrink film of the present invention, or may be disposed on a portion of this surface. The print layer is not particularly limited, but may be a single layer or may be multiple layers.

The print layer is not particularly limited, but preferably contains a binder resin as an essential component. The print layer may further contain optional additives such as color pigments (e.g., blue, red, yellow, black, and white pigments), a lubricant, a dispersant, and an antifoaming agent. Only one of these binder resins or the like may be used, or not less than two of them may be used.

The binder resin is not particularly limited, and, for example, a publicly known or common resin for use as a binder resin in print layers or printing ink can be used. Examples of the binder resin include acrylic resins, urethane resins, polyester resins, polyamide resins, cellulose resins (including nitrocellulose resins), and vinyl chloride-vinyl acetate copolymer resins. The color pigments are not particularly limited, and, for example, publicly known or common color pigments for use in print layers or printing ink can be used. The color pigments can be selected for use according to purposes from, for example, white pigments such as titanium oxide (titanium dioxide), indigo pigments such as copper phthalocyanine blue, carbon black, aluminum flakes, mica, and other color pigments. In addition, an extender pigment such as alumina, calcium carbonate, barium sulfate, silica, or acrylic beads can also be used as the aforementioned color pigment for the purpose of adjusting gloss.

The thickness of the print layer is not particularly limited, but is preferably, for example, 0.1 to 10 $\mu$m, more preferably 0.3 to 5 $\mu$m. If the thickness is less than 0.1 $\mu$m, the print layer may be difficult to dispose uniformly, decorativeness may be impaired due to partial "blur", or printing may be difficult to conduct as defined by design. If the thickness is more than 10 $\mu$m, cost may be increased due to the large consumption of printing ink, printing ink may be difficult to apply uniformly, the print layer may become fragile and thereby easily separated, or the print layer may be less likely to follow the thermal shrinkage of the shrink film during the shrinking process.

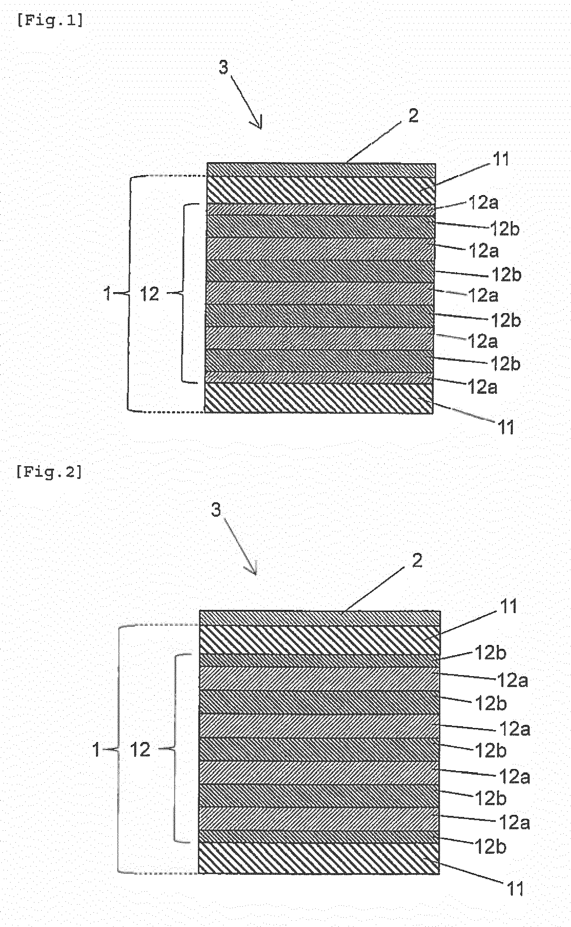

Each of Figures 1 to 3 is a schematic diagram (partial cross-sectional view) showing one example of the shrink label of the present invention. A shrink label of the present invention 3 described in Figure 1 comprises a shrink film of the present invention 1 and a print layer 2 disposed on one side of the shrink film of the present invention 1. The shrink film of the present invention 1 comprises a base layer part 12 and surface layers 11 disposed one by one on both sides of the base layer part 12. The base layer part 12 comprises a layer A 12a as each of its outermost layers (layers contacted with the surface layers 11) and is formed by laminating a total of 9 alternate layers of the layer A 12a and a layer F 12b. In the base layer part 12, the number of interfaces formed by the layer A 12a and the layer F 12b adjacent to each other (laminated directly) is 8. The surface layers 11 and the base layer part 12 are laminated directly without the mediation of other layers. Specifically, the surface layers 11 and the layer A 12a serving as each outermost layer of the base layer part 12 are laminated directly without the mediation of other layers.

A shrink label of the present invention 3 described in Figure 2 comprises a shrink film of the present invention 1 and a print layer 2 disposed on one side of the shrink film of the present invention 1. The shrink film of the present invention 1 comprises a base layer part 12 and surface layers 11 disposed one by one on both sides of the base layer part 12. The shrink label of the present invention 3 described in Figure 2 is a shrink label comprising the base layer part 12 with the positional relationship between a layer A 12a and a layer F 12b opposite to the relationship of Figure 1. Specifically, the base layer part 12 comprises the layer F 12b as each of its outermost layers (layers contacted with the surface layers 11) and is formed by laminating a total of 9 alternate layers of the layer A 12a and the layer F 12b. In the base layer part 12, the number of interfaces formed by the layer A 12a and the layer F 12b adjacent to each other (laminated directly) is 8. The surface layers 11 and the base layer part 12 are laminated directly without the mediation of other layers. Specifically, the surface layers 11 and the layer F 12b serving as each outermost layer of the base layer part 12 are laminated directly without the mediation of other layers.

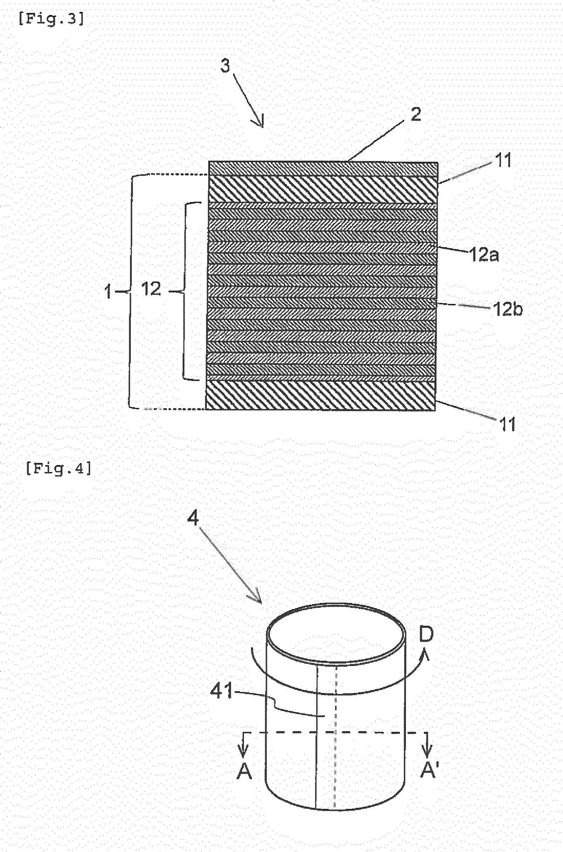

A shrink label of the present invention 3 described in Figure 3 comprises a shrink film of the present invention 1 and a print layer 2 disposed on one side thereof, and the shrink film of the present invention 1 comprises surface layers 11 and a base layer part 12 which comprises a layer A 12a as each of its outermost layers (layers contacted with the surface layers 11) and is formed by laminating a total of 17 alternate layers of the layer A 12a and a layer F 12b. In the base layer part 12, the number of interfaces formed by the layer A 12a and the layer F 12b adjacent to each other (laminated directly) is 16. In Figure 3 as well, the surface layers 11 and the base layer part 12 are laminated directly without the mediation of other layers, and the surface layers 11 and the layer A 12a serving as each outermost layer of the base layer part 12 are laminated directly without the mediation of other layers. In the shrink label of the present invention 3 described in Figure 3, the positional relationship between the layer A 12a and the layer F 12b may be opposite to that presented.

The thickness (overall thickness) of the shrink label of the present invention is not particularly limited, but is preferably 10 to 110 $\mu$m, more preferably 15 to 60 $\mu$m, further preferably 20 to 50 $\mu$m. The thickness of not less than 10 $\mu$m is preferred because the resulting label has higher compressive strength, higher stiffness, and stronger hardness. It is also preferred because the resulting label has strength necessary for mechanical application and has higher drop resistance. The thickness of not more than 110 $\mu$m is preferred because the resulting label has much better tearability.

The shrink label of the present invention can be I used as, for example, a shrink sleeve label which is a label of type that is prepared in a cylindrical (tubular) form by sealing both ends thereof with a solvent or an adhesive and applied to a container, or a roll-on shrink sleeve label which is a label that is affixed at one end to a container, then wound around the container, and prepared in a tubular form by overlaying the one end with the other end. Among them, the shrink film of the present invention is particularly preferably used as a shrink sleeve label from the viewpoint of high stiffness. Specifically, the shrink label of the present invention is preferably a shrink sleeve label.

The shrink sleeve label is preferably a shrink sleeve label which is a shrink label prepared in a tubular form such that a background print layer is placed on the inside, the shrink label comprising the background print layer, a designed print layer, and the shrink film of the present invention in this order and further having a seam formed by overlaying both end portions (both ends) of the shrink label (hereinafter, also referred to as the "shrink sleeve label of the present invention"). In the shrink sleeve label of the present invention, it is preferred that the shrink film of the present invention should be oriented at least in the circumferential direction of the shrink sleeve label (i.e., constituted in a tubular form such that the main orientation direction of the shrink film of the present invention is the circumferential direction). It is also preferred that the seam should be fixed with a solvent or an adhesive. In the shrink sleeve label of the present invention, the seam is preferably formed by fixing between the shrink film of the present invention with a solvent or an adhesive from the viewpoint of the adhesiveness of the seam. For forming the seam by fixing between the shrink film of the present invention, a portion to be formed the seam with the solvent or the adhesive (one end portion of the shrink label) preferably lacks the background print layer and the designed print layer. Particularly, the shrink sleeve label of the present invention preferably has a seam at which the portions at the site lacking the background print layer and the designed print layer in the shrink film of the present invention are bonded with the solvent. Unjoined portions in both end portions mentioned above may have the background print layer or the designed print layer because print layers or the like carried by these portions have no influence on adhesiveness.

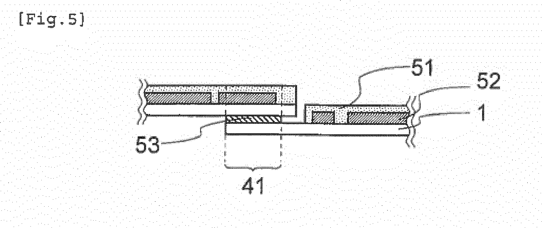

Each of Figures 4 and 5 is a schematic diagram showing one example of the shrink sleeve label, which is one embodiment of the shrink label of the present invention. For a shrink sleeve label of the present invention 4 described in Figure 4, the outside of one end portion of the shrink label of the present invention in a rectangular form is overlaid with the other end portion to prepare a tubular form, and the inner surface of the other end portion and the outer surface of the one end portion are joined together with a solvent or an adhesive to form a seam 41. The shrink sleeve label of the present invention comprises the shrink film of the present invention, and the shrink film of the present invention is oriented at least in a circumferential direction D of the shrink sleeve label of the present invention and can be thermally shrunk in this direction. The shrink sleeve label of the present invention is preferably applied such that the circumferential direction is the main orientation direction.

Figure 5 is an enlarged sectional view of the seam and its neighborhood taken along the A-A' line of Figure 4, wherein at the seam 41, both end portions of the shrink label are joined together with a solvent or adhesive 53. Specifically, a designed print layer 52 and a background print layer 51 are laminated in this order on one surface (surface on the inner surface side of the tubular form) of the shrink film of the present invention 1 in the shrink label of the present invention 3, except for a region with a predetermined width from the edge of the other end portion of this surface. The region with a predetermined width from the edge of the other end portion of the shrink label of the present invention 3 lacks the background print layer 51 and the designed print layer 52 so that the shrink film of the present invention 1 is exposed to form a film-exposed surface, and at the seam 41, the film-exposed surface formed on the inner surface side of the other end portion of the shrink label of the present invention 3 and the outer surface (film-exposed surface) of the one end portion are joined together with the solvent or adhesive 53. Specifically, the portions at the seam 41 of the shrink film of the present invention 1 are preferably joined together with the solvent or adhesive 53. Unjoined portions in both end portions mentioned above may have print layers (e.g., the background print layer or the designed print layer) or the like because the print layers or the like carried by these portions have no influence on adhesiveness.

Examples of the designed print layer include layers displaying trade names, illustrations, precautions in handling, or the like. For example, any of the aforementioned print layers can be used as the designed print layer without particular limitations. More specifically, the designed print layer is composed of a plurality of print layers differing in color pigment so as to have a desired design. The thickness of the designed print layer is not particularly limited, but is preferably 0.1 to 8 $\mu$m.

The background print layer is a print layer that serves as the background of the designed print layer when the shrink sleeve label of the present invention is observed from the outside of the tube. For example, any of the aforementioned print layers can be used as the background print layer without particular limitations. Among others, a background print layer such as a white print layer containing 20 to 60% by weight of titanium oxide as a color pigment is preferred from the viewpoint of serving as the background of the designed print layer. The thickness of the background print layer is not particularly limited, but is preferably 0.5 to 10 $\mu$m.

The width of the seam is not particularly limited, but is preferably 1 to 10 mm, more preferably 2 to 4 mm.

[Method for producing shrink label of present invention]

The method for producing the shrink label of the present invention comprises at least a step of preparing the shrink film of the present invention. In the present specification, the "step of preparing the shrink film of the present invention" is also referred to as a "film preparation step". The method for producing the shrink label of the present invention may further comprise an additional step such as a step of forming a layer other than the shrink film of the present invention (step other than the film preparation step).

(Film preparation step)

In the film preparation step, the shrink film of the present invention can be prepared by a common method such as melt film formation. Among others, a melt film formation method (particularly, a T-die method) is preferred. Also, a common method, for example, a coextrusion method (feed block method, multi-manifold method, etc.) or a dry lamination method can be used as a lamination method. Among them, a coextrusion method is preferred, and a feed block method is preferred. In addition, the base layer part is preferably subjected to layer multiplication using a layer multiplier, particularly, a feed block and a layer multiplier in combination. The layer multiplier is a layer multiplication apparatus for film layers. Examples of the layer multiplication method for film layers using the layer multiplier include, a method which involves splitting the film layers in the width direction and then laminating the split film layers in the thickness direction. In the present specification, the "layer multiplier" is also simply referred to as a "multiplier". The multiplier is available from, for example, Environmental Dynamics International (EDI) or Cloeren Inc.

A specific example of the coextrusion method (feed block method) will be described below. For example, raw materials for forming the base layer part and raw materials for forming surface layers are added to a plurality of extruders each set to a predetermined temperature, and coextruded from T-dies. In this operation, a predetermined laminate structure is preferably prepared by the layer multiplication of the base layer part using a feed block and a multiplier in combination. If necessary, the amounts of the raw materials supplied may be adjusted using a gear pump. It is further preferred to remove foreign matter using a filter because film breakage can be reduced. The extrusion temperature differs depending on the types of the raw materials used and is not particularly limited, but is preferably 150 to 250°C. The coextruded polymers can be rapidly cooled using a cooling drum or the like to obtain a laminated unstretched film (sheet).

When the base layer part is formed from the layer A and the layer F (layer containing a thermoplastic resin as an essential component), the film preparation step is not particularly limited, but comprises at least: a first stage of melting (or melt-kneading) a raw material for constituting the layer A (also referred to as a "raw material (a)"), a raw material for constituting the layer F (also referred to as a "raw material (f)"), and a raw material for constituting the surface layers (also referred to as a "raw material (c)"), respectively; a second stage of laminating the raw material (a) and the raw material (f) melted (or melt-kneaded) at the first stage, followed by further layer multiplication to form a laminate; and a third stage of laminating the raw material (c) melted at the first stage on both sides of the laminate formed in the second stage. The film preparation step may further comprise an additional stage (stage other than the first stage, the second stage, and the third stage). The additional stage may be carried out at any timing, for example, before the first stage, after the third stage, between the first stage and the second stage, or between the second stage and the third stage.

At the first stage, it is preferred to melt (or melt-knead) the raw material (a), the raw material (f), and the raw material (c) using publicly known or common extruders respectively. For example, the raw material (a), the raw material (f), and the raw material (c) can be added to 3 extruders each set to a predetermined temperature, for melting (or melt-kneading) respectively. The extrusion temperature is not particularly limited, but is preferably 150 to 250°C.

The laminate obtained at the second stage of laminating the raw material (a) and the raw material (f) melted at the first stage, followed by further layer multiplication is not particularly limited, but may be a laminate formed, for example, by sequentially laminating the melted raw material (a) and raw material (f) or simultaneously laminating (coextruding) these raw materials using a feed block, followed by further layer multiplication using a multiplier. The laminate is not particularly limited, but is preferably formed using a feed block and a multiplier in combination. Only one feed block or multiplier may be used, or not less than two feed blocks or multipliers may be used. In the laminate, the number of layers formed from the raw material (a) and the number of layers formed from the raw material (f) are preferably 5 to 65 layers, more preferably 5 to 33 layers, further preferably 9 to 33 layers, in total. The laminate obtained at the second stage forms the base layer part in the shrink film of the present invention.

The laminate obtained at the second stage of laminating the raw material (a) and the raw material (f), followed by further layer multiplication can specifically be obtained, for example, by extruding the raw material (a) and the raw material (f) melted at the first stage using a feed block to prepare a laminate having a structure [raw material (a)/raw material (f)/raw material (a)] (also referred to as "laminate 1"), and subsequently laminating the laminate 1 as one unit using a multiplier to obtain a laminate having a structure [raw material (a)/raw material (f)/raw material (a)/raw material (a)/raw material (f)/raw material (a)/ .... /raw material (a)/raw material (f)/raw material (a)] (also referred to as "laminate 2").

Alternatively, the laminate obtained at the second stage of laminating the raw material (a) and the raw material (f), followed by further layer multiplication may specifically be obtained, for example, by extruding the raw material (a) and the raw material (f) melted at the first stage using a feed block to prepare a laminate having a structure [raw material (f)/raw material (a)/raw material (f)] (also referred to as "laminate 3"), and subsequently laminating the laminate 3 as one unit using a multiplier to obtain a laminate having a structure [raw material (f)/raw material (a)/raw material (f)/raw material (f)/raw material (a)/raw material (f)/ .... /raw material (f)/raw material (a)/raw material (f)] (also referred to as "laminate 4").

Alternatively, the laminate obtained at the second stage of laminating the raw material (a) and the raw material (f), followed by further layer multiplication can specifically be obtained, for example, by extruding the raw material (a) and the raw material (f) melted at the first stage using a feed block to prepare a laminate having a structure [raw material (a)/raw material (f)] (also referred to as "laminate 5"), and subsequently laminating the laminate 5 as one unit using a multiplier to obtain a laminate having a structure [raw material (a)/raw material (f)/raw material (a)/raw material (f)/ .... /raw material (a)/raw material (f)] (also referred to as "laminate 6"). The laminate 6 is also a laminate having a structure [raw material (f)/raw material (a)/raw material (f)/raw material (a)/ .... /raw material (f)/raw material (a)] viewed from the opposite side.

At the third stage, it is preferred to use a feed block for laminating the raw material (c) melted at the first stage on both sides of the laminate formed at the second stage (e.g., the laminate 2, 4, or 6). The laminated raw material (c) forms the surface layers in the shrink film of the present invention. The third stage yields a multilayer structure in which the raw material (c) melted at the first stage is laminated on both sides of the laminate formed at the second stage.

Without particular limitations, such laminates formed through the first stage, the second stage, and the third stage can be coextruded from T-dies and rapidly cooled using a cooling drum or the like to prepare a laminated unstretched film (sheet).

The laminate 2 having a structure [raw material (a)/raw material (f)/raw material (a)/raw material (a)/raw material (f)/raw material (a)/ .... /raw material (a)/raw material (f)/raw material (a)] is supposed to form a base layer part having a structure [layer A/layer F/layer A/layer A/layer F/layer A/ .... /layer A/layer F/layer A] and however, in actuality, forms a base layer part having a structure [layer A/layer F/layer A/layer F/ .... /layer A/layer F/layer A] because the portion [layer A/layer A] formed from the same materials [raw material (a)/raw material (a)] laminated in the laminate 2 serves as one layer A due to the invisible interface. Likewise, the base layer part derived from the laminate 4 is supposed to be a base layer part having a structure [layer F/layer A/layer F/layer F/layer A/layer F/ .... /layer F/layer A/layer F] and however, in actuality, is a base layer part having a structure [layer F/layer A/layer F/layer A/ .... /layer F/layer A/layer F] because the portion [layer F/layer F] formed from the same materials [raw material (f)/raw material (f)] laminated in the laminate 4 serves as one layer F due to the invisible interface. When a laminate [layer A1/layer A2] formed by laminating raw materials for forming two different layers A (layer A1 and layer A2) is present in the base layer part, the portion [layer A1/layer A2] does not serve as one layer A because its interface is visible. When the surface layers and the outermost layers (resin layers) of the base layer part are layers made of the same resin compositions as raw materials, the interfaces between the surface layers and the outermost layers are invisible so that each surface layer and each outermost layer of the base layer part serve as one layer (surface layer).

Examples of the additional stage include a stage of carrying out stretching, and a stage of carrying out a surface treatment. For example, the laminated unstretched film prepared at the third stage is then further subjected to a stage of carrying out stretching.

The stage of carrying out stretching (stretching stage) can employ biaxial stretching in the longitudinal direction (direction of a film production line; also referred to as a MD direction) and the width direction (direction orthogonal to the longitudinal direction; also referred to as a TD direction), uniaxial stretching in the longitudinal direction or the width direction, etc. Any of a roll system, a tenter system, and a tube system may be used as a stretching system. In the case of biaxial stretching, the film may be simultaneously biaxially stretched or may be successively biaxially stretched. More specifically, for example, the film is stretched at a stretch ratio of 1.05 to 1.50 times at a stretching temperature of 65 to 100°C in the longitudinal direction using a roll system and then stretched at a stretch ratio of 3 to 8 times (preferably 4 to 7 times) at a stretching temperature of 70 to 100°C in the width direction using a tenter system.

Examples of the stage of carrying out a surface treatment include a stage of subjecting the surface of the shrink film of the present invention to a common surface treatment such as corona discharge treatment, primer treatment, or frame treatment.

Although the film preparation step is shown above as an example in which three raw materials are melted and used, the film preparation step is not limited to this example and may comprise a first stage of melting two raw materials (e.g., the raw material (a) and the raw material (f)), and a second stage of adjacently laminating these two raw materials (e.g., the raw material (a) and the raw material (f)) melted at the first stage to form a laminate. In this case, the third stage is absent, and the outermost layers of the laminate formed in the second stage serve as surface layers.

(Additional step)

The method for producing the shrink label of the present invention is not particularly limited, but may comprise a step of providing a print layer, a step of providing a protective layer, etc., as a step other than the film preparation step (additional step).

In the step of providing a print layer, a printing stage of coating at least one surface of the shrink film of the present invention with printing ink, which is then solidified by drying or the like is carried out once or plural times to form a print layer. For example, a designed print layer can be formed by carrying out the printing stage once or plural times, and then, a background print layer can be formed by carrying out the printing stage once or plural times. The step of providing a print layer can employ a well-known common printing method, and, among others, a gravure printing method or a flexographic printing method is preferred.

The printing ink is produced, for example, by mixing the aforementioned binder resin, the aforementioned color pigment, a solvent, and other additives, etc., according to the need. The mixing can be carried out by a publicly known or common mixing method, and a mixing apparatus, for example, a mixer such as a paint shaker, a butterfly mixer, a planetary mixer, a pony mixer, a dissolver, a tank mixer, a homomixer, or a homodisper, a mill such as a roll mill, a sand mill, a ball mill, a bead mill, or a line mill, or a kneader is used without particular limitations. The mixing time (residence time) for the mixing is not particularly limited, but is preferably 10 to 120 minutes. The obtained printing ink may be used, if necessary, after being filtered. Only one type may be used as each of the components (binder resin, color pigment, solvent, and other additives), or not less than two types may be used.

An organic solvent or the like usually used in printing ink can be used as the aforementioned solvent. Examples of the solvent include: esters such as acetic acid esters (ethyl acetate, propyl acetate, butyl acetate, etc.); alcohols such as methanol, ethanol, isopropyl alcohol, propanol, and butanol; ketones such as methyl ethyl ketone and methyl isobutyl ketone; aromatic hydrocarbons such as toluene and xylene; aliphatic hydrocarbons such as hexane and octane; alicyclic hydrocarbons such as cyclohexane and methylcyclohexane; glycols such as ethylene glycol and propylene glycol; glycol ethers such as ethylene glycol monopropyl ether, propylene glycol monomethyl ether, and propylene glycol monobutyl ether; and glycol ether esters such as propylene glycol monomethyl ether acetate. The solvent can be removed by drying after the coating of the shrink film of the present invention with the printing ink. The solvent also encompasses the meaning of a "dispersion medium".

(Method for producing shrink sleeve label)

The method for producing the shrink sleeve label of the present invention is not particularly limited, but is, for example, as described below. The shrink film of the present invention in a long form is optionally provided with a print layer or the like and then slit into a predetermined width to obtain a long object of labels comprising a series of a plurality of the shrink labels of the present invention in the longer direction (longitudinal direction). This long object of labels is prepared in a tubular form by overlaying the outside of one end portion with the other end portion such that the main orientation direction (i.e., the main orientation direction of the shrink film of the present invention) is the circumferential direction. Both of the end portions can be joined together by zonally sealing the overlaid portions at a predetermined width to obtain a long cylindrical label continuum (long shrink sleeve label). This long shrink sleeve label can be cut in the width direction such that the longitudinal direction has a predetermined length to obtain one shrink sleeve label having a predetermined length in the height direction (the shrink sleeve label of the present invention).

In the case of perforating the shrink sleeve label for label removal, perforation having a predetermined length and pitch is formed in the vertical direction (direction orthogonal to the circumferential direction). The perforation can be provided by a common method (e.g., a method of placing a cutter in a disc shape with cutting edges and non-cutting edges successively formed around the circumference, or a method using laser). The perforation step can be carried out at an appropriately selected timing, for example, after the step of providing a print layer or before or after the step of processing the label in a tubular form.

[Labeled container]

The shrink label of the present invention is not particularly limited, but is applied to a container (e.g., a container for drinks) for use as a labeled container. The shrink label of the present invention may be used for an object other than the container. For example, the shrink label (particularly, the shrink sleeve label) of the present invention is placed around a container such that the shrink label of the present invention is in a tubular form, and then applied to the container by thermal shrinkage to obtain a labeled container (labeled container comprising the shrink label of the present invention). The container includes, for example, bottles for soft drinks such as PET bottles, milk bottles for home delivery, containers for foods such as seasonings, bottles for alcohol drinks, pharmaceutical containers, containers for chemical products such as detergents or sprays, containers for toiletries, and pot noodle containers. Examples of the shape of the container include various shapes such as bottle types such as cylindrical and rectangular shapes, and cup types. Examples of the material for the container include plastics such as PET, glass, and metals.

The labeled container can be prepared, for example, by fitting the shrink sleeve label over a predetermined container and then thermally shrinking the shrink sleeve label by heat treatment so that the shrink sleeve label conforms and adheres to the container (shrinking process). Examples of a method for the heat treatment include a method of passing through a hot air tunnel or a steam tunnel, and a method of heating with radiation heat such as infrared rays. Particularly, a method of treatment with steam of 80 to 100°C (passing through a heating tunnel filled with steam) is preferred. Alternatively, dry steam of 101 to 140°C may be used. The heat treatment is not particularly limited, but is preferably carried out in a temperature range where the temperature of the shrink film is 85 to 100°C (particularly, 90 to 97°C). The shrink film of the present invention can be heat-treated, particularly, at a high temperature and as such, can be used for a container requiring high shrinkability. The treatment time of the heat treatment is preferably 4 to 20 seconds from the viewpoint of productivity and economy.

Particularly preferred specific aspects of the shrink label of the present invention will be described below. The description about the specific aspects is given with emphasis on portions different from the above description, and the other portions can be referred to the above description. The shrink label of the present invention may be constituted by the combination of the following specific aspects (1) to (7) without impairing the effects of the present invention.

<Specific aspect (1)>

The specific aspect (1) illustrates the shrink label of the present specification which is a shrink label comprising a shrink film, wherein the shrink film comprises the surface layers laminated one by one directly on both sides of the base layer part, the base layer part comprises a total of 5 to 65 alternate layers of the layer A and an adhesive resin layer as the layers, and each outermost layer of the base layer part is the adhesive resin layer.

The shrink label of the present specification according to the specific aspect (1) has an adequate shrinkage rate even after thinning, is excellent in stiffness, and is insusceptible to creases and delamination, by virtue of the aforementioned specific constitution.

(Base layer part according to specific aspect (1))

In the specific aspect (1), the base layer part in the shrink film of the present specification comprises a total of 5 to 65 alternate layers of an adhesive resin layer and a layer comprising a polystyrene resin content of not less than 50% by weight (layer A). Each outermost layer of the base layer part is the adhesive resin layer. By virtue of this base layer part, the shrink film of the present specification according to the specific aspect (1) has an adequate shrinkage rate even after thinning. The resulting shrink label is insusceptible to creases and delamination after application. In addition, the shrink label of the present specification according to the specific aspect (1) can have a high level of stiffness.

In the specific aspect (1), the base layer part is laminated directly with the surface layers. The base layer part comprises a multilayer laminate structure in which a total of 5 to 65 alternate layers of the layer A and the adhesive resin layer are laminated. Of a plurality of adhesive resin layers in the shrink film of the present specification according to the specific aspect (1), all layers or some layers may be the same layers or may be layers different from each other (layers differing in resin composition constituting each layer or in layer thickness). The outermost layers of the base layer part are the adhesive resin layers. Specifically, two outermost layers of the base layer part are the adhesive resin layers, one of which is laminated as an outermost layer directly with one of the surface layers and the other adhesive resin layer of which is laminated as another outermost layer directly with the other surface layer.

(Adhesive resin layer according to specific aspect (1))

The adhesive resin layer is a layer in the base layer part and is an adhesive layer containing an adhesive resin for conferring the adhesiveness between the surface layers and the base layer part. The adhesive resin layer comprised as each outermost layer in the base layer part can improve the adhesiveness between the surface layers and the base layer part and prevent delamination. In the base layer part, the adhesive resin layer can intervene between the layers A, thereby optimizing shrinkage rate and increasing the stiffness of the shrink label.

Although the adhesive resin layer is not particularly limited as long as the adhesive resin layer confers the adhesiveness between the surface layers and the base layer part, the adhesive resin layer is preferably, for example, a resin layer containing a polystyrene resin and/or a polyester resin as an essential component.

Examples of the adhesive resin layer include: a resin layer containing a mixed resin of a polystyrene resin and a polyester resin as a main component; a resin layer containing not less than one polystyrene resin as a main component selected from the group consisting of a soft polystyrene resin, a polystyrene resin softer than that contained in the layer A (relatively soft polystyrene resin), and a modified polystyrene resin; and a resin layer containing a soft polyester resin as a main component. Among them, the adhesive resin layer is preferably a resin layer containing a mixed resin of a polystyrene resin and a polyester resin as a main component; or a resin layer containing not less than one polystyrene resin as a main component selected from the group consisting of a soft polystyrene resin, a relatively soft polystyrene resin, and a modified polystyrene resin. When the adhesive resin layer is the resin layer containing a mixed resin of a polystyrene resin and a polyester resin as a main component, the polystyrene resin of the layer A can be bonded to the polystyrene resin of the adhesive resin layer, and the polyester resin of the surface layers can be bonded to the polyester resin of the adhesive resin layer. This is preferred because the adhesiveness between the base layer part and the surface layers is improved.

The adhesive resin layer may be the layer A or may be a layer different from the layer A (layer E). Specifically, when the adhesive resin layer contains not less than 50% by weight of the polystyrene resin with respect to the gross weight (100% by weight) of the adhesive resin layer, this adhesive resin layer corresponds to the layer A. When the adhesive resin layer corresponds to the layer A, two types of layers A are present in the base layer part according to the specific aspect (1), and these two types of layers A are layers A differing in raw material composition from each other (layer A1 and layer A2).

Examples lof the polystyrene resin (polystyrene resin contained as the mixed resin in the adhesive resin layer) include, the polystyrene resins listed and described above as examples of the polystyrene resin contained in the layer A. Only one of these polystyrene resins may be used, or not less than two of them may be used. The polystyrene resin may be the same polystyrene resin as the polystyrene resin contained in the layer A or may be a polystyrene resin different therefrom, but is preferably the same polystyrene resin from the viewpoint of the adhesiveness between the surface layers and the base layer part and the adhesiveness between the layers A. The polystyrene resin is preferably a styrene-diene copolymer or a styrene elastomer (particularly, a styrene-diene copolymer elastomer), more preferably a styrene-butadiene copolymer, further preferably a styrene-butadiene block copolymer, particularly preferably a styrene-butadiene block copolymer having styrene blocks at both ends, most preferably SBS.

When the polystyrene resin (polystyrene resin contained as the mixed resin in the adhesive resin layer) is a styrene-diene copolymer (or SBS), the content of the constitutional unit derived from the styrene monomer in the styrene-diene copolymer is not particularly limited, but is preferably not less than 20% by weight, more preferably not less than 50% by weight, further preferably not less than 55% by weight, particularly preferably not less than 60% by weight, with respect to the gross weight (100% by weight) of the whole styrene-diene copolymer (or SBS) contained in the adhesive resin layer from the viewpoint of shrinkage properties and stiffness. The upper limit of the content of the constitutional unit derived from the styrene monomer is not particularly limited, but is preferably 95% by weight, more preferably 90% by weight, further preferably 80% by weight, with respect to the gross weight (100% by weight) of the whole styrene-diene copolymer (or SBS) contained in the adhesive resin layer. If the content is more than 95% by weight, the shrink film may be more likely to be delaminated. If the content is less than 20% by weight, the adhesive resin layer is too soft and may thus facilitate delamination during the shrinking process (during heating).

When the polystyrene resin (polystyrene resin contained as the mixed resin in the adhesive resin layer) is the styrene-diene copolymer (or SBS), the content of the constitutional unit derived from the diene (or butadiene) in the styrene-diene copolymer is not particularly limited, but is preferably not less than 5% by weight, more preferably not less than 10% by weight, further preferably not less than 20% by weight, with respect to the gross weight (100% by weight) of the whole styrene-diene copolymer (or SBS) in the adhesive resin layer from the viewpoint of shrinkage properties and stiffness. The upper limit of the content of the constitutional unit derived from the diene (or butadiene) is not particularly limited, but is preferably not more than 80% by weight, more preferably less than 50% by weight, further preferably not more than 45% by weight, particularly preferably not more than 40% by weight, with respect to the gross weight (100% by weight) of the whole styrene-diene copolymer (or SBS) in the adhesive resin layer. If the content is less than 5% by weight, the shrink film may be more likely to be delaminated. If the content is more than 80% by weight, the adhesive resin layer is too soft and may thus facilitate delamination during the shrinking process (during heating). The content of the constitutional unit derived from the diene in the polystyrene resin contained in the adhesive resin layer is particularly preferably larger than that in the polystyrene resin contained in the layer A.

When the styrene-diene copolymer (or SBS) (styrene-diene copolymer (or SBS) contained as the mixed resin in the adhesive resin layer) is a mixed resin containing not less than two styrene-diene copolymers (or SBS), the aforementioned content of the constitutional unit derived from the styrene monomer and the aforementioned content of the constitutional unit derived from the diene are their respective contents in the mixed resin.

The glass transition temperature (Tg) of the styrene-diene copolymer is not particularly limited, but is preferably not less than 50°C (e.g., 50 to 80°C), more preferably not less than 60°C (e.g., 60 to 80°C), from the viewpoint of the stretching properties of the shrink film.

Examples of the polyester resin (polyester resin contained as the mixed resin in the adhesive resin layer) include, the polyester resins listed and described above as examples of the polyester resin contained in the surface layers. Only one of these polyester resins may be used, or not less than two of them may be used. The polyester resin may be the same polyester resin as the polyester resin contained in the surface layers or may be a polyester resin different therefrom, but is preferably the same polyester resin from the viewpoint of reducing the delamination between the surface layers and the base layer part. Also, the polyester resin may be the same polyester resin as the polyester resin that may be contained in the layer A, or may be a polyester resin different therefrom.

Among them, the polyester resin (polyester resin contained as the mixed resin in the adhesive resin layer) is preferably a modified aromatic polyester resin. The aromatic polyester resin is preferably a substantially amorphous aromatic polyester resin, more preferably an aromatic polyester resin that is an amorphous saturated polyester resin.

Among them, the aromatic polyester resin is preferably a modified aromatic polyester resin, more preferably CHDM-copolymerized PET or 2,2-dialkyl-1,3-propanediol-copolymerized PET (particularly, NPG-copolymerized PET).

When the adhesive resin layer is the resin layer containing a mixed resin of a polystyrene resin and a polyester resin as a main component, the content of the mixed resin (i.e., the total content of the polystyrene resin and the polyester resin) is not particularly limited, but is preferably not less than 50% by weight, more preferably not less than 60% by weight, further preferably not less than 70% by weight, with respect to the gross weight (100% by weight) of the adhesive resin layer from the viewpoint of improving the adhesiveness between the surface layers and the base layer part and suppressing delamination. The upper limit of the content is not particularly limited, but can be not more than 100% by weight.

The content of the polystyrene resin (polystyrene resin contained as the mixed resin in the adhesive resin layer) is not particularly limited, but is preferably 10 to 90% by weight, more preferably 20 to 85% by weight, further preferably 30 to 80% by weight, with respect to the gross weight (100% by weight) of the adhesive resin layer from the viewpoint of improving the adhesiveness between the surface layers and the base layer part and suppressing delamination.

The content of the polyester resin (polyester resin contained as the mixed resin in the adhesive resin layer) is not particularly limited, but is preferably 10 to 90% by weight, more preferably 15 to 80% by weight, further preferably 20 to 70% by weight, with respect to the gross weight (100% by weight) of the adhesive resin layer from the viewpoint of improving the interlaminar strength between the surface layers and the base layer part and suppressing delamination.

When the adhesive resin layer is the resin layer containing not less than one polystyrene resin as a main component selected from the group consisting of a soft polystyrene resin, a relatively soft polystyrene resin, and a modified polystyrene resin, examples of the soft polystyrene resin and the modified polystyrene resin include the soft polystyrene resins and the modified polystyrene resins listed and described above as examples of the polystyrene resin contained in the layer A. The hydrogenated soft polystyrene resin included in the soft polystyrene resin is not particularly limited, but is preferably a hydrogenated styrene elastomer or a hydrogenated styrene-diene copolymer (particularly, a hydrogenated styrene-diene copolymer rich in diene component).

The glass transition temperature (Tg) of the styrene-diene copolymer elastomer as the soft polystyrene resin is not particularly limited, but is preferably not more than 20°C, more preferably not more than 10°C, further preferably not more than 0°C, from the viewpoint of the adhesiveness between the surface layers and the base layer part or the adhesiveness between the layers A.

The polar group in the modified polystyrene resin is not particularly limited, but is, among others, preferably an acid anhydride group, a carboxylic acid group, a carboxylic acid ester group, or an epoxy group, more preferably a maleic anhydride group or an epoxy group. The modified polystyrene resin that has a polar group with high affinity for or reactable with the polyester resin contained in the surface layers and is compatible with the polystyrene resin contained in the layer A is preferred because the resulting adhesive resin layer has favorable adhesiveness to the layer A and high adhesiveness to the surface layers at ordinary temperature.

The modified polystyrene resin is not particularly limited, but is preferably a modified form of SEBS or a modified form of SEPS. Specifically, the modified polystyrene resin is not particularly limited, but is preferably acid anhydride-modified SEBS, acid anhydride-modified SEPS, epoxy-modified SEBS, or epoxy-modified SEPS, more preferably maleic anhydride-modified SEBS, maleic anhydride-modified SEPS, epoxy-modified SEBS, or epoxy-modified SEPS.

The relatively soft polystyrene resin is, for example, preferably a styrene-diene copolymer (or SBS) having a diene content larger than that of the polystyrene resin (styrene-diene copolymer) used in the layer A. For example, the content of the constitutional unit derived from the styrene monomer is preferably 20 to 95% by weight, more preferably 50 to 95% by weight, further preferably 55 to 90% by weight, particularly preferably 60 to 80% by weight, with respect to the gross weight (100% by weight) of the whole styrene-diene copolymer (or SBS) contained in the adhesive resin layer. On the other hand, the content of the constitutional unit derived from the diene (or butadiene) is preferably 5 to 80% by weight, more preferably not less than 5% by weight and less than 50% by weight, further preferably 10 to 45% by weight, particularly preferably 20 to 40% by weight, with respect to the gross weight (100% by weight) of the whole styrene-diene copolymer (or SBS) in the adhesive resin layer.

When the adhesive resin layer is the resin layer containing not less than one polystyrene resin as a main component selected from the group consisting of a soft polystyrene resin, a relatively soft polystyrene resin, and a modified polystyrene resin, the total content of the soft polystyrene resin, the relatively soft polystyrene resin, and the modified polystyrene resin is not particularly limited, but is preferably not less than 50% by weight (e.g., 50 to 100% by weight), more preferably 60 to 90% by weight, with respect to the gross weight (100% by weight) of the adhesive resin layer from the viewpoint of improving the adhesiveness between the surface layers and the base layer part and suppressing delamination.

The adhesive resin layer may optionally further contain, for example, a tackifier resin (e.g., a rosin resin, a hydrogenated rosin resin, a terpene resin, a terpene-phenol resin, a hydrogenated terpene resin, a coumarone resin, a hydrogenated coumarone resin, or a petroleum resin), a polyolefin resin, an aromatic hydrocarbon resin, a phenol resin, an alicyclic hydrocarbon resin, or an elastomer (e.g., natural rubber or synthetic rubber) for the purpose of improving the adhesiveness between the surface layers and the base layer part. In addition, the adhesive resin layer may optionally contain additional components (additive components), for example, a lubricant, a filler, a heat stabilizer, an antioxidant, an ultraviolet absorber, an antistatic agent, an antifogging agent, a fire retardant, a colorant, a pinning agent (alkaline earth metal), and a softening agent. Only one of these components may be used, or not less than two of them may be used. The adhesive resin layer may also contain a recovered raw material obtained by the repelletizing of film pieces during film formation.

The number of layers as the layer A and the adhesive resin layer contained in the base layer part according to the specific aspect (1) is 5 to 65 layers, preferably 9 to 33 layers, in total. If the number of layers is less than 5 layers, the layer multiplication of the base layer part is low effective for reducing the shrinkage rate of the shrink film. In addition, the layer multiplication is low effective for improving stiffness, resulting in the weakened hardness of the shrink label. Also, delamination is more likely to occur during shrinkage (during heating). Furthermore, the thickness (thickness per layer) of the layer A and/or the adhesive resin layer may be not thin enough, resulting in reduced transparency. On the other hand, if the number of layers is more than 65 layers, in the case of setting the thickness (overall thickness) of the shrink film to within a range suitable for the shrink label, the thickness (thickness per layer) of the layer A and/or the adhesive resin layer is too small so that use of the layer A and/or the adhesive resin layer is low effective, resulting in the reduced stiffness and weakened hardness of the shrink film and the shrink label. In addition, the transparency of the shrink film may be reduced.

The number of layers as the adhesive resin layer contained in the base layer part according to the specific aspect (1) is not particularly limited, but is preferably 3 to 33 layers, more preferably 5 to 17 layers. Also, the number of layers as the layer A contained in the base layer part according to the specific aspect (1) is not particularly limited, but is preferably 2 to 32 layers, more preferably 4 to 16 layers.

(Layer structure, physical properties, etc., of base layer part according to specific aspect (1))

In the base layer part according to the specific aspect (1), the layer A and the adhesive resin layer are alternately laminated without the mediation of a layer other than the layer A and the adhesive resin layer. Specifically, the laminate structure of the base layer part is a laminate structure in which a repeat unit "layer A/adhesive resin layer" is repeated (adhesive resin layer/layer A/adhesive resin layer/layer A/ .... /adhesive resin layer/layer A/adhesive resin layer). Each of the outermost layers on both sides of the base layer part is the adhesive resin layer. The adhesive resin layer used as each of the outermost layers on both sides of the base layer part can enhance the adhesiveness between the surface layers and the base layer part and prevent delamination.

In the base layer part according to the specific aspect (1), it is preferred, without particular limitations, that all of the layers A should be made of the same raw material, and it is also preferred that all of the adhesive resin layers should be made of the same raw material. However, when the adhesive resin layer is the layer A, it is preferred that all of the layers A except for the adhesive resin layer should be made of the same raw material. Specifically, it is preferred that each the layers A and the adhesive resin layers should be made of the same raw materials. Particularly, it is preferred that all of the layers A (when the adhesive resin layer is the layer A, all of the layers A except for the adhesive resin layer) should be layers with the same composition, and it is also preferred that all of the adhesive resin layers should be layers with the same composition.

(Constitution, physical properties, etc., of shrink film of present specification according to specific aspect (1))

The thickness (thickness per layer) of the adhesive resin layer according to the specific aspect (1) is not particularly limited, but is preferably not less than 0.2 $\mu$m (e.g., 0.2 to 10 $\mu$m), more preferably not less than 0.3 $\mu$m (e.g., 0.3 to 5 $\mu$m). The thickness of less than 0.2 $\mu$m is low effective for improving stiffness and may cause the delamination between the surface layers and the base layer part. All or some of the respective thicknesses of a plurality of adhesive resin layers in the shrink film of the present specification according to the specific aspect (1) may be the same or may be different from each other. For example, the adhesive resin layers of the base layer part in contact with the surface layers may each be thinner than each inner adhesive resin layer (adhesive resin layer between the layers A) of the base layer part.

The thickness (thickness per layer) of the layer A according to the specific aspect (1) is not particularly limited, but is preferably not less than 0.3 $\mu$m (e.g., 0.3 to 15 $\mu$m), more preferably not less than 0.6 $\mu$m (e.g., 0.6 to 10 $\mu$m). The thickness of less than 0.3 $\mu$m is low effective for optimizing the shrinkage rate of the shrink label and may also be low effective for improving stiffness, resulting in weakened hardness. All or some of the respective thicknesses of a plurality of layers A in the shrink film of the present specification according to the specific aspect (1) may be the same or may be different from each other.

The ratio of the thickness of the adhesive resin layer (total thickness of all of the adhesive resin layers) to the thickness of the layer A (total thickness of all of the layers A) [(thickness of the adhesive resin layer):(thickness of the layer A)] is not particularly limited, but is preferably 4:1 to 1:10, more preferably 2:1 to 1:8, particularly preferably 1:1 to 1:5. The layer A thicker than the ratio of 4:1 is preferred because a sufficient thermal shrinkage percentage is obtained, and an adequate shrinkage rate and stiffness are easily obtained. On the other hand, the adhesive resin layer thicker than the ratio of 1:5 is preferred because the delamination between the surface layers and the base layer part is less likely to occur.

(Shrink label of present specification according to specific aspect (1))

Figure 2 is a schematic diagram (partial cross-sectional view) showing one example of the shrink label of the present specification according to the specific aspect (1). In the shrink label of the present specification described in Figure 2, the layer F 12b is the adhesive resin layer.

The shrink film of the present specification used in the shrink label of the present specification according to the specific aspect (1) comprises: a base layer part having a multilayer structure comprising an adhesive resin layer and a layer A as a layer comprising a polystyrene resin content of not less than 50% by weight, wherein the multilayer structure is constituted by the specific number of layers as the layer A and the adhesive resin layer, and each outermost layer is the adhesive resin layer; and surface layers laminated directly on both sides of the base layer part, the surface layers each comprising a polyester resin content of not less than 50% by weight. This suppresses the rapid shrinkage upon thermal shrinkage of the shrink film (or the shrink label), thereby achieving a gradual shrinkage rate and producing an adequate shrinkage rate. Also, the shrink film of the present specification according to the specific aspect (1) (or the shrink label of the present specification according to the specific aspect (1)) has high shrink film (or shrink label) stiffness and strong hardness by the aforementioned constitution. In addition, the shrink film of the present specification according to the specific aspect (1) (or the shrink label of the present specification according to the specific aspect (1)) is insusceptible to delamination by the aforementioned constitution.

(Method for producing shrink label of present specification according to specific aspect (1))

The shrink label of the present specification according to the specific aspect (1) can be produced by using the adhesive resin layer as the layer F in the film preparation step. Specifically, the shrink label of the present specification according to the specific aspect (1) can be produced by using a raw material for constituting the adhesive resin layer as the raw material (f).

<Specific aspect (2)>

The specific aspect (2) illustrates the shrink label of the present specification, the shrink label comprising a print layer on at least one surface of the shrink film, wherein the overall thickness of the shrink film is 15 to 35 $\mu$m, the total thickness of the surface layers is not less than 40% of the overall thickness of the shrink film, and the print layer is a solvent drying-type print layer.

The shrink label of the present specification according to the specific aspect (2) comprises a shrink film that is excellent in shrinkage properties even after thinning and is excellent in solvent resistance, by virtue of the aforementioned specific constitution, and therefore has the advantage of the polystyrene resin that the creases of the shrink label and the bending of its end portion caused by rapid shrinkage upon thermal shrinkage are suppressed, while being able to suppress such defects that the shrink label is ruptured when placed under relatively strong tension.

(Base layer part according to specific aspect (2))

The base layer part according to the specific aspect (2) preferably comprises the aforementioned adhesive resin layer according to the specific aspect (1). The adhesive resin layer comprised as each outermost layer in the base layer part can improve the adhesiveness between the surface layers and the base layer part and prevent delamination. Since the adhesive resin layer can intervene between the layers A without impairing adhesiveness, the adhesive resin layer that intervenes between the layers A in the base layer part can also be used for optimizing shrinkage rate or increasing the stiffness of the shrink label. When the base layer part according to the specific aspect (2) comprises the layer A and the adhesive resin layer, it is preferred, without particular limitations, that the base layer part should comprise a plurality of the layers A via the adhesive resin layers, from the viewpoint of, for example, increasing the stiffness of the shrink label. In this case, it is preferred that the layer A and the adhesive resin layer should be alternately laminated directly without the mediation of a layer other than the layer A and the adhesive resin layer. When the base layer part according to the specific aspect (2) comprises the layer A and the adhesive resin layer, its particularly preferred constitution can be referred to the constitution of the base layer part according to the specific aspect (1).

Preferred examples of the adhesive resin layer according to the specific aspect (2) can further include the layer E, which is a resin layer containing a polyester resin as a main component. Examples of the resin layer containing a polyester resin as a main component include the layer B mentioned later. In this case, it is preferred that the adhesive resin layer should be comprised as each outermost layer of the base layer part. It is also preferred that the adhesive resin layer should intervene between the layers A in the base layer part. It is further preferred that the adhesive resin layer should be comprised as each outermost layer of the base layer part and intervene between all of the layers A in the base layer part. In other words, when the adhesive resin layer is the resin layer containing a polyester resin as a main component, the base layer part preferably has a structure in which the adhesive resin layer and the layer A are alternately repeated [adhesive resin layer/layer A/adhesive resin layer/ ... /layer A/adhesive resin layer].

(Constitution, physical properties, etc. of shrink film of present specification according to specific aspect (2))

The thickness (overall thickness) of the shrink film of the present specification according to the specific aspect (2) is 15 to 35 $\mu$m, preferably 15 to 30 $\mu$m. The thickness of not more than 35 $\mu$m renders the shrink label thin, leading to cost reduction and resource saving.

The total thickness of the surface layers according to the specific aspect (2) is not less than 40%, preferably not less than 50%, particularly preferably more than 50%, of the thickness (overall thickness) of the shrink film of the present specification. If the thickness is not less than 40%, the shrink film can be excellent in solvent resistance even after thinning. The upper limit of the thickness is not particularly limited, but is preferably not more than 75%.

When the solvent drying-type print layer is disposed only on one side of the shrink film of the present specification, of the surface layers disposed on both sides of the base layer part, the surface layer on the side having the solvent drying-type print layer may be a layer having a thickness larger than that of the surface layer on the side lacking the solvent drying-type print layer. Alternatively, when the solvent drying-type print layer is disposed on both surfaces of the shrink film of the present specification, the surface layer on the side comprising more solvent drying-type print layers mentioned above (e.g., the surface layer on the side where print layers with a larger number of colors are disposed) may be a layer having a thickness larger than that of the surface layer on the side comprising fewer solvent drying-type print layers.

The thickness of the surface layer on the side having the solvent drying-type print layer, of the surface layers, is not particularly limited, but is preferably not less than 20%, more preferably not less than 25%, of the thickness (overall thickness) of the shrink film of the present specification from the viewpoint of improving solvent resistance to solvent drying-type ink for forming the print layer. The upper limit of the thickness is not particularly limited, but is preferably not more than 70%.

The thickness of the base layer part according to the specific aspect (2) is not particularly limited, but is preferably 20 to 60%, more preferably 25 to 50%, of the thickness (overall thickness) of the shrink film of the present specification from the viewpoint of the shrinkage finish of the shrink label, shrinkage properties, and the easy removal of the shrink label after the shrinking process along perforation.

The total thickness of the layers A in the base layer part according to the specific aspect (2) is not particularly limited, but is preferably not less than 20% by weight (e.g., 20 to 55%), more preferably 20 to 45%, of the thickness (overall thickness) of the shrink film of the present specification from the viewpoint of the shrinkage finish of the shrink label.

When the base layer part according to the specific aspect (2) contains the adhesive resin layer, the total thickness of the adhesive resin layers is not particularly limited, but is preferably not less than 5% (e.g., 5 to 40%), more preferably 5 to 30%, of the thickness (overall thickness) of the shrink film of the present specification from the viewpoint of the adhesiveness between the surface layers and the base layer part.

The thickness (thickness per layer) of the surface layers according to the specific aspect (2) is not particularly limited, but is preferably not less than 5 $\mu$m (e.g., 5 to 15 $\mu$m). The thickness of not less than 5 $\mu$m is preferred because solvent resistance to solvent drying-type ink for forming the print layer can be improved. The respective thicknesses of the surface layers on one side and on the other side in the shrink film of the present specification may be the same or may be different from each other. When the respective thicknesses of the surface layers on one side and on the other side are different from each other, the thickness of the surface layer on the side having the solvent drying-type print layer can be not less than 5 $\mu$m.

The thickness of the base layer part according to the specific aspect (2) is not particularly limited, but is preferably not less than 5 $\mu$m (e.g., 5 to 30 $\mu$m) from the viewpoint of the shrinkage finish of the shrink label.

The thickness (thickness per layer) of the layer A is not particularly limited, but is preferably not less than 0.3 $\mu$m (e.g., 0.3 to 10 $\mu$m), more preferably 0.3 to 5 $\mu$m, from the viewpoint of the shrinkage finish of the shrink label. All or some of the respective thicknesses of a plurality of layers A in the shrink film of the present specification may be the same or may be different from each other.

When the base layer part according to the specific aspect (2) contains the adhesive resin layer, the thickness (thickness per layer) of the adhesive resin layer is not particularly limited, but is preferably not less than 0.2 $\mu$m (e.g., 0.2 to 7 $\mu$m). All or some of the respective thicknesses of a plurality of adhesive resin layers in the shrink film of the present specification may be the same or may be different from each other. For example, the adhesive resin layers of the base layer part in contact with the surface layers may each be thinner than each inner adhesive resin layer (adhesive resin layer between the layers A) of the base layer part.

The ratio of the thickness of the layer A (total thickness of all of the layers A) to the thickness of the adhesive resin layer (total thickness of all of the adhesive resin layers) [(thickness of the layer A):(thickness of the adhesive resin layer)] is not particularly limited, but is preferably 1:4 to 10:1, more preferably 1:2 to 8:1, particularly preferably 1:1 to 5:1. The layer A thicker than the ratio of 1:4 is preferred because a sufficient thermal shrinkage percentage is obtained, and an adequate shrinkage rate and stiffness are easily obtained. On the other hand, the adhesive resin layer thicker than the ratio of 10:1 is preferred because the delamination between the surface layers and the base layer part is less likely to occur.

The tensile properties (in accordance with JIS K 7127) in a direction orthogonal to the main orientation direction of the shrink film of the present specification according to the specific aspect (2) is not particularly limited, but is preferably not less than 200%, more preferably not less than 250%. The tensile properties of not less than 200% are preferred because rupture can be suppressed during the coating of the shrink film with solvent drying-type ink so that the manufacturability of the shrink label can be improved. The "main orientation direction" refers to a direction in which stretching treatment has been mainly carried out (direction that gives the largest thermal shrinkage percentage), and is generally the longitudinal direction or the width direction and is the width direction for, for example, a film substantially uniaxially stretched in the width direction (film substantially uniaxially oriented in the width direction).

(Shrink label of present specification according to specific aspect (2))

The shrink label of the present specification according to the specific aspect (2) is a shrink label comprising a solvent drying-type print layer on at least one surface of the shrink film of the present specification. The shrink label of the present specification may comprise a layer other than the shrink film of the present specification and the solvent drying-type print layer.

(Solvent drying-type print layer)

The solvent drying-type print layer is a print layer formed from solvent drying-type ink.

The solvent drying-type print layer is not particularly limited as long as the solvent drying-type print layer is a print layer formed from solvent drying-type ink, and examples thereof include the print layers listed and described above as examples of the print layer. The solvent drying-type print layer is not particularly limited, but may be disposed only on one side of the shrink film of the present specification or may be disposed on both sides of the shrink film of the present specification. Alternatively, the solvent drying-type print layer may be disposed throughout the surface (surface on the side where the print layer is to be disposed) of the shrink film of the present specification, or may be disposed on a portion of this surface. The solvent drying-type print layer is not particularly limited, but may be a single layer or may be multiple layers.

The solvent drying-type print layer is not particularly limited, but may contain a residual solvent of the solvent drying-type ink. Specifically, the solvent drying-type print layer is not particularly limited, but may contain a solvent as a residual solvent. Examples of the solvent include organic solvents usually used in printing ink for use in gravure printing, flexographic printing, or the like. Examples of the solvent include the organic solvents listed and described above as examples of the organic solvent used in the printing ink. Among them, the solvent is preferably an ester or an alcohol, more preferably an acetic acid ester or an alcohol, further preferably ethyl acetate, propyl acetate, or isopropyl alcohol, from the viewpoint that the shrink film of the present specification can exert excellent solvent resistance. It is also preferred, without particular limitations, that isopropyl alcohol should be detected as a main component in the solvent drying-type print layer.

The content of the aromatic hydrocarbon in the solvent drying-type print layer is not particularly limited, but is preferably not more than 1% by weight with respect to all residual solvents (100% by weight).

Each of Figures 1 to 3 is a schematic diagram (partial cross-sectional view) showing one example of the shrink label of the present specification according to the specific aspect (2). In the shrink label of the present specification described in each of Figures 1 to 3, the layer F 12b is the adhesive resin layer. Also, the print layer 2 is the solvent drying-type print layer.

The thickness (overall thickness) of the shrink label of the present specification according to the specific aspect (2) is not particularly limited, but is preferably more than 15 $\mu$m and not more than 50 $\mu$m, more preferably 20 to 40 $\mu$m.

When the shrink film of the present specification according to the specific aspect (2) is the film substantially uniaxially stretched in the width direction, the tensile properties (in accordance with JIS K 7127) in a direction orthogonal to the main orientation direction of the shrink label of the present specification is not particularly limited, but is preferably not less than 100%, more preferably not less than 150%, from the viewpoint that the shrink label has adequate shrinkage properties.

The content of the residual solvent in the shrink label of the present specification according to the specific aspect (2) is not particularly limited, but is preferably not more than 200 mg/m$^2$, more preferably not more than 150 mg/m$^2$, further preferably not more than 100 mg/m$^2$. The lower limit of the content is not particularly limited, but is preferably more than 0 mg/m$^2$. The content of not more than 200 mg/m$^2$ is preferred because the shrink label is less likely to be ruptured even when placed under relatively strong tension, for example, during bag making with the shrink label or upon application of the label to a bottle using a labeler. Although the solvent is not particularly limited as long as the solvent is present in the shrink label, examples thereof include a solvent drying-type ink-derived solvent remaining in the print layer, and a solvent present in the shrink film.

The content of the residual solvent can be measured using, for example, a gas chromatography mass spectrometer (GCMS).

The shrink label of the present specification according to the specific aspect (2) can be used as, for example, a shrink sleeve label which is a label of type that is prepared in a cylindrical (tubular) form by sealing both ends thereof with a solvent or an adhesive and applied to a container, or a roll-on shrink sleeve label which is a label that is affixed at one end to a container, then wound around the container, and prepared in a tubular form by overlaying the one end with the other end. Among them, the shrink film of the present specification according to the specific aspect (2) is particularly preferably used as a shrink sleeve label, also from the viewpoint of the excellent solvent resistance of the seam to a solvent or an adhesive upon application of the shrink sleeve label to the container. Specifically, the shrink label of the present specification according to the specific aspect (2) is preferably a shrink sleeve label.

Each of Figures 4 and 5 is a schematic diagram showing one example of the shrink sleeve label according to one embodiment of the shrink label of the present specification according to the specific aspect (2). In Figure 4, at least one of the background print layer 51 and the designed print layer 52 is the solvent drying-type print layer.

The shrink film of the present specification used in the shrink label of the present specification according to the specific aspect (2) has an overall thickness of 15 to 35 $\mu$m and comprises the surface layers each containing not less than 50% by weight of a polyester resin on both sides of the base layer part comprising at least one layer A containing not less than 50% by weight of a polystyrene resin, and the total thickness of the surface layers is not less than 40% of the overall thickness of the shrink film. The shrink film of the present specification according to the specific aspect (2) constituted to have not less than the specific total thickness of the surface layers is excellent in solvent resistance even if being as thin as 15 to 35 $\mu$m, and is less susceptible to invasion by a solvent even if comprising a print layer formed from solvent drying-type ink on at least one surface of the shrink film so that the shrink label of the present specification can be less likely to be ruptured. Since the base layer part of the shrink film of the present specification according to the specific aspect (2) comprises at least one layer A, the shrink label of the present specification also possesses the advantage of the polystyrene resin that the creases of the shrink label and the bending of its end portion caused by rapid shrinkage upon thermal shrinkage are suppressed.

(Method of producing shrink label of present specification according to specific aspect (2))

The preferred shrink label of the present specification according to the specific aspect (2) can be produced by using the adhesive resin layer as the layer F in the film preparation step. Specifically, the preferred shrink I label of the present specification according to the specific aspect (2) can be produced by using a raw material for constituting the adhesive resin layer as the raw material (f) .

In the shrink label of the present specification according to the specific aspect (2), the printing ink for forming the print layer is solvent printing-type ink. An organic solvent or the like usually used in ink for use in gravure printing, flexographic printing, or the like can be used as a solvent contained in the solvent printing-type ink. Examples of the organic solvent include the organic solvents listed and described above as examples of the organic solvent used in the printing ink for forming the print layer. Among them, the organic solvent is preferably an ester or an alcohol, more preferably an acetic acid ester or an alcohol, further preferably ethyl acetate, propyl acetate, or isopropyl alcohol, from the viewpoint of low aggression against the film without impairing printability for the surface layers of the shrink film. Specifically, the solvent drying-type ink preferably contains an ester and/or an alcohol (particularly, ethyl acetate, propyl acetate, or isopropyl alcohol) as a main component of the solvent.

The total content of the ester and the alcohol in the solvent drying-type ink is not particularly limited, but is preferably not less than 80% by weight, more preferably not less than 85% by weight, with respect to all solvents (100% by weight) from the viewpoint of low aggression against the film. The upper limit of the content is not particularly limited, but can be not more than 100% by weight.

<Specific aspect (3)>

The specific aspect (3) illustrates the shrink label of the present **specification,** wherein the shrink film comprises at least a laminate structure in which a resin layer (R) and a resin layer (S) are adjacent to each other, the combination of the respective main component resins of the resin layer (R) and the resin layer (S) is a polyester resin and a polystyrene resin, a polyester resin and a polyolefin resin, or a polystyrene resin and a polyolefin resin, and the interlaminar strength in the 180° direction at 90°C of an interface formed by the resin layer (R) and the resin layer (S) adjacent to each other is larger than the shrinkage stress at 90°C of the shrink film.

The shrink label of the present **specification** according to the specific aspect (3) is less likely to be delaminated during the shrinking process by virtue of the aforementioned specific constitution and therefore eliminates the need of strictly adjusting the conditions of the shrinking process and thus, does not take much time to adjust conditions. Even when a shrink sleeve label is applied to a container or the like after the shrinking process, the shrink label can be easily applied to the container or the like without being delaminated of the shrink film (or the shrink label).

In the present specification, two resin layers constituting the shrink film of the present **specification,** wherein the combination of the respective main component resins of the resin layers is a polyester resin and a polystyrene resin, a polyester resin and a polyolefin resin, or a polystyrene resin and a polyolefin resin are also referred to as a "resin layer (R)" and a "resin layer (S)". In the present specification, the interface formed by the resin layer (R) and the resin layer (S) adjacent to each other is also referred to as an "interface [R/S]".

In the shrink film of the present **specification** according to the specific aspect (3), each of the resin layer (R) and the resin layer (S) is any of the surface layers and the layers in the base layer part (layer A and layer E). Specifically, the resin layer (R) or the resin layer (S) containing a polyester resin as a main component is the surface layer or the layer E containing the polyester resin as a main component. Alternatively, the resin layer (R) or the resin layer (S) containing a polystyrene resin as a main component is the layer A or the layer E containing the polystyrene resin as a main component. The resin layer (R) or the resin layer (S) containing a polyolefin resin as a main component is the layer E containing the polyolefin resin as a main component. The interface [R/S] may be the interface [P/Q].

The interlaminar strength in the 180° direction at 90°C of the interface formed by the resin layer (R) and the resin layer (S) adjacent to each other is larger than the shrinkage stress at 90°C of the shrink film of the present **specification.** If the interlaminar strength in the 180° direction at 90°C of the interface [R/S] is larger than the shrinkage stress at 90°C of the shrink film of the present **specification,** delamination can be prevented even during the shrinking process, regardless of its high or low interlaminar strength at ordinary temperature.

The interlaminar strength in the 180° direction at 90°C of the interface [R/S] is not particularly limited, but is preferably not less than 2 N (e.g., 2 to 8 N), more preferably not less than 3 N (e.g., 3 to 8 N). The interlaminar strength of not less than 2 N is preferred because interlaminar strength during the shrinking process is improved. The interlaminar strength in the 180° direction at 90°C can be adjusted by, for example, the composition of raw materials constituting the resin layer (R) or the resin layer (S).

The shrinkage stress is not particularly limited, but is preferably 1 to 7 N, more preferably 1 to 5 N, further preferably 1 to 3 N. The shrinkage stress of not less than 1 N is preferred because the resulting shrink label has the improved property of conforming to a container or the like. The shrinkage stress can be adjusted by, for example, the thickness, layer structure, or raw material composition of the shrink film, the composition of raw materials constituting the resin layer (R) or the resin layer (S), or their thicknesses.

The combination of the respective main component resins of the resin layer (R) and the resin layer (S) is a polyester resin and a polystyrene resin, a polyester resin and a polyolefin resin, or a polystyrene resin and a polyolefin resin. Among them, a polyester resin and a polystyrene resin or a polystyrene resin and a polyolefin resin are particularly preferred. Since the polyester resin, the polystyrene resin, and the polyolefin resin have favorable heat shrinkability in the formed film while having given stiffness, it is important to use these resins as the main components of the resin layer (R) and the resin layer (S). The resin layer (R) and the resin layer (S) are not particularly limited, but may each contain, in addition to the main component resin, a resin different from the type of the main component resin, such as a polyester resin, a polystyrene resin, a polyolefin resin, a vinyl chloride resin, a polycarbonate resin, a polyamide resin, or a thermoplastic elastomer. When the resin layer (R) and/or the resin layer (S) contain a resin other than the main component resin, among them, the resin other than the main component resin in the resin layer (R) is preferably the main component resin of the resin layer (S), and the resin other than the main component resin in the resin layer (S) is preferably the main component resin of the resin layer (R), from the viewpoint of the interlaminar strength between the resin layer (R) and the resin layer (S). The content of the resin other than the main component resin is not particularly limited, but is preferably 5 to 45% by weight, more preferably 10 to 40% by weight, further preferably 15 to 35% by weight, with respect to the whole layer.

The content of the main component resin in the resin layer (R) is not particularly limited, but is preferably not less than 50% by weight, more preferably more than 50% by weight, further preferably not less than 55% by weight, particularly preferably not less than 60% by weight, with respect to the gross weight (100% by weight) of the resin layer (R). The upper limit of the content is not particularly limited and may be 100% by weight.

The content of the main component resin in the resin layer (S) is not particularly limited, but is preferably not less than 50% by weight, more preferably more than 50% by weight, further preferably not less than 55% by weight, particularly preferably not less than 60% by weight, with respect to the gross weight (100% by weight) of the resin layer (S). The upper limit of the content is not particularly limited and may be 100% by weight.

It is preferred, without particular limitations, that at least one of the resin layer (R) and the resin layer (S) should contain not less than 25 % by weight (with respect to the whole layer) of a styrene-conjugated diene copolymer in which the content of the constitutional unit derived from the conjugated diene is 20 to 50% by weight. In the present specification, the "styrene-conjugated diene copolymer in which the content of the constitutional unit derived from the conjugated diene is 20 to 50% by weight" is also referred to as a "specific styrene-conjugated diene copolymer". At least one of the resin layer (R) and the resin layer (S) containing the specific styrene-conjugated diene copolymer is preferred because the interlaminar strength in the 180° direction at 90°C of the interface [R/S] is further improved. In this case, the resin layer (R) and/or the resin layer (S) may contain not less than 25% by weight (with respect to the whole layer) of the styrene-conjugated diene copolymer in which the content of the constitutional unit derived from the conjugated diene is 20 to 50% by weight, or this specific styrene-conjugated diene copolymer may be used in combination with a different styrene-diene copolymer to adjust the content of the constitutional unit derived from the conjugated diene with respect to the gross weight (100% by weight) of all styrene-diene copolymers in the resin layer (R) or the resin layer (S) to 20 to 50% by weight. The former approach is preferred.

When the resin layer (R) or the resin layer (S) is a layer containing a polystyrene resin as a main component, the specific styrene-conjugated diene copolymer may be used as the polystyrene resin serving as the main component. On the other hand, when the resin layer (R) or the resin layer (S) is a layer containing a polyester resin or a polyolefin resin as a main component, the specific styrene-conjugated diene copolymer can be used in addition to the main component resin.

When at least one of the resin layer (R) and the resin layer (S) contains not less than 25% by weight of the specific styrene-conjugated diene copolymer with respect to the whole layer, the combination of the resin layer (R) and the resin layer (S) is not particularly limited, but is preferably any of the following (i) to (iii): (i) a layer containing the specific styrene-conjugated diene copolymer as a main component and containing not less than 50% by weight of the copolymer with respect to the whole layer, and a layer containing a polyester resin or a polyolefin resin as a main component; (ii) a layer containing a polyester resin as a main component and containing not less than 25% by weight of the specific styrene-conjugated diene copolymer with respect to the whole layer, and a layer containing a polystyrene resin or a polyolefin resin as a main component (more preferably a layer containing a polystyrene resin as a main component); and (iii) a layer containing a polyolefin resin as a main component and containing not less than 25% by weight of the specific styrene-conjugated diene copolymer with respect to the whole layer, and a layer containing a polyester resin or a polystyrene resin as a main component (more preferably a layer containing a polystyrene resin as a main component). In these combinations (i) to (iii), the resin layer (E) and the resin layer (S) may both contain not less than 25% by weight of the specific styrene-conjugated diene copolymer with respect to each whole layer. Among them, the combination of a layer containing the specific styrene-conjugated diene copolymer as a main component and containing not less than 50% by weight of the copolymer with respect to the whole layer, and a layer containing not less than 90% by weight of a polyester resin or a polyolefin resin with respect to the whole layer, or the combination of a layer containing the specific styrene-conjugated diene copolymer as a main component and containing not less than 50% by weight of the copolymer with respect to the whole layer, and a layer containing not less than 50% by weight of a polyester resin or a polyolefin resin with respect to the whole layer and containing not less than 25% by weight of the specific styrene-conjugated diene copolymer with respect to the whole layer is particularly preferred.

The specific styrene-conjugated diene copolymer refers to a styrene-conjugated diene copolymer in which the content of the constitutional unit derived from the conjugated diene is 20 to 50% by weight with respect to the gross weight (100% by weight) of the styrene-conjugated diene copolymer. However, the aforementioned content of the constitutional unit derived from the conjugated diene is not particularly limited, but is more preferably 20 to 45% by weight, further preferably 20 to 40% by weight, with respect to the gross weight (100% by weight) of the styrene-conjugated diene copolymer. On the other hand, the content of the constitutional unit derived from the styrene monomer in the specific styrene-conjugated diene copolymer is not particularly limited, but is more preferably 50 to 80% by weight, further preferably 55 to 80% by weight, particularly preferably 60 to 80% by weight, with respect to the gross weight (100% by weight) of the styrene-conjugated diene copolymer. The content of the constitutional unit derived from the conjugated diene of not less than 20 % by weight is preferred because the shrink film can secure given flexibility and tends to have further improved interlaminar strength in the 180° direction at 90°C. The content of the constitutional unit derived from the conjugated diene of not more than 50% by weight is preferred because the shrink film can be prevented from having excessive softness resulting in reduced stiffness.

When at least one of the resin layer (R) and the resin layer (S) contains the specific styrene-conjugated diene copolymer, the content of the specific styrene-conjugated diene copolymer in the resin layer (R) or the resin layer (S) is not particularly limited, but is preferably not less than 25% by weight, more preferably not less than 30% by weight, further preferably not less than 40% by weight, with respect to the gross weight (100% by weight) of the resin layer (R) or the resin layer (S). If the content is less than 25% by weight, the effects brought about by the specific styrene-conjugated diene copolymer contained therein may not be obtained.

When the resin layer (R) and/or the resin layer (S) are a layer containing a polystyrene resin as a main component, the upper limit of the content of the specific styrene-conjugated diene copolymer is not particularly limited, but may be 100% by weight, 95% by weight, or 90% by weight, with respect to the gross weight (100% by weight) of the resin layer (R) or the resin layer (S).

When the resin layer (R) and/or the resin layer (S) are a layer containing a polyester resin or a polyolefin resin as a main component, the upper limit of the content of the specific styrene-conjugated diene copolymer is not particularly limited, but can be smaller than the content of the polyester resin or the polyolefin resin used as the main component in the resin layer (R) or the resin layer (S).

(Constitution, physical properties, etc., of shrink film of present **specification** according to specific aspect (3))

When the shrink film of the present **specification** according to the specific aspect (3) comprises a plurality of resin layers (R), of a plurality of resin layer (R), all layers or some layers may be the same layers or may be layers different from each other (layers differing in resin composition constituting each layer or in layer thickness). Likewise, when the shrink film of the present **specification** according to the specific aspect (3) comprises a plurality of resin layers (S), of a plurality of resin layers (S), all layers or some layers may be the same layers or may be layers different from each other (layers differing in resin composition constituting each layer or in layer thickness).

The number of interfaces [R/S] mentioned above in the shrink film of the present **specification** according to the specific aspect (3) is, inevitably, not less than 1, preferably not less than 2, more preferably not less than 3, further preferably not less than 4.

The shrink film of the present **specification** according to the specific aspect (3) comprises at least a laminate structure in which the resin layer (R) and the resin layer (S) are adjacent to each other. The laminate structure may be, for example, a 2-layer structure "resin layer (R)/resin layer (S)" or may be a 3-layer structure "resin layer (R)/resin layer (S)/resin layer (R)" or "resin layer (S)/resin layer (R)/resin layer (S)" or a laminate structure comprising not less than 4 alternate layers of the resin layer (R) and the resin layer (S) adjacent to each other.

In the shrink film of the present **specification** according to the specific aspect (3), the position at which the laminate structure in which the resin layer (R) and the resin layer (S) are adjacent to each other is formed is not particularly limited. For example, when the surface layers and the base layer part are directly laminated, the laminate structure in which the resin layer (R) and the resin layer (S) are adjacent to each other may be formed by each outermost layer of the base layer part and the surface layer, or may be formed in the base layer part. When the laminate structure in which the resin layer (R) and the resin layer (S) are adjacent to each other is formed by each outermost layer of the base layer part and the surface layer, specifically, this laminate structure in which the resin layer (R) and the resin layer (S) are adjacent to each other is formed by arranging the resin layer (R) as the surface layer and the resin layer (S) as the outermost layer of the base layer part. Alternatively, the resin layer (S) may be arranged as the surface layer, and the resin layer (R) may be arranged as the outermost layer of the base layer part. Specifically, the surface layer is any one of the resin layer (R) and the resin layer (S), while the outermost layer of the base layer part is the other resin layer. When the laminate structure in which the resin layer (R) and the resin layer (S) are adjacent to leach other is formed in the base layer part, the base layer part comprises this laminate structure in which the resin layer (R) and the resin layer (S) are adjacent to each other.

The base layer part according to the specific aspect (3) is not particularly limited, but preferably consists of the resin layer (R) and/or the resin layer (S). When the base layer part consists of the resin layer (R) (when all of the layers in the base layer part are the resin layers (R)), the surface layers are the resin layers (S) and are laminated directly with the base layer part. When the base layer part consists of the resin layer (S) (when all of the layers in the base layer part are the resin layers (S)), the surface layers are the resin layers (R) and are laminated directly with the base layer part. As mentioned above, of a plurality of resin layers (R), all layers or some layers may be the same layers or may be layers

EP 2 977 979 B1

different from each other (layers differing in resin composition constituting each layer or in layer thickness). When the shrink film of the present **specification** comprises a plurality of resin layers (S), of a plurality of resin layers (S), all layers or some layers may be the same layers.

When the base layer part according to the specific aspect (3)1 consists of the resin layer (R), the laminate structure of the base layer part is not particularly limited, but preferably consists of two resin layers (R) differing in composition, etc. (resin layer (R1) and resin layer (R2)) without the mediation of other layers. Specifically, the base layer part particularly preferably comprises a total of 5 to 65 alternate layers of the resin layer (R1) and the resin layer (R2) as the layers. Specifically, the laminate structure of the base layer part is preferably a laminate structure in which a repeat unit "resin layer (R1)/resin layer (R2)" is repeated (resin layer (R1)/resin layer (R2)/resin layer (R1)/resin layer (R2)/ .... /resin layer (R1)/resin layer (R2)/resin layer (R1)), (resin layer (R2)/resin layer (R1)/resin layer (R2)/resin layer (R1)/ .... /resin layer (R2)/resin layer (R1)/resin layer (R2)), (resin layer (R1)/resin layer (R2)/resin layer (R1)/resin layer (R2)/ .... /resin layer (R1)/resin layer (R2)), or (resin layer (R2)/resin layer (R1)/resin layer (R2)/resin layer (R1)/ .... /resin layer (R2)/resin layer (R1)) without the mediation of other layers. In this case, the outermost layers on both sides of the base layer part may each be the resin layer (R1) or the resin layer (R2). In this case, each of the surface layers is the resin layer (S). When the base layer part consists of the resin layer (S), the laminate structure of the base layer part is not particularly limited, but is preferably the same structure as above except that two resin layers (S) differing in composition, etc. (resin layer (S1) and resin layer (S2)) are used instead of the resin layer (R1) and the resin layer (R2). In this case, each of the surface layers is the resin layer (R).

In the case of the shrink film thus constituted (shrink film of the present **specification** according to the specific aspect (3), wherein each of the surface layers is the resin layer (S), and the base layer part comprises a total of 5 to 65 alternate layers of the resin layer (R1) and the resin layer (R2)), the resin layer (S) is a layer containing a polyester resin as a main component, and each of the resin layer (R1) and the resin layer (R2) is a layer containing a polystyrene resin as a main component. Among others, of the resin layer (R1) and the resin layer (R2), one resin layer adjacent to the resin layer (S) is preferably a layer further containing a polyester resin. Although both of the resin layer (R1) and the resin layer (R2) may be a resin layer containing a polystyrene resin as a main component and further containing a polyester resin, it is preferred in this case that the resin layer (R) comprising a larger content of the polyester resin should be the outermost layer of the base layer part. In this case, the content of the polyester resin in the resin layer (S) is not particularly limited, but is preferably not less than 90% by weight, more preferably not less than 95% by weight, with respect to the gross weight (100% by weight) of the resin layer (S). In this case, the resin layer (R) is the layer A.

When the base layer part according to the specific aspect (3) consists of the resin layer (R) and the resin layer (S), it is preferred, without particular limitations, that in the laminate structure of the base layer part, these resin layers should be alternately laminated, and it is more preferred that these resin layers should be alternately laminated directly without the mediation of other layers. Specifically, the base layer part particularly preferably comprises a total of 5 to 65 alternate layers of the resin layer (R) and the resin layer (S). Specifically, the laminate structure of the base layer part is preferably a laminate structure in which a repeat unit "resin layer (R)/resin layer (S)" is repeated (resin layer (R)/resin layer (S)/resin layer (R)/resin layer (S)/ .... /resin layer (R)/resin layer (S)/resin layer (R)), (resin layer (S)/resin layer (R)/resin layer (S)/resin layer (R)/ .... /resin layer (S)/resin layer (R)/resin layer (S)), (resin layer (R)/resin layer (S)/resin layer (R)/resin layer (S)/ .... /resin layer (R)/resin layer (S)), or (resin layer (S)/resin layer (R)/resin layer (S)/resin layer (R)/ .... /resin layer (S)/resin layer (R)) without the mediation of other layers. The outermost layers on both sides of the base layer part may each be the resin layer (R) or the resin layer (S).

In the case of the shrink film thus constituted (shrink film of the present **specification** according to the specific aspect (3), wherein the base layer part comprises a total of 5 to 65 alternate layers of the resin layer (R) and the resin layer (S)), the combination of the resin layer (R) and the resin layer (S) is not particularly limited, but is preferably a layer containing a polyester resin as a main component and a layer containing a polystyrene resin as a main component (particularly, the layer A). The combination is particularly preferably a layer containing not less than 50% by weight of a polyester resin with respect to the whole layer and containing 5 to 45% by weight of a polystyrene resin with respect to the whole layer, and a layer containing not less than 90% by weight of a polystyrene resin with respect to the whole layer; a layer containing not less than 50% by weight of a polystyrene resin with respect to the whole layer and containing 5 to 45% by weight of a polyester resin with respect to the whole layer, and a layer containing not less than 90% by weight of a polyester resin with respect to the whole layer; or a layer containing not less than 50% by weight of a polyester resin with respect to the whole layer and containing 5 to 45% by weight of a polystyrene resin with respect to the whole layer, and a layer containing not less than 50% by weight of a polystyrene resin with respect to the whole layer and containing 5 to 45% by weight of a polyester resin with respect to the whole layer. In this case, each of the surface layers is not particularly limited, but preferably contains a polyester resin as a main component and comprises a polyester resin content of preferably not less than 90% by weight, more preferably not less than 95% by weight, with respect to the gross weight (100% by weight) of the surface layer.

In the case of the shrink film thus constituted (shrink film of the present **specification** according to the specific aspect (3), wherein the base layer part comprises a total of 5 to 65 alternate layers of the resin layer (R) and the resin layer (S)), each of the surface layers is not particularly limited, but may be the resin layer (R) or may be the resin layer (S). When the resin layer (R) in the base layer part is the resin layer (R1), the resin layer (R) serving as the surface layer may be the resin layer (R1) or may be the resin layer (R2), but is preferably the resin layer (R2). When the resin layer (S) in the base layer part is the resin layer (S1), the resin layer (S) serving as the surface layer may be the resin layer (S1) or may be the resin layer (S2), but is preferably the resin layer (S2). In this case, the resin layer (R) or the resin layer (S) serving as the surface layer contains not less than 50% by weight of a polyester resin.

In the case of the shrink film thus constituted (shrink film of the present **specification** according to the specific aspect (3), wherein the base layer part comprises a total of 5 to 65 alternate layers of the resin layer (R) and the resin layer (S)), the combination of the resin layer (R) and the resin layer (S) in the base layer part is preferably a layer containing a polyester resin as a main component (preferably further containing a polystyrene resin) and a layer containing a polystyrene resin as a main component (preferably further containing a polyester resin). In this case, the content of the polyester resin in the surface layers is not particularly limited, but is preferably not less than 90% by weight, more preferably not less than 95% by weight, with respect to the gross weight (100% by weight) of the surface layer. The outermost layer of the base layer part is not particularly limited, but is preferably a layer containing a polyester resin as a main component, or a layer containing a polyester resin as a main component and further containing a polystyrene resin.

(Shrink label of present **specification** according to specific aspect (3))

Each of Figures 1 to 3 is a schematic diagram (partial cross-sectional view) showing one example of the shrink label of the present **specification** according to the specific aspect (3). When the base layer part shown in each of Figures 1 to 3 consists of the resin layer (R) or the resin layer (S), it is preferred that each of the surface layers 11 should be the resin layer (S), and the layer A 12a and layer F 12b should be the resin layer (R1) and the resin layer (R2); or each of the surface layers 11 should be the resin layer (R), and the layer A 12a and the layer F 12b should be the resin layer (S1) and the resin layer (S2). When the base layer part consists of the resin layer (R) and the resin layer (S), it is preferred that the layer A 12a and the layer F 12b should be the resin layer (R) and the resin layer (S) or should be the resin layer (S) and the resin layer (R). In this case, each of the surface layers is not particularly limited and may be the resin layer (R), the resin layer (S), or any of other layers without impairing the scope of the present **specification.**

The shrink film of the present **specification** according to the specific aspect (3) comprises at least a laminate structure in which the resin layer (R) and the resin layer (S) are adjacent to each other, the combination of the respective main component resins of the resin layer (R) and the resin layer (S) is a polyester resin and a polystyrene resin, a polyester resin and a polyolefin resin, or a polystyrene resin and a polyolefin resin, and the interlaminar strength in the 180° direction at 90° of the interface formed by the resin layer (R) and the resin layer (S) adjacent to each other is larger than the shrinkage stress at 90°C. This enables the shrink label of the present **specification** according to the specific aspect (3) not to be delaminated even during the shrinking process. In a shrink sleeve label, a seam is often formed by bonding the outer surface of one end portion to the inner surface of the other end portion, and in this case, the other end portion is fixed through the edge thereof to the one end portion at the seam and therefore placed under excessive shrinkage stress during the shrinking process, resulting in delamination from the other end portion. However, in the case of preparing the shrink label of the present **specification** according to the specific aspect (3) into a shrink sleeve label, this shrink label is less likely to be delaminated during the shrinking process because of the higher interlaminar strength in the 180° direction during heating than shrinkage stress. The shrink label of the present **specification** according to the specific aspect (3) therefore eliminates the need of strictly adjusting the conditions of the shrinking process and does not take much time to adjust conditions. Even when the shrink sleeve label is applied to a container or the like through the shrinking process, the shrink film (or the shrink label) can be easily applied to the container or the like without being delaminated.

(Method for producing shrink label of present **specification** according to specific aspect (3))

The shrink label of the present **specification** according to the specific aspect (3) can be produced by using the resin layer (R) and the resin layer (S) adjacently in any of the surface layers, the layer A, and the layer F in the film preparation step. When each of the surface layers is, for example, the resin layer (R), the shrink label of the present **specification** according to the specific aspect (3) can be produced by using a raw material for constituting the resin layer (R) as the raw material (c). When the layer A is, for example, the resin layer (S), the shrink label of the present **specification** according to the specific aspect (3) can be produced by using a raw material for constituting the resin layer (S) as the raw material (a).

<Specific aspect (4)>

The specific aspect (4) illustrates the shrink label of the present **specification,** wherein the base layer part comprises interfaces formed by the layers adjacent to each other, and not less than 3 of the interfaces are interfaces having T-peel strength lower than that between the surface layers and the base layer part (interfaces (L)).

The shrink label of the present **specification** according to the specific aspect (4) is excellent in the drop resistance and tearability of the label by virtue of the aforementioned specific constitution and therefore, is easy to cut off consciously and can be easily separated from the container, in spite of the fact that the label resists rupture by drop impact when the labeled container is dropped.

(Base layer part according to specific aspect (4))

The base layer part according to the specific aspect (4) comprises 5 to 65 layers as layers. The base layer part also comprises interfaces formed by the layers adjacent to each other. Not less than 3 of the interfaces are interfaces having T-peel strength lower than that between the surface layers and the base layer part (interfaces (L)). By virtue of this base layer part, the shrink label of the present **specification** comprising the shrink film of the present **specification** according to the specific aspect (4) can achieve both of excellent drop resistance and tearability.

In the base layer part, the number of interfaces (L) mentioned above is not less than 3, preferably not less than 4, more preferably not less than 5, further preferably not less than 8. The upper limit of the number of interfaces (L) is not particularly limited as long as the number of interfaces (L) is not more than the number of interfaces formed by the layers adjacent to each other in the base layer part. Among others, it is particularly preferred that all of the interfaces formed by the layers adjacent to each other in the base layer part should be the interfaces (L). Since the interfaces (L) have relatively weak T-peel strength in in the shrink film of the present **specification** according to the specific aspect (4), if the base layer part comprises not less than 3 interfaces (L), the tearability of the label is improved, stress attributed by drop impact is spread to these interfaces and thereby relieved when the shrink film is dropped, and drop resistance is also improved. Since the base layer part comprises multiple layers, the label is less likely to be delaminated even if the interfaces formed by the layers adjacent to each other in the base layer part have relatively weak T-peel strength.

The T-peel strength of the interfaces (L) is not particularly limited, but is preferably 0.1 to 1.5 N, more preferably 0.1 to 1.0 N, further preferably 0.2 to 0.8 N. The T-peel strength of not less than 0.1 N (particularly, not less than 0.2 N) is preferred because delamination within the base layer part at ordinary temperature can be suppressed. The T-peel strength of not more than 1.5 N (particularly, not more than 1.0 N) is preferred because the spreadability of the stress on the label is improved so that the label has much better drop resistance.

The T-peel strength between the surface layers and the base layer part is not particularly limited, but is preferably more than 0.8 N, more preferably more than 0.9 N, further preferably more than 1 N. The upper limit of the T-peel strength is not particularly limited, but is preferably not more than 10 N, more preferably not more than 8 N. The T-peel strength of more than 0.8 N is preferred because the delamination between the surface layers and the base layer part can be suppressed. The T-peel strength of not more than 10 N is preferred because stress can be prevented from being excessively spread into the base layer part, and the delamination within the base layer part can be suppressed.

(Constitution, physical properties, etc., of shrink film of present **specification** according to specific aspect (4))

The shrink film of the present **specification** according to the specific aspect (4) is not particularly limited as long as not less than 3 of the interfaces formed by the layers adjacent to each other in the base layer part are the interfaces (L). In order to obtain such a shrink film of the present **specification,** specifically, it is possible to decrease the T-peel strength of the interfaces formed by the layers adjacent to each other in the base layer part and to increase the T-peel strength between the outermost layers of the base layer part and the surface layers. However, the lower limit of the T-peel strength of the interfaces formed by the layers adjacent to each other in the base layer part needs to be set such that delamination does not occur at ordinary temperature when the film is placed under stress.

Examples of the specific aspect for decreasing the T-peel strength of the interfaces formed by the layers adjacent to each other in the base layer part and preventing delamination include the presence of a specific interface in the base layer part, wherein the specific interface is one of the interfaces (L). Specifically, it is preferred, without particular limitations, that the base layer part should comprise at least two specific resin layers (e.g., resin layer (T) and resin layer (U)) as the layers and comprise an interface formed by the resin layer (T) and the resin layer (U) adjacent to each other (laminated directly), and the interface should be one of the interfaces (L). In the present specification, the interface formed by the resin layer (T) and the resin layer (U) adjacent to each other is also referred to as "interface [T/U]".

When the base layer part comprises a plurality of resin layers (T), of a plurality of resin layers (T), all layers or some layers may be the same layers or may be layers different from each other (layers differing in resin composition constituting each layer or in layer thickness). Likewise, when the base layer part comprises a plurality of resin layers (U), of a plurality of resin layers (U), all layers or some layers may be the same layers or may be layers different from each other (layers differing in resin composition constituting each layer or in layer thickness). The resin layer (T) and the resin layer (U) are layers different from each other and are layers differing in the types of their respective main component resins.

The combination of the respective main component resins of the resin layer (T) and the resin layer (U) is not particularly limited, but is preferably a polyester resin and a polystyrene resin, a polyester resin and a polyolefin resin, or a polystyrene resin and a polyolefin resin from the viewpoint of to be the interfaces (L). Among them, the combination of the polyester resin and the polyolefin resin is preferably a polyester resin and a polyethylene resin, or a polyester resin and a polypropylene resin, more preferably a polyester resin and a polyethylene resin. Among them, the combination of the polystyrene resin and the polyolefin resin is preferably a polystyrene resin and a polypropylene resin.

In the shrink film of the present **specification** according to the specific aspect (4), each of the resin layer (T) and the resin layer (U) is any of the layer A and the layer E. The interface [T/U] may be the interface [P/Q] or may be the interface [R/S]. Specifically, the resin layer (T) or the resin layer (U) containing a polyester resin as a main component is the layer E containing the polyester resin as a main component. The resin layer (T) or the resin layer (U) containing a polystyrene resin as a main component is the layer A or the layer E containing the polystyrene resin as a main component. The resin layer (T) or the resin layer (U) containing a polyolefin resin as a main component is the layer E containing the polyolefin resin as a main component.

The resin layer (T) and the resin layer (U) are not particularly limited, but may each contain, in addition to the main component resin, a resin different from the type of the main component resin, such as a polyester resin, a polystyrene resin, a polyolefin resin, a vinyl chloride resin, a polycarbonate resin, a polyamide resin, or a thermoplastic elastomer. When the resin layer (T) and/or the resin layer (U) contain a resin other than the main component resin, among them, the resin other than the main component resin in the resin layer (T) is preferably the main component resin of the resin layer (U), and the resin other than the main component resin in the resin layer (U) is preferably the main component resin of the resin layer (T), from the viewpoint of the T-peel strength between the resin layer (T) and the resin layer (U). The content of the resin other than the main component resin is not particularly limited, but is preferably 5 to 45% by weight, more preferably 10 to 40% by weight, further preferably 15 to 35% by weight, with respect to the whole layer.

The combination of the resin layer (T) and the resin layer (U) is the combination of a layer containing a polyester resin as a main component and a layer containing a polystyrene resin as a main component and, specifically, is particularly preferably the combination of: a layer containing not less than 50% by weight of a polyester resin with respect to the whole layer and containing 5 to 45% by weight of a polystyrene resin with respect to the whole layer, and a layer containing not less than 90 % by weight of a polystyrene resin with respect to the whole layer; a layer containing not less than 50% by weight of a polystyrene resin with respect to the whole layer and containing 5 to 45% by weight of a polyester resin with respect to the whole layer, and a layer containing not less than 90% by weight of a polyester resin with respect to the whole layer; or a layer containing not less than 50% by weight of a polyester resin with respect to the whole layer and containing 5 to 45% by weight of a polystyrene resin with respect to the whole layer, and a layer containing not less than 50% by weight of a polystyrene resin with respect to the whole layer and containing 5 to 45% by weight of a polyester resin with respect to the whole layer. In this case, each of the surface layers is not particularly limited, but preferably contains a polystyrene resin or a polyester resin as a main component and comprises a content of the main component resin of preferably not less than 90% by weight, more preferably not less than 95% by weight, with respect to the gross weight (100% by weight) of the surface layer.

In the shrink film of the present **specification** according to the specific aspect (4), the T-peel strength between the surface layers and the base layer part is higher than that of the interfaces (L). In order to obtain such a shrink film of the present **specification,** it is preferred that the T-peel strength between the surface layers and the base layer part should be higher, and specifically, it is possible to increase the T-peel strength between the outermost layers of the base layer part and the surface layers. Examples of the specific aspect therefor include use of specific layers that give high T-peel strength as the outermost layers of the base layer part and the surface layers.

In the shrink film of the present **specification** according to the specific aspect (4), each outermost layer of the base layer part is not particularly limited, but is preferably a layer comprising a polyester resin as a main component, which is the same resin as the type of the main component resin of the surface layers, from the viewpoint of the higher T-peel strength between the surface layers and the base layer part.

The base layer part according to the specific aspect (4) preferably consists of the resin layer (T) and the resin layer (U). In this case, at least one of the resin layer (T) and the resin layer (U) is the layer A. In the base layer part, the resin layer (T) and the resin layer (U) are not particularly limited, but are preferably alternately laminated directly without the mediation of other layers. Specifically, the base layer part particularly preferably comprises a total of 5 to 65 alternate layers of the resin layer (T) and the resin layer (U) as the layers.

In the base layer part according to the specific aspect (4), the laminate structure of the base layer part is not particularly limited, but is, specifically, preferably a laminate structure in which a repeat unit "resin layer (T)/resin layer (U)" is repeated (resin layer (T)/resin layer (U)/resin layer (T)/resin layer (U)/ .... /resin layer (T)/resin layer (U)/resin layer (T)), (resin layer (U)/resin layer (T)/resin layer (U)/resin layer (T)/ .... /resin layer (U)/resin layer (T)/resin layer (U)), (resin layer (T)/resin layer (U)/resin layer (T)/resin layer (U)/ .... /resin layer (T)/resin layer (U)), or (resin layer (U)/resin layer (T)/resin layer (U)/resin layer (T)/ .... /resin layer (U)/resin layer (T)) without the mediation of other layers. The outermost layers on both sides of the base layer part may each be the resin layer (T) or the resin layer (U).

In the base layer part, it is preferred, without particular limitations, that all of the resin layers (T) should be made of the same raw material, and it is also preferred that all of the resin layers (U) should be made of the same raw material. Specifically, it is preferred that each the resin layers (T) and the resin layers (U) should be made of the same raw materials. Particularly, it is preferred that all of the resin layers (T) should be layers with the same composition, and it is also preferred that all of the resin layers (U) should be layers with the same composition.

In the shrink film of the present **specification** according to the specific aspect (4), the interlaminar strength in the 180° direction at 90°C of the interface [T/U] is not particularly limited, but is preferably not less than 2 N, more preferably not less than 3 N, further preferably not less than 4 N. The upper limit of the interlaminar strength in the 180° direction at 90°C is not particularly limited, but is preferably 10 N, more preferably 8 N. If the interlaminar strength in the 180° direction at 90°C is not less than 2 N, delamination can be prevented even during the shrinking process. When a plurality of interfaces [T/U] are present in the shrink film of the present **specification,** the interlaminar strength in the 180° direction at 90°C is not less than 2 N at all of the interfaces [T/U]. When a plurality of identical interfaces [T/U] are present in the shrink film, the interlaminar strength in the 180° direction at 90°C may be regarded as being the same among the identical interfaces [T/U].

In the shrink film of the present **specification** according to the specific aspect (4), the interlaminar strength in the 180° direction at ordinary temperature of the interface [T/U] is not particularly limited, but is preferably less than 1 N, more preferably not more than 0.9 N, more preferably not more than 0.8 N. The lower limit of the interlaminar strength in the 180° direction at ordinary temperature is not particularly limited, but is preferably more than 0 N, more preferably not less than 0.1 N, further preferably not less than 0.2 N. If the interlaminar strength in the 180° direction at ordinary temperature is less than 1 N, the interlaminar strength at ordinary temperature of the interface [T/U] is not too strong, and the shrink film is softened so that the tearability of the label is improved. When a plurality of interfaces [T/U] are present in the shrink film of the present **specification,** the interlaminar strength in the 180° direction at ordinary temperature is more than 0 N and less than 1 N at all of the interfaces [T/U]. When a plurality of identical interfaces [T/U] are present in the shrink film, the interlaminar strength in the 180° direction at ordinary temperature may be regarded as being the same among the identical interfaces [T/U].

The interlaminar strength in the 180° direction at ordinary temperature and the interlaminar strength in the 180° direction at 90°C can be adjusted by, for example, the composition of raw materials constituting the resin layer (T) or the resin layer (U), the physical properties of the raw materials, or film production conditions (e.g., extrusion temperature, stretching temperature, and stretch ratio).

(Shrink label of present **specification** according to specific aspect (4))

Each of Figures 1 to 3 is a schematic diagram (partial cross-sectional view) showing one example of the shrink label of the present **specification** according to the specific aspect (4). When the base layer part shown in each of Figures 1 to 3 consists of the resin layer (T) and the resin layer (U), it is preferred that the layer A 12a and the layer F 12b should be the resin layer (T) and the resin layer (U) or should be the resin layer (U) and the resin layer (T).

(Method for producing shrink label of present **specification** according to specific aspect (4))

The shrink label of the present **specification** according to the specific aspect (4) can be produced by using the resin layer (T) and the resin layer (U) in any of the layer A and the layer F in the film preparation step. When the layer A is, for example, the resin layer (T), the shrink label of the present **specification** according to the specific aspect (4) can be produced by using a raw material for constituting the resin layer (T) as the raw material (a). When the layer F is, for example, the resin layer (U), the shrink label of the present **specification** according to the specific aspect (4) can be produced by using a raw material for constituting the resin layer (U) as the raw material (f).

The shrink film of the present **specification** according to the specific aspect (4) comprises a base layer part comprising 5 to 65 layers as layers, and surface layers disposed on both sides of the base layer part, wherein the base layer part comprises interfaces formed by the layers adjacent to each other, and not less than 3 of the interfaces are interfaces having T-peel strength lower than that between the surface layers and the base layer part (interfaces (L)). This enables the shrink label of the present **specification** according to the specific aspect (4) to have high strength, to resist rupture by impact when the labeled container is dropped, and to be easily teared consciously in the vertical direction. This is presumably because stress to tear the label, generated by impact when the labeled container is dropped, is transferred and distributed to stress to separate a plurality of interfaces (L) having low T-peel strength in the base layer part so that the stress is prevented from concentrating on one site. Since a larger number of the interfaces (L) permit wider distribution of the stress to tear the label, the resulting label has high strength, which can in turn compensate for resistance to drop. Although the drop impact does not concentrate on the stress to tear the label, the label can be easily teared consciously in the vertical direction because the stress concentrates on the tearing site.

<Specific aspect (5)>

The specific aspect (5) illustrates the shrink label of the present **specification,** wherein the shrink film comprises at least a laminate structure in which a resin layer (R) and a resin layer (S) are adjacent to each other, the combination of the respective main component resins of the resin layer (R) and the resin layer (S) is a polyester resin and a polystyrene resin, a polyester resin and a polyolefin resin, or a polystyrene resin and a polyolefin resin, the interlaminar strength at 90°C of an interface formed by the resin layer (R) and the resin layer (S) adjacent to each other is not less than 2 N, and the interlaminar strength at ordinary temperature of the interface formed by the resin layer (R) and the resin layer (S) adjacent to each other is less than 1 N.

The shrink label of the present **specification** according to the specific aspect (5) is much less likely to be delaminated even during the shrinking process by virtue of the aforementioned specific constitution and therefore eliminates the need of strictly adjusting the conditions of the shrinking process and thus, does not take much time to adjust conditions. Even when a shrink sleeve label is applied to a container or the like through the shrinking process, the shrink label can be easily applied to the container or the like without being delaminated of the shrink film (or the shrink label).

In addition, the shrink label of the present **specification** according to the specific aspect (5) is excellent in the drop resistance and tearability of the label and therefore, is easy to cut off consciously and can be easily separated from the container, in spite of the fact that the label resists rupture by drop impact when the labeled container is dropped.

In the shrink film of the present **specification** according to the specific aspect (5), the interlaminar strength in the 180° direction at 90°C of the interface formed by the resin layer (R) and the resin layer (S) adjacent to each other (interface [R/S]) is not less than 2 N, preferably not less than 3 N, more preferably not less than 4 N. The upper limit of the interlaminar strength in the 180° direction at 90°C is not particularly limited, but is preferably 10 N, more preferably 8 N. If the interlaminar strength in the 180° direction at 90°C is not less than 2 N, delamination can be prevented even during the shrinking process. When a plurality of interfaces [R/S] are present in the shrink film of the present **specification** according to the specific aspect (5), the interlaminar strength in the 180° direction at 90°C is not less than 2 N at all of the interfaces [R/S]. When a plurality of identical interfaces [R/S] are present in the shrink film according to the specific aspect (5), the interlaminar strength in the 180° direction at 90°C may be regarded as being the same among the identical interfaces [R/S].

In the shrink film of the present **specification** according to the specific aspect (5), the interlaminar strength in the 180° direction at ordinary temperature of the interface formed by the resin layer (R) and the resin layer (S) adjacent to each other is less than 1 N, preferably less than 0.8 N. The lower limit of the interlaminar strength in the 180° direction at ordinary temperature is more than 0 N, preferably not less than 0.1 N, more preferably not less than 0.2 N. If the interlaminar strength in the 180° direction at ordinary temperature is less than 1 N, the interlaminar strength at ordinary temperature of the interface [R/S] is not too strong, and the shrink film is softened so that the tearability of the label is improved. When a plurality of interfaces [R/S] are present in the shrink film of the present **specification** according to the specific aspect (5), the interlaminar strength in the 180° direction at ordinary temperature is more than 0 N and less than 1 N at all of the interfaces [R/S]. In the specific aspect (5), when a plurality of identical interfaces [R/S] are present in the shrink film, the interlaminar strength in the 180° direction at ordinary temperature may be regarded as being the same among the identical interfaces [R/S].

The interlaminar strength in the 180° direction at ordinary temperature and the interlaminar strength in the 180° direction at 90°C can be adjusted by, for example, the composition of raw materials constituting the resin layer (R) or the resin layer (S), the physical properties of the raw materials, or film production conditions (e.g., extrusion temperature, stretching temperature, and stretch ratio).

In the shrink film of the present **specification** according to the specific aspect (5), each of the resin layer (R) and the resin layer (S) is any of the surface layers and the layers in the base layer part (layer A and layer E). In the specific aspect (5), among others, the resin layer (R) and the resin layer (S) are preferably the resin layer (R) and the resin layer (S) listed and described above in the specific aspect (3). Among others, the combination of the respective main component resins of the resin layer (R) and the resin layer (S) is preferably a polyester resin and a polystyrene resin, or a polystyrene resin and a polyolefin resin, particularly preferably a polyester resin and a polystyrene resin from the viewpoint of label tearability. The resin layer (R) and the resin layer (S) may be the resin layer (P) and the resin layer (Q) or may be the resin layer (T) and the resin layer (U).

In the specific aspect (5), among others, the polystyrene resin that may be contained in the resin layer (R) or the resin layer (S) is preferably a styrene-diene copolymer. The content of the constitutional unit derived from the styrene monomer in the styrene-diene copolymer is not particularly limited, but is preferably 50 to 95% by weight, more preferably 60 to 90% by weight, further preferably 70 to 90% by weight, with respect to the gross weight (100% by weight) of all styrene-diene copolymers in the resin layer (R) or the resin layer (S). On the other hand, the content of the constitutional unit derived from the diene is not particularly limited, but is preferably 5 to 50% by weight, more preferably 10 to 40% by weight, further preferably 10 to 30% by weight, with respect to the gross weight (100% by weight) of all styrene-diene copolymers in the resin layer (R) or the resin layer (S). The content of the constitutional unit derived from the styrene monomer of not less than 50% by weight (i.e., the content of the constitutional unit derived from the diene of not more than 50% by weight) is preferred because the drop resistance of the label is further improved. The content of the constitutional unit derived from the styrene monomer of not more than 95% by weight (i.e., the content of the constitutional unit derived from the diene of not less than 5% by weight) is preferred because the tearability of the label is further improved.

It is preferred, without particular limitations, that at least one of the resin layer (R) and the resin layer (S) should contain not less than 25% by weight (with respect to the whole layer) of a styrene-conjugated diene copolymer in which the content of the constitutional unit derived from the conjugated diene is 20 to 50% by weight (specific styrene-conjugated diene copolymer). At least one of the resin layer (R) and the resin layer (S) containing not less than 25% by weight of the specific styrene-conjugated diene copolymer with respect to the whole layer is preferred because the interlaminar strength in the 180° direction at 90°C of the interface [R/S] tends to be higher than the interlaminar strength in the 180° direction at ordinary temperature.

The content of the constitutional unit derived from the conjugated diene in the specific styrene-conjugated diene copolymer is not particularly limited, but is more preferably 20 to 45% by weight, further preferably 20 to 40% by weight, with respect to the gross weight (100% by weight) of the styrene-conjugated diene copolymer. On the other hand, the content of the constitutional unit derived from the styrene monomer in the specific styrene-conjugated diene copolymer is not particularly limited, but is more preferably 50 to 80% by weight, further preferably 55 to 80% by weight, particularly preferably 60 to 80% by weight, with respect to the gross weight (100% by weight) of the styrene-conjugated diene copolymer. The content of the constitutional unit derived from the conjugated diene of not less than 20% by weight is preferred because the layer containing the specific styrene-conjugated diene copolymer can secure given flexibility so that the film tends to have an adequate range of the interlaminar strength in the 180° direction at ordinary temperature and have further improved interlaminar strength in the 180° direction at 90°C. It is also preferred because the tearability of the label is improved. The content of the constitutional unit derived from the conjugated diene of not more than 50% by weight is preferred because the layer containing the specific styrene-conjugated diene copolymer can be prevented from having excessive softness resulting in the reduced drop resistance of the label and can be prevented from reducing the interlaminar strength in the 180° direction at 90°C.

(Constitution, physical properties, etc., of shrink film of present **specification** according to specific aspect (5))

When the shrink- film of the present **specification** according to the specific aspect (5) comprises a plurality of resin layers (R), of a plurality of resin layers (R), all layers or some layers may be the same layers or may be layers different from each other (layers differing in resin composition constituting each layer or in layer thickness). Likewise, when the shrink film of the present **specification** comprises a plurality of resin layers (S), of a plurality of resin layers (S), all layers or some layers may be the same layers or may be layers different from each other (layers differing in resin composition constituting each layer or in layer thickness).

The number of interfaces [R/S] mentioned above in the shrink film of the present **specification** according to the specific aspect (5) is, inevitably, not less than 1, preferably not less than 2, more preferably not less than 3, further preferably not less than 4.

The shrink film of the present **specification** according to the specific aspect (5) comprises at least a laminate structure in which the resin layer (R) and the resin layer (S) are adjacent to each other. The laminate structure may be, for example, a 2-layer structure "resin layer (R)/resin layer (S)" or may be a 3-layer structure "resin layer (R)/resin layer (S)/resin layer (R)" or "resin layer (S)/resin layer (R)/resin layer (S)" or a laminate structure comprising not less than 4 alternate layers of the resin layer (R) and the resin layer (S) adjacent to each other.

The constitution of the shrink film of the present **specification** according to the specific aspect (5) is preferably the constitution of the shrink film of the present **specification** according to the specific aspect (3) listed and described above.

(Shrink label of present **specification** according to specific aspect (5))

Each of Figures 1 to 3 is a schematic diagram (partial cross-sectional view) showing one example of the shrink label of the present **specification** according to the specific aspect (5). When the base layer part shown in each of Figures 1 to 3 consists of the resin layer (R) or the resin layer (S), it is preferred that each of the surface layers 11 should be the resin layer (S), and the layer A 12a and layer F 12b should be the resin layer (R1) and the resin layer (R2); or each of the surface layers 11 should be the resin layer (R), and the layer A 12a and the layer F 12b should be the resin layer (S1) and the resin layer (S2). When the base layer part consists of the resin layer (R) and the resin layer (S), it is preferred that the layer A 12a and the layer F 12b should be the resin layer (R) and the resin layer (S) or should be the resin layer (S) and the resin layer (R). In this case, each of the surface layers is not particularly limited and may be the resin layer (R), the resin layer (S), or any of other layers without impairing the scope of the present **specification.**

The shrink film of the present **specification** according to the specific aspect (5) comprises at least a laminate structure in which the resin layer (R) and the resin layer (S) are adjacent to each other, and the combination of the respective main component resins of resin layer (R) and the resin layer (S) is a polyester resin and a polystyrene resin, a polyester resin and a polyolefin resin, or a polystyrene resin and a polyolefin resin. Furthermore, the interlaminar strength at 90°C of the interface formed by the resin layer (R) and the resin layer (S) adjacent to each other is not less than 2 N, whereby the shrink label of the present **specification** according to the specific aspect (5) can have high interlaminar strength in the 180° direction at 90°C without reduction in drop resistance, thereby more preventing delamination during the shrinking process than ever. Also, the interlaminar strength in the 180° direction at ordinary temperature is more than 0 N and less than 1 N, thereby improving the drop resistance and tearability of the label. This is presumably, albeit not surely, because if the interlaminar strength in the 180° direction at ordinary temperature falls within the aforementioned range, stress attributed by the drop of the label is distributed to delamination force to prevent the breakage of the label, whereas stress to tear the label is moderately applied without being spread to the bonded layers to achieve easy tearing of the layers. The shrink label of the present **specification** according to the specific aspect (5) therefore eliminates the need of strictly adjusting the conditions of the shrinking process and does not take much time to adjust conditions. Even when a shrink sleeve label is applied to a container or the like through the shrinking process, the shrink label can be easily applied to the container or the like without being delaminated of the shrink film (or the shrink label). In addition, the shrink label of the present **specification** according to the specific aspect (5) is excellent in the drop resistance and tearability of the label and therefore, is easy to cut off consciously and can be easily separated from the container, in spite of the fact that the label resists rupture by drop impact when the labeled container is dropped.

(Method for producing shrink label of present **specification** according to specific aspect (5))

The shrink label of the present **specification** according to the specific aspect (5) can be produced by using the resin layer (R) and the resin layer (S) in any of the surface layers, the layer A, and the layer F in the film preparation step. When each of the surface layers is, for example, the resin layer (R), the shrink label of the present **specification** according to the specific aspect (5) can be produced by using a raw material for constituting the resin layer (R) as the raw material (c). When the layer A is, for example, the resin layer (S), the shrink label of the present **specification** according to the specific aspect (5) can be produced by using a raw material for constituting the resin layer (S) as the raw material (a).

<Specific aspect (6) and specific aspect (7)>

The specific aspect (6) illustrates the shrink label of the present invention, wherein the base layer part comprises at least a layer containing not less than 50% by weight of a polyester resin (layer B) as the layers.

The shrink label of the present invention according to the specific aspect (6) is excellent in the drop resistance and tearability of the label and has high stiffness by virtue of the aforementioned specific constitution, and therefore, is easy to cut off consciously and can be easily separated from the container, in spite of the fact that the label resists rupture by drop impact when the labeled container is dropped.

The specific aspect (7) illustrates the shrink label of the present invention, wherein the base layer part comprises at least 3 layers of the layer B as the layers.

The shrink label of the present invention according to the specific aspect (7) has relatively high compressive strength of the label by virtue of the aforementioned specific constitution and can therefore prevent defects responsible for poor application upon application of the label to a bottle using a labeler. The shrink label of the present invention is also excellent in the tearability of the label by virtue of the aforementioned specific constitution and therefore, can be teared for consciously cutting off the label and easily separated from the container.

(Base layer part according to specific aspect (6) or specific aspect (7))

In the specific aspect (6), the base layer part in the shrink film of the present invention comprises 5 to 65 layers as layers. The base layer part comprises at least a layer containing not less than 50% by weight of a polyester resin (layer B) as the layers. Specifically, the base layer part comprises at least the layer A and the layer B as the layers. By virtue of this base layer part, the shrink label of the present invention comprising the shrink film of the present invention according to the specific aspect (6) can achieve both of excellent drop resistance and tearability and have increased stiffness.

In the specific aspect (7), the base layer part in the shrink film of the present invention comprises at least 3 layers of the layer B as the layers. The base layer part comprises a large number of layers and further comprises not less than 3 layers each containing a polyester resin, which is a relatively hard resin, as a main component, whereby the shrink label of the present invention according to the specific aspect (7) has relatively high compressive strength. By virtue of this base layer part comprising a large number of layers, the label is also excellent in tearability because the thickness of each layer in the base layer part can be decreased.

In the shrink label of the present invention according to the specific aspect (6) or the specific aspect (7), the layer containing not less than 50% by weight of a polyester resin, comprised in the base layer part, is also referred to as "layer B". When the shrink film of the present invention according to the specific aspect (6) or the specific aspect (7) comprises a plurality of layers B, of a plurality of layers B, all layers or some layers may be the same layers or may be layers different from each other (layers differing in resin composition constituting each layer or in layer thickness) within the scope of the layer B defined by the present application. The layer A and the layer B are layers different from each other. The base layer part may comprise a layer other than the layer A and the layer B (layer E other than the layer B) without impairing the effects of the present invention, but most preferably consists of the layer A and the layer B without comprising the layer E other than the layer B. The layer E other than the layer B may be contained, for example, between the layer A and the layer B, between the layers A, between the layers B, or as each outermost layer of the base layer part.

(Layer B according to specific aspect (6) or specific aspect (7))

The layer B is a layer in the base layer part and is a layer other than the layer A (layer E), and this layer is a layer containing not less than 50% by weight of a polyester resin. By the layer multiplication of the base layer part comprising the layer B, the shrink label of the present invention according to the specific aspect (6) is excellent in drop resistance and has high stiffness.

The layer B contains a polyester resin as an essential component. Only one type may be used as the polyester resin, or not less than two polyester resins may be used. The layer B is not particularly limited, but may also contain a resin other than the polyester resin.

Among others, the polyester resin contained in the layer B is preferably an aromatic polyester resin from the viewpoint of stiffness, drop resistance, shrinkage properties, compressive strength, and heat resistance. The aromatic polyester resin is further preferably a polymer or a copolymer prepared by the condensation reaction between a dicarboxylic acid containing an aromatic dicarboxylic acid and a diol containing an aliphatic diol, or a mixture thereof.

The aromatic polyester resin is not constituted by single repeat units, but is preferably, without particular limitations, a modified aromatic polyester resin containing a modifying component (copolymerization component) from the viewpoint of stretching properties, shrinkage properties, and label tearability. The modified aromatic polyester resin is preferably, for example, a modified aromatic polyester resin in which at least one of the dicarboxylic acid component and the diol component is constituted by not less than 2 components, i.e., contains a modifying component in addition to the main component.

Among those described above, preferred examples of the modified aromatic polyester resin include modified PET in which a portion of the dicarboxylic acid component and/or the diol component in polyethylene terephthalate (PET) containing terephthalic acid as the dicarboxylic acid component and ethylene glycol (EG) as the diol component has been replaced with a modifying component (i.e., an additional dicarboxylic acid component and/or an additional diol component).

Examples of the dicarboxylic acid component used as the modifying component (copolymerization component) in the modified aromatic polyester resin (particularly, modified PET) include cyclohexanedicarboxylic acid, adipic acid, and isophthalic acid. Among them, isophthalic acid is preferred. Also, CHDM or 2,2-dialkyl-1,3-propanediol (particularly, NPG) is preferred as the diol component used as the modifying component. Each of the alkyl groups in the 2,2-dialkyl-1,3-propanediol is preferably an alkyl group having 1 to 6 carbon atoms, and these two alkyl groups may be the same alkyl groups or may be different alkyl groups.

The polyester resin is not particularly limited, but is, specifically, preferably polyethylene terephthalate (PET) containing terephthalic acid as the dicarboxylic acid component and ethylene glycol (EG) as the diol component, CHDM-copolymerized PET, or 2,2-dialkyl-1,3-propanediol-copolymerized PET from the viewpoint of shrinkage properties and label tearability. The 2,2-dialkyl-1,3-propanediol-copolymerized PET is particularly preferably NPG-copolymerized PET. The aromatic polyester resin is particularly preferably CHDM-copolymerized PET and/or 2,2-dialkyl-1,3-propanediol-copolymerized PET, further preferably CHDM-copolymerized PET and/or NPG-copolymerized PET, most preferably CHDM-copolymerized PET.

In the modified aromatic polyester resin, the copolymerization ratio of the copolymerization component (modifying component) [ratio (proportion) of the copolymerizable dicarboxylic acid component to the whole dicarboxylic acid component, or ratio (proportion) of the copolymerizable diol component to the whole diol component] is not particularly limited, but is preferably not less than 10% by mol (e.g., 10 to 40% by mol), more preferably not less than 15% by mol (e.g., 15 to 40% by mol), from the viewpoint of optimizing the ther mode formational behavior of the layers and reducing delamination. Among them, the proportion of CHDM, for example, in the case of the CHDM-copolymerized PET, is preferably 10 to 30% by mol (70 to 90% by mol of EG), more preferably 12 to 25% by mol (75 to 88% by mol of EG), in the whole diol component. The proportion of 2,2-dialkyl-1,3-propanediol, in the case of the 2,2-dialkyl-1,3-propanediol-copolymerized PET (the proportion of NPG, in the case of the NPG-copolymerized PET) is preferably 10 to 30% by mol (70 to 90% by mol of EG) in the whole diol component.

The aromatic polyester resin is not particularly limited, but is preferably a substantially amorphous aromatic polyester resin, more preferably an aromatic polyester resin that is an amorphous saturated polyester resin. The aromatic polyester resin is not particularly limited, but can be rendered substantially amorphous, for example, by modification, because the aromatic polyester resin is modified as mentioned above and thereby becomes difficult to crystalize. The aromatic polyester resin thus rendered amorphous can be extruded at a relatively low temperature. This can enhance the layer formability of the layers during the extrusion process, thereby improving the shrinkage properties of the shrink label. This can also improve the tearability of the label.

The crystallinity of the polyester resin measured by a differential scanning calorimetry (DSC) method (measured at a rate of temperature rise of 10°C/min) is not particularly limited, but is preferably not more than 15%, more preferably not more than 10%. The polyester resin is most preferably a polyester resin that exhibits almost no melting point (melting peak) (i.e., crystallinity of 0%) when measured by the DSC method.

The weight-average molecular weight (Mw) of the polyester resin is not particularly limited, but is preferably 15,000 to 100,000, more preferably 30,000 to 90,000, further preferably 30,000 to 80,000, from the viewpoint of melting behavior and shrinkage behavior. The weight-average molecular weight of the 2,2-dialkyl-1,3-propanediol-copolymerized PET is particularly preferably 50,000 to 70,000.

The glass transition temperature (Tg) of the polyester resin is not particularly limited, but is preferably 60 to 80°C, more preferably 60 to 75°C, from the viewpoint of stretching properties and shrinkage properties. The Tg can be controlled by the type of the dicarboxylic acid, the diol, or the like constituting the polyester resin, or the copolymerization ratio of the copolymerization component (modifying component) used in modification.

The content of the polyester resin in the layer B is not less than 50% by weight, preferably not less than 70% by weight, more preferably not less than 90% by weight, with respect to the gross weight (100% by weight) of the layer B. The upper limit of the content may be 100% by weight. If the content is less than 50% by weight, the effect of improving stiffness or drop resistance is not obtained. In addition, the effect of improving the compressive strength of the label is difficult to obtain. The aforementioned content of the polyester resin is the total content of all polyester resins contained in the layer B.

The layer B is not particularly limited, but may contain a resin other than the polyester resin (additional resin). Examples of the additional resin include the thermoplastic resins listed and described above as examples of the thermoplastic resin that may be contained in the layer E. When the layer B contains the additional resin, a polystyrene resin is preferred, particularly, from the viewpoint of adjusting shrinkage properties and adhesiveness to the layer A. When the layer B contains the additional resin, the content of the additional resin is not more than 50% by weight (e.g., more than 0% by weight and not more than 50% by weight), preferably 5 to 45% by weight, with respect to the gross weight (100% by weight) of the layer B. When the layer B contains the additional resin, the upper limit of the content of the polyester resin in the layer B may be less than 100% by weight and is preferably not more than 95% by weight, more preferably not more than 85% by weight, further preferably not more than 80% by weight.

When the layer B contains the polystyrene resin, the content of the polystyrene resin in the layer B is not particularly limited, but is preferably 15 to 45% by weight, more preferably 20 to 40% by weight, further preferably 25 to 40 by weight, with respect to the gross weight (100% by weight) of the layer B from the viewpoint of adhesiveness to the layer A and shrinkage properties.

(Layer structure, physical properties, etc., of base layer part according to specific aspect (6) or specific aspect (7))

The base layer part according to the specific aspect (6) comprises not less than 1 layer, preferably not less than 2 layers, more preferably not less than 3 layers, further preferably not less than 4 layers, particularly preferably not less than 5 layers, of the layer B as the layers. When the base layer part comprises not less than 3 layers of the layer B as the layers, the specific aspect (6) corresponds to the specific aspect (7). The upper limit of the number of layers mentioned above is not particularly limited, but is preferably not more than 33 layers, more preferably not more than 17 layers. Since the layer B is a layer containing a polyester resin, which is a relatively hard resin, as a main component, by virtue of the base layer part comprising not less than 3 layers of the layer B, the shrink label of the present invention comprising the shrink film of the present invention according to the specific aspect (7) can achieve both of relatively high compressive strength and excellent tearability.

The base layer part is not particularly limited, but preferably comprises not less than two interfaces formed by the layer A and the layer B adjacent to each other (laminated directly). The number of interfaces mentioned above is not particularly limited, but is preferably not less than 2, more preferably not less than 3, further preferably not less than 4, particularly preferably not less than 5. The upper limit of the number of interfaces mentioned above is 64, preferably 32, more preferably 16. The base layer part comprising not less than two interfaces mentioned above is preferred because compressive strength is also improved. The base layer part comprising not less than 3 interfaces mentioned above is preferred because the tearability of the label is improved, stress attributed by drop impact is spread to these interfaces and thereby relieved when the shrink film is dropped, and drop resistance is also improved. Since the base layer part comprises multiple layers, the label is less likely to be delaminated even if the aforementioned interfaces have relatively weak interlaminar strength. In the present specification, the interface formed by the layer A and the layer B adjacent to each other is also referred to as "interface [A/B]".

In the base layer part according to the specific aspect (6) or the specific aspect (7), the layer A can intervene between the layers B, thereby forming an interface in the base layer part and imparting desired functions to the shrink film or the shrink label. The intervention of the layer A between the layers B in the base layer part is preferred, for example, because flexibility can be imparted to the shrink film (or label), and the interlaminar strength between the layers in the base layer part can be improved. It is also preferred because the shrinkage properties of the shrink label are improved, and the tearability of the label is further improved.

The base layer part according to the specific aspect (6) or the specific aspect (7) can comprise at least one layer A between two layers B and, among others, preferably comprises at least a layer structure [layer B/layer A/layer B]. Also, the base layer part preferably comprises not less than two layer structures of [layer B/layer A/layer B] mentioned above (i.e., the layer structures in which the layer A intervenes between the layers B) and preferably comprises the layers A between all of the layers B in the base layer part. When the base layer part comprises not less than two layer structures of [layer B/layer A/layer B], each layer B in these two on more layer structures of [layer B/layer A/layer B] may belong to both of the adjacent layer structures of [layer B/layer A/layer B]. Specifically, two layer structures of [layer B/layer A/layer B] may be, for example, a layer structure [layer B/layer A/layer B/layer A/layer B].

The polyester resin that may be contained in the layer A may be, for example, the same polyester resin as the polyester resin contained in the layer B, or may be a polyester resin different therefrom.

In the base layer part, it is preferred, without particular limitations, that the layer A and the layer B should be alternately laminated, and it is more preferred that the layer A and the layer B should be alternately laminated directly without the mediation of other layers. The base layer part particularly preferably comprises a total of 5 to 65 alternate layers of the layer A and the layer B as the layers.

The base layer part according to the specific aspect (6) can comprise at least one each of the layer A and the layer B, and the base layer part according to the specific aspect (7) can comprise at least 3 layers of the layer B. The laminate structure of the base layer part is not particularly limited, but is, specifically, preferably a laminate structure in which a repeat unit "layer A/layer B" is repeated (layer A/layer B/layer A/layer B/ .... /layer A/layer B/layer A), (layer B/layer A/layer B/layer A/ .... /layer B/layer A/layer B), (layer A/layer B/layer A/layer B/ .... /layer A/layer B), or (layer B/layer A/layer B/layer A/ .... /layer B/layer A) without the mediation of other layers. The outermost layers on both sides of the base layer part may each be the layer A or the layer B.

In the base layer part, it is preferred, without particular limitations, that all of the layers A in the base layer part should be made of the same raw material, and it is also preferred that all of the layers B should be made of the same raw material. Specifically, it is preferred that each the layers A and the layers B should be made of the same raw materials. Particularly, it is preferred that all of the layers A should be layers with the same composition, and it is also preferred that all of the layers B should be layers with the samel composition.

(Constitution, physical properties, etc., of shrink film of present invention according to specific aspect (6) or specific aspect (7))

In the shrink film of the present invention according to the specific aspect (6) or the specific aspect (7), it is preferred, without particular limitations, that each outermost layer of the base layer part should be the layer B, the base layer part and the surface layers should be directly laminated, and the layer B and each of the surface layers should be layers differing in composition from each other. In this case, the layer B serving as the outermost layer of the base layer part and the surface layer are directly laminated, and an interface formed by the layer B and the surface layer adjacent to each other is present. The aforementioned constitution of the shrink film of the present invention is preferred because the strength between the surface layers and the base layer part can be improved to suppress delamination.

The thickness (thickness per layer) of the layer B is not particularly limited, but is preferably not less than 0.2 $\mu$m (e.g., 0.2 to 10 $\mu$m), more preferably not less than 0.3 $\mu$m (e.g., 0.3 to 5 $\mu$m). All or some of the respective thicknesses of a plurality of layers B in the shrink film of the present invention may be the same or may be different from each other. For example, the layers B of the base layer part in contact with the surface layers may each be thinner than each inner layer B (layer B between the layers A) of the base layer part.

The ratio of the thickness of the layer A (total thickness of all of the layers A) to the thickness of the layer B (total thickness of all of the layers B) [(thickness of the layer A) : (thickness of the layer B)] is not particularly limited, but is preferably 10:1 to 1:10, more preferably 8:1 to 1:8, further preferably 5:1 to 1:5. If the layer B is thinner than the ratio of 10:1, thermal shrinkage percentage may be reduced, or an adequate shrinkage rate or stiffness may not be obtained. On the other hand, if the layer A is thinner than the ratio of 1:10, label stiffness may be reduced.

In the specific aspect (7), the proportion of the thickness of the layer B (total thickness of all of the layers B) to the thickness (overall thickness) of the shrink film of the present invention is not particularly limited, but is preferably 10 to 90%, more preferably 15 to 80%, further preferably 20 to 75%. The proportion of not less than 10% is preferred because the compressive strength of the label is further improved. The proportion of not more than 90% is preferred because the tearability of the label is further improved.

In the shrink film of the present invention according to the specific aspect (6) or the specific aspect (7), the interface [P/Q] may be, for example, the interface formed by the layer A and the layer B adjacent to each other (interface [A/B]), or the interface formed by the layer B serving as each outermost layer of the base layer part (when the outermost layer of the base layer part is the layer B) and the surface layer adjacent to each other. In this case, examples of the resin layer (P) and the resin layer (Q) include the layers in the base layer part (e.g., layer A and layer B) and the surface layers.

In the shrink film of the present invention according to the specific aspect (6) or the specific aspect (7), the interface [A/B] is not particularly limited, but is preferably the interface (L). The base layer part preferably comprises interfaces formed by the layer A and the layer B adjacent to each other (interfaces [A/B]), wherein not less than 3 of the interfaces [A/B] are the interfaces (L). Particularly, all of the interfaces [A/B] are preferably the interfaces (L) .

I (Shrink label of present invention according to specific aspect (6) or specific aspect (7))

Each of Figures 1 to 3 is a schematic diagram (partial cross-sectional view) showing one example of the shrink label of the present invention according to the specific aspect (6) or the specific aspect (7). In the shrink label of the present invention shown in each of Figures 1 to 3, the layer F 12b is the layer B.

The shrink film of the present invention according to the specific aspect (6) comprises a base layer part and surface layers disposed on both sides of the base layer part, and each of the surface layers is a layer containing a polyester resin as a main component. The base layer part comprises 5 to 65 layers as layers and comprises, as the layers, layer A containing a polystyrene resin as a main component and layer B containing a polyester resin as a main component. The surface layers contain a polyester resin, which is a relatively hard resin, as a main component, and the base layer part comprises the layer A containing a polystyrene resin, which is a relatively soft resin, as a main component and the layer B containing a polyester resin, which is a relatively hard resin, as a main component, and comprises multiple layers. This enables the shrink label of the present invention according to the specific aspect (6) to have high stiffness, to resist rupture by impact when the labeled container is dropped, and to be easily teared consciously in the vertical direction. This is presumably because stress to tear the label, generated by impact when the labeled container is dropped, is transferred to stress to separate the layers in the base layer part. Since a larger number of the layers in the base layer part permit wider distribution of the stress to tear the label, the resulting label has high strength, which can in turn compensate for resistance to drop. Although the drop impact does not concentrate on the stress to tear the label, the label can be easily teared consciously in the vertical direction because the stress concentrates on the tearing site. Since the shrink film of the present invention according to the specific aspect (6) comprises the base layer part that comprises the layer B containing a polyester resin as a main component and comprises multiple layers, the stiffness of the shrink label of the present invention according to the specific aspect (6) can be increased.

The shrink film of the present invention according to the specific aspect (7) comprises a base layer part comprising 5 to 65 layers as layers, and surface layers disposed on both sides of the base layer part. The base layer part comprises, as the layers, at least 3 layers of the layer B containing a polyester resin as a main component. A shrink label comprising a layer containing a polyester resin as a main component has relatively high compressive strength, whereas the label is hardened and thus tends to have low tearability, to be difficult to cut off from a container or the like, or to be easily ruptured in the stretching direction. However, by virtue of the aforementioned constitution in which the base layer part has a multilayer structure comprising a plurality of layers each containing a polyester resin, which is a relatively hard resin, as a main component, the shrink label of the present invention according to the specific aspect (7) has strong hardness and relatively improved compressive strength even if its thickness is relatively small. In spite of this, the shrink label of the present invention according to the specific aspect (7) can be relatively easily teared in a direction orthogonal to the stretching direction because each layer in the base layer part of the shrink film of the present invention has a small thickness.

(Method for producing shrink label of present invention according to specific aspect (6) or specific aspect (7))

The shrink label of the present invention according to the specific aspect (6) or the specific aspect (7) can be produced by using the layer B as the layer F in the film preparation step. Specifically, the shrink label of the present invention according to the specific aspect (6) or the specific aspect (7) can be produced by using a raw material for constituting the layer B (raw material (b)) as the raw material (f).

Examples

Hereinafter, the present invention will be described in more detail with reference to Examples. However, the present invention is not intended to be limited by these Examples.

Table 1 shows the composition of a raw material for the surface layer (raw material (c)), a raw material for the layer A (raw material (a)), and a raw material for the adhesive resin layer used in Examples 1 to 4 and Comparative Example 1, and the constitutions and evaluation results, etc., of shrink films and shrink labels prepared in these Examples and Comparative Example.

Example 1 (Reference Example)

(Raw material)

The raw material used to constitute layer A (raw material for the layer A) was 80% by weight of polystyrene resin A (manufactured by Styrolution Group GmbH, trade name "STYROLUX S", content of the constitutional unit derived from butadiene: 12% by weight) and 20% by weight of polystyrene resin B (manufactured by Stlyrolution Group GmbH, trade name "STYROLUX T", content of the constitutional unit derived from butadiene: 25% by weight).

The raw material used to constitute an adhesive resin layer (raw material for the adhesive resin layer) was 100% by weight of polystyrene resin C (SBS modified with a modifying agent having a polar group; modified SBS) .

The raw material used to constitute each surface layer (raw material for the surface layer) was 100% by weight of polyester resin A (manufactured by Eastman Chemical Company, trade name "EMBRACE LV").

(Shrink film)

The raw material for the layer A was added to extruder x heated to 220°C, the raw material for the adhesive resin layer was added to extruder y heated to 220°C, and the raw material for the surface layer was added to extruder z heated to 250°C. These 3 extruders were used to carry out melt extrusion. The melted raw material for the layer A and the melted raw material for the adhesive resin layer were split, joined, and laminated with a 2-kind 3-layer structure [raw material for the adhesive resin layer/raw material for the layer A/raw material for the adhesive resin layer] as one repeat unit using a lamination apparatus equipped with a feed block having a 2-kind 3-layer confluence system in combination with a quadrisection multiplier, to prepare laminate (I) (laminate having four 2-kind 3-layer structures mentioned above (the number of repeats: 4)). The melted raw material for the surface layer was joined and laminated on both sides of the laminate (I) using the feed block to prepare laminate (II). The laminate (II) was further extruded from a T-die and then rapidly cooled on a casting drum cooled to 25°C to obtain a laminated unstretched film consisting the surface layers disposed on both sides of the base layer part.

Next, the laminated unstretched film was stretched by tenter stretching 5 times in the width direction at 90°C to obtain a long object of a stretched film (shrink film) stretched mainly in the width direction and having heat shrinkability in the direction.

(Shrink sleeve label)

For the long object of the shrink film thus obtained, a designed print layer and a white background print layer were formed using a gravure printer to obtain a long object of a shrink label. Subsequently, the long object of the shrink label was slit into a predetermined width and then prepared in a tubular form by overlaying one end portion with the other end portion such that the width direction was the circumferential direction. The shrink film surfaces of the one end portion and the other end portion were sealed with a solvent to obtain a tubular long object of the shrink label. Then, the tubular long object of the shrink label (label continuum) was cut into individual label size to obtain a shrink sleeve label.

Reference Examples 2 to 4 and Comparative Example 1

Each shrink film, shrink label, and shrink sleeve label were obtained in the same way as in Example 1 except that, for example, the composition or component ratios of the raw material (a), the raw material for the adhesive resin layer, and the raw material (c), the thickness of each layer or the shrink film, and the total number of layers as the layer A and the adhesive resin layer were changed as shown in Table 1. In this context, the polyester resin B used was trade name "EMBRACE 21214" manufactured by Eastman Chemical Company.

The shrink films prepared in Reference Examples 1 to 4 had an 11-layer structure [surface layer/adhesive resin layer/layer A/adhesive resin layer/layer A/adhesive resin layer/layer A/adhesive resin layer/layer A/adhesive resin layer/surface layer]. Although the base layer part in each of these shrink films were supposed to comprise 12 layers because the repeat units of the 2-kind 3-layer structures were laminated with the number of repeats of 4, the overlapping portions of the raw materials for the adhesive resin layer, in actuality, yielded one layer due to the invisible interface between the layers. The base layer part therefore had a 9-layer structure [adhesive resin layer/layer A/adhesive resin layer/layer A/adhesive resin layer/layer A/adhesive resin layer/layer A/adhesive resin layer], and each outermost layer of the base layer part was the adhesive resin layer. The number of interfaces formed by the layer A and the adhesive resin layer adjacent to each other in the base layer part was 8. In Examples 1 to 4, the adhesive resin layer corresponds to the layer A. The layer A and the adhesive resin layer are layers A differing in raw material composition and therefore, do not serve as one layer A because the interface of [layer A/adhesive resin layer] is visible.

(Evaluation)

The shrink labels obtained in Examples 1 to 4 and Comparative Example 1 were evaluated as described below. The evaluation results are shown in Table 1.

(1) Delamination

Each of the shrink sleeve labels obtained in Reference Examples 1 to 4 and Comparative Example 1 was fitted over a container (280 ml, mayonnaise bottle) and then passed through a steam tunnel of 90°C for the thermal shrinkage of the shrink sleeve label to obtain a labeled container (thermal shrinkage percentage at the container body: 5%). The frequency of delamination was confirmed at n = 10 when the labeled container was dipped for 10 seconds in hot water of 98°C. The delamination was evaluated according to the following criteria:

Good : No delamination occurred in the 10 samples.
Poor : Delamination occurred in not less than one of the 10 samples.

(2) Shrinkability

Each of the shrink sleeve labels obtained in Reference Examples 1 to 4 and Comparative Example 1 was fitted over a container (manufactured by Toyo Seikan Co., Ltd., 500-ml round PET container) and then passed through a steam tunnel of 90°C for the thermal shrinkage of the shrink sleeve label to obtain a labeled container (thermal shrinkage percentage at the container body: 5%). The frequency of occurrence of label creases in the labeled container was confirmed at n = 10. The shrinkability was evaluated according to the following criteria:

Good : No creases occurred in the 10 samples.
Poor : Creases occurred in not less than one of the 10 samples.

(3) Compressive strength (stiffness) (ring crush method)

Evaluation was conducted using the shrink films (before the shrinking process) obtained in Reference Examples 1 to 4 and Comparative Example 1. In accordance with JIS P 8126, the compressive strength of each shrink label was measured under conditions given below. The direction of measurement was the longitudinal direction of the shrink film.

Measurement apparatus: Autograph manufactured by Shimadzu Corp. (AGS-50G: load cell type 500N)
Sample size: 15 mm (longitudinal direction) $\times$ 152.4 mm (width direction: main orientation direction)
The number of tests: 5

(4) Thermal shrinkage percentage

Evaluation was conducted using the shrink films (before the shrinking process) obtained in Examples 1 to 4 and Comparative Example 1. Each shrink film was dipped for 20 seconds in hot water of 90°C, and time-dependent change in thermal shrinkage percentage was measured.

[Table 1]

(Table 1)

| Raw material | | Trade name | Example 1 (Reference) | Comparative Example 1 | Example 2 (Reference) | Example 3 (Reference) | Example 4 (Reference) |
|---|---|---|---|---|---|---|---|
| Content of resin in raw material (c) (surface layer) (% by weight) | Polyester resin A | EMBRACE LV | 100 | 100 | 100 | 100 | 0 |
| | Polyester resin B | EMBRACE 21214 | 0 | 0 | 0 | 0 | 100 |
| Content of resin in raw material (a) (layer A) (% by weight) | Polystyrene resin A | STYROLUX S | 80 | 80 | 54 | 58 | 58 |
| | Polystyrene resin B | STYROLUX T | 20 | 20 | 24 | 22 | 22 |
| | Polyester resin A | -EMBRACE LV | 0 | 0 | 22 | 20 | 0 |
| | Polyester resin B | EMBRACE 21214 | 0 | 0 | 0 | 0 | 20 |
| Content of resin in raw material for adhesive resin layer (adhesive resin layer) (% by weight) | Polystyrene resin B | STYROLUX T | 0 | 0 | 100 | 70 | 70 |
| | Polystyrene resin C | Modified SBS | 100 | 100 | 0 | 0 | 0 |
| | Polyester resin A | EMBRACE LV | 0 | 0 | 0 | 30 | 0 |
| | Polyester resin B | EMBRACE 21214 | 0 | 0 | 0 | 0 | 30 |
| Thickness per layer (μm) | Surface layer | | 7.50 | 7.50 | 4.17 | 4.17 | 4.17 |
| | Layer A | | 1.88 | 7.50 | 1.88 | 1.88 | 1.88 |
| | Adhesive resin layer (between layer A and surface layer)* | | 0.94 | 3.75 | 0.52 | 0.52 | 0.52 |
| Total number of layers as layer A and adhesive resin layer in base layer part (layer) | | | 9 | 3 | 9 | 9 | 9 |

EP 2 977 979 B1

(continued)

| Raw material | Trade name | Example 1 (Reference) | Comparative Example 1 | Example 2 (Reference) | Example 3 (Reference) | Example 4 (Reference) |
|---|---|---|---|---|---|---|
| [(Thickness of surface layer):(Overall thickness of adhesive resin layers / 2):(Overall thickness of layers A):(Overall thickness of adhesive resin layers / 2):(Thickness of surface layer)] | | [2:1:2:1:2] | [2:1:2:1:2] | [2:1:3.6:1:2] | [2:1:3.6:1:2] | [2:1:3.6:1:2] |
| Overall thickness of shrink film ($\mu$m) | | 30 | 30 | 20 | 20 | 20 |
| Delamination | | Good | Good | Good | Good | Good |
| Shrinkability | | Good | Poor | Good | Good | Good |
| Compressive strength (N) (stiffness) | | 3.5 | 2.5 | 1.5 | 1.5 | 1.4 |
| Thermal shrinkage percentage after 0.05 seconds at 90°C (%) | | 0 | 0 | 0 | 0 | - |
| Thermal shrinkage percentage after 0.1 seconds at 90°C (%) | | 9 | 20 | 4 | 6 | - |
| Thermal shrinkage percentage after 0.2 seconds at 90°C (%) | | 41 | 44 | 51 | 53 | - |
| Thermal shrinkage percentage after 1 second at 90°C (%) | | 60 | 62 | 60 | 56 | - |
| Thermal shrinkage percentage after 5 seconds at 90°C (%) | | 68 | 68 | 63 | 60 | - |
| * In Table 1, the thickness of the adhesive resin layer present between the layers A is twice the thickness described in the table. | | | | | | |

EP 2 977 979 B1

As is also evident from Table 1, the shrink label of the present specification according to the specific aspect (1) (Examples 1 to 3) exhibited a slow shrinkage rate as compared with Comparative Example. These shrink labels had large compressive strength and high stiffness and, furthermore, were neither creased nor delaminated during the thermal shrinkage. By contrast, the shrink label in which the total number of layers as the layer A and the adhesive resin layer in the base layer part was 3 layers (Comparative Example 1) exhibited a fast shrinkage rate and was creased during the thermal shrinkage, as compared with the shrink labels of the present specification according to the specific aspect (1).

Table 2 shows the composition of a raw material for the surface layer (raw material (c)), a raw material for the layer A (raw material (a)), and a raw material for the adhesive resin layer used in Example 5 and Comparative Example 2, and the constitutions and evaluation results, etc., of shrink films and shrink labels prepared in Example 5 and Comparative Example 2.

(Preparation example of solvent drying-type ink)

The binder resins used were 2 parts by weight of a urethane acrylic resin solution (manufactured by Taisei Fine Chemical Co., Ltd., trade name "ACRIT 8UA-140", nonvolatile matter concentration: 40% by weight, containing 60% by weight of a mixed solvent of ethyl acetate (99% by weight) and isopropyl alcohol (1% by weight) as volatile matter), 10 parts by weight of an acrylic resin (manufactured by Mitsubishi Rayon Co., Ltd., trade name "DIANAL BR-113", nonvolatile matter concentration: 100% by weight), 2 parts by weight of an acrylic resin (manufactured by Mitsubishi Rayon Co., Ltd., trade name "DIANAL BR-116", nonvolatile matter concentration: 100% by weight), and 0.5 parts by weight of a cellulose resin (manufactured by Eastman Chemical Company, trade name "CAB-381-20", nonvolatile matter concentration: 100% by weight).

The color pigment used was 37 parts by weight of titanium oxide (manufactured by Tayca Corp., trade name "JR-707", nonvolatile matter concentration: 100% by weight).

To the binder resins and the color pigment, 0.5 parts by weight of a dispersant, 0.5 parts by weight of an antisettling agent, 2 parts by weight of a wax, 9 parts by weight of ethyl acetate, 13 parts by weight of n-propyl acetate, 5 parts by weight of propylene glycol monomethyl ether (PGM), and 19 parts by weight of isopropyl alcohol (IPA) were added to prepare solvent drying-type ink (also referred to as "solvent drying-type ink (A)").

The content of each solvent in the solvent drying-type ink (A) was approximately 40% by weight of IPA, approximately 22% by weight of ethyl acetate, approximately 28% by weight of n-propyl acetate, and approximately 10% by weight of PGM with respect to 100% by weight in total of the solvents.

Example 5

(Raw material)

The raw material used to constitute layer A (raw material for the layer A) was 30% by weight of polystyrene resin A and 70% by weight of polystyrene resin B.

The raw material used to constitute an adhesive resin layer (raw material for the adhesive resin layer) was 12% by weight of polystyrene resin A, 28% by weight of polystyrene resin B, and 60% by height of polyester resin B.

The raw material used to constitute each surface layer (raw material for the surface layer) was 100% by weight of polyester resin B.

(Shrink film)

The raw material for the layer A was added to extruder x heated to 220°C, the raw material for the adhesive resin layer was added to extruder y heated to 220°C, and the raw material for the surface layer was added to extruder z heated to 250°C. These 3 extruders were used to carry out melt extrusion. The melted raw material for the layer A and the melted raw material for the adhesive resin layer were split, joined, and laminated with a 2-kind 3-layer structure [raw material for the adhesive resin layer/raw material for the layer A/raw material for the adhesive resin layer] as one repeat unit using a lamination apparatus equipped with a feed block having a 2-kind 3-layer confluence system in combination with a quadrisection multiplier, to prepare laminate (III) (laminate having four 2-kind 3-layer structures mentioned above (the number of repeats: 4)). The melted raw material for the surface layer was joined and laminated on both sides of the laminate (III) using the feed block to prepare laminate (IV). The laminate (IV) was further extruded from a T-die and then rapidly cooled on a casting drum cooled to 25°C to obtain a laminated unstretched film having the surface layers disposed on both sides of the base layer part.

Next, the laminated unstretched film was stretched mainly in the width direction by tenter stretching 5 times in the width direction at 85°C to obtain a long object of a stretched film (shrink film) having heat shrinkability in the direction.

The shrink film prepared in Example 5 had an 11-layer structure [surface layer/adhesive resin layer/layer A/adhesive resin layer/layer A/adhesive resin layer/layer A/adhesive resin layer/layer A/adhesive resin layer/surface layer]. Although the base layer part in this shrink film was supposed to comprise 12 layers because the repeat units of the 2-kind 3-layer structures were laminated with the number of repeats of 4, the overlapping portions of the raw materials for the adhesive resin layer, in actuality, yielded one layer due to the invisible interface between the layers. The base layer part therefore had a 9-layer structure [adhesive resin layer/layer A/adhesive resin layer/layer A/adhesive resin layer/layer A/adhesive resin layer/layer A/adhesive resin layer], and each outermost layer of the base layer part was the adhesive resin layer. The number of interfaces formed by the layer A and the adhesive resin layer adjacent to each other in the base layer part was 8.

(Shrink label)

The long object of the shrink film thus obtained was coated with the solvent drying-type ink (A) by gravure printing using a gravure printer, and a solvent drying-type print layer was formed by drying to obtain a long object of a shrink label. One week after the production, the content of residual solvents in the shrink label was 10 mg/m$^2$, and all of the solvents, i.e., ethyl acetate, n-propyl acetate, PGM, and IPA, contained in the solvent drying-type ink (A) were detected as the residual solvents.

(Shrink sleeve label)

Subsequently, the long object of the shrink label was slit into a predetermined width and then prepared in a tubular form by overlaying one end portion with the other end portion such that the width direction was the circumferential direction. The shrink film surfaces of the one end portion and the other end portion were sealed with a solvent to obtain a tubular long object of the shrink label. Then, the tubular long object of the shrink label (label continuum) was cut into individual label size to obtain a shrink sleeve label.

Comparative Example 2

(Raw material)

The raw material (a), the raw material for the adhesive resin layer, and the raw material (c) were used as shown in Table 2.

(Shrink film)

The raw material (a) (raw material for the layer A) was added to extruder x heated to 220°C, the raw material for the adhesive resin layer was added to extruder b heated to 220°C, and the raw material (c) (raw material for the surface layer) was added to extruder c heated to 250°C. These 3 extruders were used to carry out melt extrusion. The melted raw material for the layer A and the melted raw material for the adhesive resin layer were prepared into laminate (V) having a 2-kind 3-layer structure [raw material for the adhesive resin layer/raw material for the layer A/raw material for the adhesive resin layer], and the melted raw material for the surface layer was joined and laminated on both sides (surface layers) of the laminate (V) using the feed block having a 2-kind 3-layer confluence system to prepare laminate (VI). The laminate (VI) was further extruded from a T-die and then rapidly cooled on a casting drum cooled to 25°C to obtain a 5-layer laminated unstretched film having a structure [surface layer/adhesive resin layer/layer A/adhesive resin layer/surface layer] (base layer part had a 3-layer structure [adhesive resin layer/layer A/adhesive resin layer]).

Next, the laminated unstretched film was stretched by tenter stretchving 5 times in the width direction at 85°C to obtain a long object of a stretched film (shrink film) stretched mainly in the width direction and having heat shrinkability in the direction.

(Shrink label and shrink sleeve label)

A long object of a shrink label and a shrink sleeve label were obtained in the same way as in Example 5 using the long object of the shrink film thus obtained.

(Evaluation)

The shrink films, the shrink labels, and the shrink sleeve labels obtained in Example 5 and Comparative Example 2 were evaluated as described below. The evaluation results are shown in Table 2.

(5) Tensile properties (before print layer formation)

From each of the shrink films obtained in Example 5 and Comparative Example 2, a rectangular film piece of 15 mm in the width direction (TD direction) and 150 mm in the longitudinal direction (MD direction) was cut out to prepare a sample for measurement. Two marked lines were stretched at positions 25 mm from both ends (both ends in the aforementioned longitudinal direction) of the sample for measurement (interval between the marked lines: 100 mm).
The test was conducted using a tensile tester [manufactured by Shimadzu Corp., "Shimadzu Autograph (AGS-50G: load cell type 500N)"] under temperature and humidity conditions involving a temperature of 23 ± 2°C and a relative humidity of 50 ± 5% (% RH).
The sample for measurement was loaded in the tensile tester with a chuck interval set to 100 mm such that the measurement position was placed between the marked lines (initial length: 100 mm). The sample for measurement was pulled at a tensile speed (testing speed) of 200 mm/min using the tensile tester until the chuck interval was 300 mm (elongation: 200%). The tensile properties were evaluated according to the criteria given below. The results of evaluating the tensile properties were indicated by average value from the number of tests (the number of n) of 5 (n = 5).

Good : The sample for measurement was not ruptured at 200% elongation.
Poor : The sample for measurement was ruptured at not more than 200% elongation.

(6) Tensile properties (after print layer formation)

From each of the shrink labels obtained in Example 5 and Comparative Example 2, a rectangular label piece of 15 mm in the width direction (TD direction) and 150 mm in the longitudinal direction (MD direction) was cut out to prepare a sample for measurement. Two marked lines were stretched at positions 25 mm from both ends (both ends in the aforementioned longitudinal direction) of the sample for measurement (interval between the marked lines: 100 mm).
The test was conducted using a tensile tester [manufactured by Shimadzu Corp., "Shimadzu Autograph (AGS-50G: load cell type 500N)"] under temperature and humidity conditions involving a temperature of 23 ± 2°C and a relative humidity of 50 ± 5% (% RH).
The sample for measurement was loaded in the tensile tester with a chuck interval set to 100 mm such that the measurement position was placed between the marked lines (initial length: 100 mm). The sample for measurement was pulled at a tensile speed (testing speed) of 200 mm/min using the tensile tester until the chuck interval was 200 mm (elongation: 100%). The tensile properties were evaluated according to the criteria given below. The results of evaluating the tensile properties were indicated by average value from the number of tests (the number of n) of 5 (n = 5).

Good : The sample for measurement was not ruptured at 100% elongation.
Poor : The sample for measurement was ruptured at not more than 100% elongation.

(7) Shrinkage verification (shrinkage properties)

Each of the shrink sleeve labels obtained in Example 5 and Comparative Example 2 was fitted over a container (manufactured by Toyo Seikan Co., Ltd., 500-ml round PET container) and then passed through a steam tunnel of 90°C for the thermal shrinkage of the shrink sleeve label to obtain a labeled container (thermal shrinkage percentage at the container body: 5%). The frequency of occurrence of label creases in the labeled container was confirmed at n = 10. The shrinkage properties were evaluated according to the following criteria:

Good : No creases occurred in the 10 samples.
Poor : Creases occurred in not less than one of the 10 samples.

[Table 2]

(Table 2)

| Raw material | | Trade name | Comparative Example 2 | Example 5 |
|---|---|---|---|---|
| Content of resin in raw material (c) (surface layer) (% by weight) | Polyester resin A | EMBRACE LV | 100 | 0 |
| | Polyester resin B | EMBRACE 21214 | 0 | 100 |
| Content of resin in raw material (a) (layer A) (% by weight) | Polystyrene resin A | STYROLUX S | 54 | 30 |
| | Polystyrene resin B | STYROLUX T | 24 | 70 |
| | Polyester resin A | EMBRACE LV | 22 | 0 |
| Content of resin in raw material for adhesive resin layer (adhesive resin layer) (% by weight) | Polystyrene resin A | STYROLUX S | 0 | 12 |
| | Polystyrene resin B | STYROLUX T | 100 | 28 |
| | Polyester resin B | EMBRACE 21214 | 0 | 60 |
| Thickness per layer | Surface layer | | 3.3 | 5.0 |
| | Layer A | | 6.7 | 1.7 |
| | Adhesive resin layer | | 3.3 | 1.0 (2.1)* |
| The number of layers in base layer part (layer) | | | 3 | 9 |
| Overall thickness of shrink film ($\mu$m) | | | 20 | 25 |
| Total thickness of surface layers with respect to overall thickness of shrink film (%) | | | 33 | 40 |
| Content of constitutional unit derived from butadiene in styrene-butadiene copolymer contained in layer A (% by weight) | | | 16 | 21.1 |
| Tensile properties (before print layer formation) | | | Good | Good |
| Tensile properties (after print layer formation) | | | Poor | Good |
| Shrinkage verification | | | Good | Good |

* The numeric value represents the thickness of the adhesive resin layer serving as the outermost layer of the base layer part. The thickness of the adhesive resin layer present between the layers A is indicated within the parentheses.

As is also evident from Table 2, the shrink label of the present specification according to the specific aspect (2) (Example 5) was excellent in the solvent resistance of the shrink film and excellent in tensile properties before and after the print layer formation. This shrink label was also excellent in shrinkage properties. By contrast, the shrink label comprising a shrink film in which the total thickness of the surface layers was less than 40% with respect to the overall thickness of the shrink film (Comparative Example 2) was inferior in the solvent resistance of the shrink film and inferior in tensile properties after the print layer formation, as compared with the shrink film of the present specification according to the specific aspect (2).

I Table 3 shows the composition of a raw material for the surface layer (raw material (c)), a raw material for the layer A (raw material (a)), and a raw material for the layer F (raw material (f)) used in Examples 6 to 9, and the constitutions and evaluation results, etc., of shrink films prepared in Examples 6 to 9.

Example 6 (Reference Example)

(Raw material)

The raw material used to constitute each surface layer (raw material for the surface layer) was 100% by weight of polyester resin B.

The raw material used to constitute layer F (raw material for the layer A) was 100% by weight of polystyrene resin B.

The raw material used to constitute layer A (raw material for the layer F) was 11% by weight of polystyrene resin B, 45% by weight of polystyrene resin A, and 44% by weight of recovered raw materials (polystyrene resin B: 9% by weight, polystyrene resin A: 13% by weight, polyester resin B: 22% by weight).

(Shrink film)

The raw material for the layer A was added to extruder x heated to 220°C, the raw material for the layer F was added to extruder y heated to 220°C, and the raw material for the surface layer was added to extruder z heated to 220°C. These 3 extruders were used to carry out melt extrusion. The melted raw material for the layer A and raw material for the layer F were split, joined, and laminated with a 2-kind 3-layer structure [raw material for the layer F/raw material for the layer A/raw material for the layer F] as one repeat unit using a lamination apparatus equipped with a feed block having a 2-kind 3-layer confluence system in combination with a quadrisection multiplier, to prepare laminate (VII) (laminate having four 2-kind 3-layer structures mentioned above (the number of repeats: 4)). The melted raw material for the surface layer was joined and laminated on both sides of the laminate (VII) using the feed block to prepare laminate (VIII). The laminate (VIII) was further extruded from a T-die and then rapidly cooled on a casting drum cooled to 25°C to obtain a laminated unstretched film having the surface layers disposed on both sides of the base layer part.

Next, the laminated unstretched film was stretched by roll stretching 1.2 times in the longitudinal direction at 76°C and subsequently tenter stretching 5 times in the width direction at 85°C to obtain a long object of a stretched film (shrink film) stretches mainly in the width direction and having heat shrinkability in the direction.

The shrink film had an 11-layer structure [surface layer/layer F/layer A/layer F/layer A/layer F/layer A/layer F/layer A/layer F/surface layer]. Although the base layer part in this shrink film was supposed to comprise 12 layers because the repeat units of the 2-kind 3-layer structures were laminated with the number of repeats of 4, the overlapping portions of the raw materials for the layer F, in actuality, yielded one layer due to the invisible interface between the layers. The base layer part therefore had a 9-layer structure [layer F/layer A/layer F/layer A/layer F/layer A/layer F/layer A/layer F], and each outermost layer of the base layer part was the layer F. Each of the surface layers was a layer containing a polyester resin as a main component, and the layer F and the layer A were layers differing in raw material composition from each other and each containing a polystyrene resin as a main component.

(Shrink sleeve label)

While the long object of the shrink film thus obtained was delivered in the longitudinal direction using a gravure printer, a print layer having a thickness of approximately 3 μm was formed on one surface of the shrink film by the formation of a designed print layer using process color printing ink and then the formation of a background print layer using white printing ink except for an area for use as a seam to obtain a long object of a shrink label.

Subsequently, the long object of the shrink label was slit into a predetermined width and then prepared in a tubular form by overlaying one end portion with the other end portion such that the width direction was the circumferential direction. The shrink film surfaces of the one end portion and the other end portion were sealed with a solvent to obtain a tubular long object of the shrink label. Then, the tubular long object of the shrink label (label continuum) was cut into individual label size to obtain a shrink sleeve label.

(Labeled container)

Subsequently, the shrink sleeve label was fitted over a container (manufactured by Toyo Seikan Co., Ltd., 500-ml round PET container) and then passed through a steam tunnel of 90°C for the thermal shrinkage of the shrink sleeve label to obtain a labeled container.

Examples 7 to 9 (Examples 7 and 8 are Reference Examples)

Each shrink film, shrink sleeve label, and labeled container were obtained in the same way as in Example 6 except that, for example, the composition or component ratios of the raw material (a), the raw material (f), and the raw material (c) was changed as shown in Table 3.

In Examples 6 to 8, each of the surface layers was a layer containing a polyester resin as a main component, and the layer A and the layer F were layers differing in raw material composition from each other and each containing a polystyrene resin as a main component. Thus, the interface formed by each surface layer and the layer F serving as each outermost layer of the base layer part was the interface [R/S]. Also, the layer F corresponds to the layer A. Specifically, in the base layer part, two layers A differing in raw material composition from each other (layer A1 and layer A2) were alternately laminated.

In Example 9, each of the surface layers and the layer F were layers differing in raw material composition from each other and each containing a polyester resin as a main component, and the layer A was a layer containing a polystyrene resin as a main component. The interface formed by the layer A and the layer F was the interface [R/S], and this interface [R/S] was present in the base layer part. Also, the layer F corresponds to the layer E. Specifically, in the base layer part, the layer A and the layer E were alternately laminated.

(Evaluation)

The shrink films obtained in Examples 6 to 9 were evaluated as described below. The evaluation results are shown in Table 3.

(8) Shrinkage stress at 90°C

From each of the shrink films (before the shrinking process) obtained in Examples 6 to 9, a rectangular film piece of 200 mm in the main orientation direction (width direction for Examples and Comparative Examples) of the shrink film and 15 mm in a direction orthogonal to the main orientation direction (longitudinal direction for Examples and Comparative Examples) was cut out to prepare a sample for measurement.

The sample for measurement was loaded in the chucks of a tensile tester (manufactured by Shimadzu Corp., "Autograph AGS-50G", load cell 500N) with a chuck interval set to 100 mm (the main orientation direction of the shrink film was the tensile direction of the tensile tester), and dipped for 10 seconds in hot water of 90°C with the chuck interval (100 mm) maintained. Of the chuck interval 100 mm, a portion up to 80 mm was dipped in this hot water. The stress generated by this operation was detected, and the maximum value was defined as the shrinkage stress. The measurement results are shown in Table 3.

(9) Interlaminar strength in 180° direction at 90°C

From each of the shrink films (before the shrinking process) obtained in Examples 6 to 9, a rectangular film piece of 200 mm in the main orientation direction of the shrink film and 15 mm in a direction orthogonal to the main orientation direction was cut out to prepare a sample for measurement (200 mm in the long side direction × 15 mm in the short side direction).

The sample for measurement was partially separated at the interface [R/S] to be assayed for interlaminar strength (interface formed by the surface layer and the base layer part in Examples 6 to 8, or interface formed by the layer A and the layer F in the base layer part in Example 9) from one end portion in the long side direction of the sample for measurement (main orientation direction of the shrink film) to a length of not less than 15 mm in the long side direction to prepare a sample having a separating portion and a separated portion.

A double-faced pressure-sensitive adhesive tape was laminated on the whole surface on a side opposite to the separated side of the separated portion (side having a larger thickness in the shrink label) of the sample for measurement, and the sample for measurement was fixed to a glass plate via the double-faced pressure-sensitive adhesive tape. Then, the sample for measurement fixed to the glass plate was fixed to a heater so as to come in contact on the glass plate side with the heater. Then, the heater was set to 90°C, and after confirmation that the temperature was 90°C, the separating portion on the heater-unfixed side of the sample for measurement fixed to the glass plate was pulled at a tensile speed of 200 mm/min in the 180° direction with respect to the direction before the separation using a tensile tester (manufactured by Shimadzu Corp., "Autograph AGS-50G", load cell 500N) to measure the interlaminar strength in the 180° direction at 90°C. The measurement results are shown in Table 3.

(10) Delamination during shrinking process

Each of the flat shrink sleeve labels (length in the width direction in a folded state: 108.5 mm, length in the height direction: 106 mm) obtained in Examples 6 to 9 was fitted over a 300-g round aluminum bottle can and then dipped for 30 seconds in a warm bath layer of 90°C for the thermal shrinkage (shrinking process) of the shrink sleeve label, during which the presence or absence of delamination of the outer end face at the seam was visually observed.

Ten identical shrink sleeve label samples were prepared and each subjected to the aforementioned thermal shrinkage and observation (n = 10). Then, the delamination during the shrinking process was determined according to the following criteria:

Good : No delamination was observed in the 10 samples.
Poor : Delamination was observed in not less than lone of the 10 samples.

[Table 3]

(Table 3)

| | | | Example 6 (Reference) | Example 7 (Reference) | Example 8 (Reference) | Example 9 |
|---|---|---|---|---|---|---|
| Raw material | | Trade name | | | | |
| Content of resin in raw material (c) (surface layer) (% by weight) | Polyester resin B | EMBRACE 21214 | 100 | 100 | 100 | 100 |
| Content of resin in raw material (f) (layer F) (% by weight) | Polystyrene resin B | STYROLUX T | 100 | 21 | 70 | 28 |
| | Polystyrene resin A | STYROLUX S | 0 | 49 | 0 | 12 |
| | Polyester resin B | EMBRACE 21214 | 0 | 30 | 30 | 60 |
| Content of resin in raw material (a) (layer A) (% by weight) | Polystyrene resin B | STYROLUX T | 20 | 30 | 20 | 70 |
| | Polystyrene resin A | STYROLUX S | 58 | 70 | 58 | 30 |
| | Polyester resin B | EMBRACE 21214 | 22 | 0 | 22 | 0 |
| Thickness per layer ($\mu$m) | Surface layer | | 5.21 | 5.21 | 5.21 | 7.04 |
| | Layer F* | | 0.65 | 0.65 | 0.65 | 1.44 |
| | Layer A | | 2.34 | 2.34 | 2.34 | 2.35 |
| [(Overall thickness of layers F):(Overall thickness of layers A):(Overall thickness of surface layers)] | | | [2:7.2:4] | [2:7.2:4] | [2:7.2:4] | [2.5:4:3] |
| The total number of layers in shrink film | | | 11 | 11 | 11 | 11 |
| The number of layers in base layer part | | | 9 | 9 | 9 | 9 |
| Overall thickness of shrink film ($\mu$m) | | | 25 | 25 | 25 | 35 |
| Shrinkage stress of shrink film (N) | | | 1.7 | 1.8 | 1.8 | 1.9 |
| Interlaminar strength in 180° direction at 90°C (N) | | | 6.30 | 0.90 | 3.21 | 5.45 |
| Delamination during shrinking process | | | Good | Poor | Good | Good |

* The numeric value described in the table indicates the thickness of the layer F other than the layer F serving as the outermost layer of the base layer part, and the thickness of the layer F serving as the outermost layer of the base layer part is half the thicknesses described in the table

As is also evident from Table 3, the shrink labels of the present specification according to the specific aspect (3) (Examples 6, 8, and 9) were not delaminated even during the shrinking process. By contrast, the shrink label having higher interlaminar strength at 90°C of the interface [R/S] than the shrinkage stress of the shrink film (Example 7) could undergo delamination during the shrinking process.

Table 4 shows the composition of a raw material for the surface layer (raw material (c)), a raw material for the layer A (raw material (a)), and a raw material for the layer F (raw material (f)) used in Examples 10 to 15, and the constitutions and evaluation results, etc., of shrink films and shrink labels prepared in Examples 10 to 15.

Example 10

(Raw material)

The raw material used to constitute layer F (raw material for the layer F) was a melt blend of 14.7% by weight of polystyrene resin A, 34.3% by weight of polystyrene resin B, and 51% by weight of polyester resin B.

The raw material used to constitute layer A (raw material for the layer A) was a melt blend of 30% by weight of polystyrene resin A and 70% by weight of polystyrene resin B.

The raw material used to constitute each surface layer (raw material for the surface layer) was 100% by weight of polyester resin B.

(Shrink film)

The raw material for the layer A was added to extruder x heated to 220°C, the raw material for the layer F was added to extruder y heated to 220°C, and the raw material for the surface layer was added to extruder z heated to 220°C. These 3 extruders were used to carry out melt blending and extrusion. The melt-blended raw material for the layer A and raw material for the layer F were split, joined, and laminated with a 2-kind 3-layer structure [raw material for the layer F/raw material for I the layer A/raw material for the layler F] as one repeat unit using a lamination apparatus equipped with a feed block having a 2-kind 3-layer confluence system in combination with a quadrisection multiplier, to prepare laminate (IX) (laminate having four 2-kind 3-layer structures mentioned above (the number of repeats: 4)). The melt-blended raw material for the surface layer was joined and laminated on both sides of the laminate (IX) using the feed block to prepare laminate (X). The laminate (X) was further extruded from a T-die and then rapidly cooled on a casting drum cooled to 25°C to obtain a laminated unstretched film having the surface layers disposed on both sides of the base layer part.

Next, the laminated unstretched film was stretched by tenter stretching 5 times in the width direction at 85°C to obtain a long object of a stretched film (shrink film) stretched mainly in the width direction and having heat shrinkability in the direction.

The shrink film had an 11-layer structure [surface layer/layer F/layer A/layer F/layer A/layer F/layer A/layer F/layer A/layer F/surface layer]. Although the base layer part in this shrink film was supposed to comprise 12 layers because the repeat units of the 2-kind 3-layer structures were laminated with the number of repeats of 4, the overlapping portions of the raw materials for the layer F, in actuality, yielded one layer due to the invisible interface between the layers. The base layer part therefore comprised a 9-layer structure [layer F/layer A/layer F/layer A/layer F/layer A/layer F/layer A/layer F], and each outermost layer of the base layer part was the layer F.

(Shrink sleeve label)

While the long object of the shrink film thus obtained was delivered in the longitudinal direction using a gravure printer, a print layer having a thickness of approximately 3 μm was formed on one surface of the shrink film by the formation of a designed print layer using process color printing ink and then the formation of a background print layer using white printing ink except for an area for use as a seam to obtain a long object of a shrink label.

Subsequently, the long object of the shrink label was slit into a predetermined width, and a series of a plurality of alternate cutting and non-cutting portions (length of each cutting portion: 0.5 mm, length of each non-cutting portion: 3.5 mm) were provided in each of one end portion and the other end portion of the shrink label to form perforation extending in the longitudinal direction (direction orthogonal to the shrinking direction). Then, the shrink label was prepared in a tubular form by overlaying one end portion with the other end portion such that the width direction was the circumferential direction. The shrink film surfaces of the one end portion and the other end portion were sealed with a solvent to obtain a tubular long object of the shrink label. Then, the tubular long object of the shrink label (label continuum) was cut into individual label size to obtain a shrink sleeve label.

(Labeled container)

Subsequently, the shrink sleeve label was fitted over a container (manufactured by Toyo Seikan Co., Ltd., 500-ml round PET container, mass per unit area: 23 g) and then passed through a steam tunnel of 90°C for the thermal shrinkage of the shrink sleeve label to obtain a labeled container.

Examples 11 to 15 (Examples 14 and 15 are Reference Examples)

Each shrink film, shrink sleeve label, and labeled container were obtained in the same way as in Example 10 except that, for example, the composition or component ratios of the raw material (a), the raw material (f), and the raw material (c) was changed as shown in Table 3. Of the raw material (a), the raw material (f), and the raw material (c), a raw material used in the form of a mixed resin was a melt blend of a plurality of resins.

Although the base layer part in each of the shrink films in Examples 11 to 15 were supposed to comprise 12 layers because the repeat units of the 2-kind 3-layer structures were laminated with the number of repeats of 4, the overlapping portions of the raw materials for the layer F, in actuality, yielded one layer due to the invisible interface between the layers. For this reason, these shrink films comprised an 11-layer structure [surface layer/layer F/layer A/layer F/layer A/layer F/layer A/layer F/layer A/layer F/surface layer]. Thus, the base layer part in each of these shrink films comprised a 9-layer structure [layer F/layer A/layer F/layer A/layer F/layer A/layer F/layer A/layer F], and each outermost layer of the base layer part was the layer F.

(Evaluation)

The shrink films, shrink labels, and shrink sleeve labels obtained in Examples 10 to 15 were evaluated as described below. The evaluation results are shown in Table 4.

(11) T-peel strength (T-peel test)

For each of the shrink labels (before the shrinking process) obtained in Examples 10 to 15, T-peel strength was measured at the interface [T/U] in the base layer part and between the surface layer and the base layer part by the method described below.

From each shrink label, a rectangular sample having a width of 15 mm in the longitudinal direction of the shrink label (film formation direction of the shrink film) and a length of 200 mm in the width direction of the shrink label (direction orthogonal to the longitudinal direction) was collected [200 mm long (in the width direction of the shrink label) $\times$ 15 mm wide (in the longitudinal direction of the shrink label)]. In the description below, the long side direction of the sample refers to the width direction of the shrink label, and the width direction of the sample refers to the longitudinal direction of the shrink label.

The long side direction of the sample was used as the direction of measurement, and delamination loads were measured by the T-peel test (in accordance with JIS K 6854-3) under the conditions given below.

The average value of the delamination loads was defined as the T-peel strength (N).

(Measurement conditions)

Measurement apparatus: Autograph manufactured by Shimadzu Corp. (AG-IS: load cell type 500N)
Temperature and humidity: temperature of 23 $\pm$ 2°C and humidity of 50 $\pm$ 5% RH
Initial chuck interval: 40 mm
Sample width: 15 mm
The number of tests: 3
Tensile speed: 200 mm/min
Stroke: 150 mm (if rupture occurred, the test was discontinued, and data up to this point was obtained.)
First half deletion range: 50 mm
Sensitivity: 1

If separation was impossible, the sample was regarded as "inseparable" which represents T-peel strength higher than the T-peel strength that could be measured.

(12) Drop resistance of label

Each of the labeled containers obtained in Examples 10 to 15 was left for 1 day after the preparation and then dropped to concrete surface from a height of 600 mm such that the bottom of the container hit against the concrete surface. This operation was repeated 5 times per container, and the presence or absence of label breakage was visually observed. The drop resistance of the label was evaluated according to the following criteria:

Good : No label breakage was confirmed.
Poor : Label breakage was confirmed.

(13) Label tearability

Each of the labeled containers obtained in Examples 10 to 15 was teared along the perforation on the label in a direction orthogonal to the shrinking direction. Then, the tearability of the label was confirmed and evaluated according to the following criteria:

Good : Easily tearable.
Usable : Difficult to tear

[Table 4]

(Table 4)

| | | | Example 10 | Example 11 | Example 12 | Example 13 | Example 14 (Reference) | Example 15 (Reference) |
|---|---|---|---|---|---|---|---|---|
| Raw material | | Trade name | | | | | | |
| Content in raw material (c) (surface layer) (% by weight) | Polyester resin B | EMBRACE 21214 | 100 | 100 | 100 | 100 | 100 | 100 |
| Content in raw material (a) (layer A) (% by weight) | Polystyrene resin A | STYROLUX S | 30 | 30 | 30 | 62 | 54 | 70 |
| | Polystyrene resin B | STYROLUX T | 70 | 70 | 70 | 20 | 24 | 30 |
| | Polyester resin B | EMBRACE 21214 | 0 | 0 | 0 | 18 | 22 | 0 |
| Content in raw material (f) (layer F) (% by weight) | Polystyrene resin A | STYROLUX S | 14.7 | 12 | 10 | 0 | 0 | 23 |
| | Polystyrene resin B | STYROLUX T | 34.3 | 28 | 0 | 30 | 100 | 47 |
| | Polystyrene resin C | CLEAREN | 0 | 0 | 0 | 0 | 0 | 0 |
| | Polyester resin B | EMBRACE 21214 | 51 | 60 | 90 | 70 | 0 | 30 |
| Mixing ratio of resins in layer F (polyester resin:polystyrene resin) | | | 51:49 | 60:40 | 100:0 | 70:30 | 0:100 | 30:70 |
| Thickness per layer (μm) | Surface layer | | 7.00 | 7.00 | 7.00 | 4.17 | 8.92 | 5.60 |
| | Layer A | | 2.33 | 2.33 | 2.33 | 1.88 | 2.48 | 3.15 |
| | Layer F* | | 2.92 | 2.92 | 2.92 | 1.04 | 1.82 | 2.80 |
| [(Overall thickness of layers F):(Overall thickness of layers A):(Overall thickness of surface layers)] | | | [2.5:2:3] | [2.5:2:3] | [2.5:2:3] | [2:3.6:4] | [2.2:3:5.4] | [8:9:8] |
| The total number of layers in shrink film | | | 11 | 11 | 11 | 11 | 11 | 11 |
| The number of layers in base layer part | | | 9 | 9 | 9 | 9 | 9 | 9 |
| Overall thickness of shrink film (μm) | | | 35 | 35 | 35 | 20 | 35 | 35 |

64

EP 2 977 979 B1

(continued)

| Raw material | Trade name | Example 10 | Example 11 | Example 12 | Example 13 | Example 14 (Reference) | Example 15 (Reference) |
|---|---|---|---|---|---|---|---|
| T-peel strength between surface layer and base layer part (N) | | 0.81 | 1.09 | Inseparable | 1.23 | 0.17 | 0.23 |
| T-peel strength of interface [T/U] (N) | | 0.53 | 0.27 | 0.10 | 0.31 | Inseparable | 0.71 |
| Drop resistance of label | | Good | Good | Good | Good | Good | Good |
| Tearability of label | | Good | Good | Good | Good | Usable | Usable |

\* The numeric value described in the table indicates the thickness of the layer F other than the layer F serving as the outermost layer of the base layer part, and the thickness of the layer F serving as the outermost layer of the base layer part is half the thicknesses described in the table.

As is also evident from Table 4, the shrink labels of the present specification according to the specific aspect (4) (Examples 10 to 13) were excellent in the drop resistance and tearability of the label. By contrast, the shrink labels not comprising 3 or more interfaces having T-peel strength lower than that between the surface layers and the base layer part among the interfaces formed by the resin layer (T) and the resin layer (U) (Examples 14 and 15) were relatively inferior in label tearability.

Table 5 shows the composition of a raw material for the surface layer (raw material (c)) and a raw material for the layer F1 (raw material (f1)) and a raw material for the layer F2 (raw material (f2)) for constituting two layers F differing in raw material composition (layer F1 and layer F2) used in Examples 16 to 20, and the constitutions and evaluation results, etc., of shrink films prepared in Examples 16 to 20.

Example 16 (Reference Example)

(Raw material)

The raw material used to constitute each surface layer (raw material for the surface layer) was 100% by weight of polyester resin B.

The raw material used to constitute layer F1 (raw material for the layer F1) was 100% by weight of polystyrene resin B.

The raw material used to constitute layer F2 (raw material for the layer F2) was a melt blend of 11% by weight of polystyrene resin B, 45% by weight of polystyrene resin A, and 44% by weight of recovered raw materials (polystyrene resin B: 9% by weight, polystyrene resin A: 13% by weight, polyester resin B: 22% by weight).

(Shrink film)

The raw material for the layer F1 was added to extruder x heated to 220°C, the raw material for the layer F2 was added to extruder y heated to 220°C, and the raw material for the surface layer was added to extruder z heated to 220°C. These 3 extruders were used to carry out melt extrusion. The melted raw material for the layer F1 and raw material for the layer F2 were split, joined, and laminated with a 2-kind 3-layer structure [raw material for the layer F1/raw material for the layer F2/raw material for the layer F1] as one repeat unit using a lamination apparatus equipped with a feed block having a 2-kind 3-layer confluence system in combination with a quadrisection multiplier, to prepare laminate (XI) (laminate having four 2-kind 3-layer structures mentioned above (the number of repeats: 4)). The melted raw material for the surface layer was joined and laminated on both sides of the laminate (XI) using the feed block to prepare laminate (XII). The laminate (XII) was further extruded from a T-die and then rapidly cooled on a casting drum cooled to 25°C to obtain a laminated unstretched film having the surface layers disposed on both sides of the base layer part.

Next, the laminated unstretched film was stretched by roll stretching 1.2 times in the longitudinal direction at 76°C and subsequently tenter stretching 5 times in the width direction at 85°C to obtain a long object of a stretched film (shrink film) stretched mainly in the width direction and having heat shrinkability in the direction.

The shrink film has an 11-layer structure [surface layer/layer F1/layer F2/layer F1/layer F2/layer F1/layer F2/layer F1/layer F2/layer F1/surface layer]. Although the base layer part in this shrink film was supposed to comprise 12 layers because the repeat units of the 2-kind 3-layer structures were laminated with the number of repeats of 4, the overlapping portions of the raw materials for the layer F1, in actuality, yielded one layer due to the invisible interface between the layers. The base layer part therefore had a 9-layer structure [layer F1/layer F2/layer F1/layer F2/layer F1/layer F2/layer F1/layer F2/layer F1], and each outermost layer of the base layer part was the layer F1. Each of the surface layers was a layer containing a polyester resin as a main component, and the layer F1 and the layer F2 were layers (layer A1 and layer A2) differing in raw material composition from each other and each containing a polystyrene resin as a main component. Thus, the interface formed by each surface layer and the layer F1 serving as each outermost layer of the base layer part was the interface [R/S] .

(Shrink sleeve label and labeled container)

A shrink sleeve label and a labeled container were obtained in the same way as in Example 10 using the long object of the shrink film thus obtained.

Examples 17 to 20 (Examples 17, 18 and 20 are Reference Examples)

Each shrink film, shrink sleeve label, and labeled container were obtained in the same way as in Example 16 except that, for example, the composition or component ratios of the raw material (f1), the raw material (f2), and the raw material (c) was changed as shown in Table 5. Of the raw material (f1), the raw material (f2), and the raw material (c), a raw material used in the form of a mixed resin was a melt blend of a plurality of resins.

In Examples 17, 18, and 20, each of the surface layers was a layer containing a polyester resin as a main component, and the layer F1 and the layer F2 were layers (layer A1 and layer A2) differing in raw material composition from each other and each containing a polystyrene resin as a main component. Thus, the interface formed by each surface layer and the layer F1 serving as each outermost layer of the base layer part was the interface [R/S].

In Example 19, each of the surface layers and the layer F1 were layers differing in raw material composition from each other and each containing a polyester resin as a main component, and the layer F2 was a layer (layer A) containing a polystyrene resin as a main component. The interface formed by the layer F1 and the layer F2 was the interface [R/S], and this interface [R/S] was present in the base layer part.

(Evaluation)

The shrink films obtained in Examples 16 to 20 were each evaluated for interlaminar strength in the 180° direction at 90°C, interlaminar strength in the 180° direction at ordinary temperature, delamination during the shrinking process, drop resistance of the label, and label tearability. The evaluation results are shown in Table 5. The interlaminar strength in the 180° direction at 90°C was measured in the same way as in the paragraph (9) Interlaminar strength in 180° direction at 90°C using the interface formed by the surface layer and the base layer part in Examples 16 to 18 and 20 or the interface formed by the layer F1 and the layer F2 in the base layer part in Example 19 as the interface [R/S]. The delamination during the shrinking process was evaluated in the same way as in the paragraph (10) Delamination during shrinking process. The drop resistance of the label was evaluated in the same way as in the paragraph (12) Drop resistance of label. The label tearability was evaluated in the same way as in the paragraph (13) Label tearability.

(14) Interlaminar strength in 180° direction at ordinary temperature

From each of the shrink films (before the shrinking process) obtained in Examples 16 to 20, a rectangular film piece of 200 mm in the main orientation direction of the shrink film and 15 mm in a direction orthogonal to the main orientation direction was cut out to prepare a sample for measurement (200 mm in the long side direction × 15 mm in the short side direction).

The sample for measurement was partially separated at the interface [R/S] (interface formed by the surface layer and the base layer part in Examples 16 to 18 and 20 or the interface formed by the layer F1 and the layer F2 in the base layer part in Example 19) to be assayed for interlaminar strength from one end portion in the long side direction of the sample for measurement (main orientation direction of the shrink film) to a length of not less than 15 mm in the long side direction to prepare a sample having a separating portion and a separated portion.

A double-faced pressure-sensitive adhesive tape was laminated on the whole surface on a side opposite to the separated side of the separated portion (side having a larger thickness in the shrink label) of the sample for measurement, and the sample for measurement was fixed to a glass plate via the double-faced pressure-sensitive adhesive tape. Then, the glass plate was immovably fixed, and in an environment of ordinary temperature (23°C), the separating portion on the glass plate-unfixed side of the sample for measurement fixed to the glass plate was pulled at a tensile speed of 200 mm/min in the 180° direction with respect to the direction before the separation using a tensile tester (manufactured by Shimadzu Corp., "Autograph AGS-50G", load cell 500N) to measure the interlaminar strength in the 180° direction at ordinary temperature. The measurement results are shown in Table 5.

[Table 5]

(Table 5)

| | | | Example 16 (Reference) | Example 17 (Reference) | Example 18 (Reference) | Example 19 | Example 20 (Reference) |
|---|---|---|---|---|---|---|---|
| Raw material | | Trade name | | | | | |
| Content in raw material (c) (surface layer) (% by weight) | Polyester resin B | EMBRACE 21214 | 100 | 100 | 100 | 100 | 100 |
| Content in raw material (f1) (layer F1) (% by weight) | Polystyrene resin B | STYROLUX T | 100 | 21 | 70 | 28 | 70 |
| | Polystyrene resin A | STYROLUX S | 0 | 49 | 0 | 12 | 30 |
| | Polyester resin B | EMBRACE 21214 | 0 | 30 | 30 | 60 | 0 |
| Content in raw material (f2) (layer F2) (% by weight) | Polystyrene resin B | STYROLUX T | 20 | 30 | 20 | 70 | 47 |
| | Polystyrene resin A | STYROLUX S | 58 | 70 | 58 | 30 | 23 |
| | Polyester resin B | EMBRACE 21214 | 22 | 0 | 22 | 0 | 30 |
| Thickness per layer (μm) | Surface layer | | 5.21 | 5.21 | 5.21 | 7.04 | 5.60 |
| | Layer F1* | | 0.65 | 0.65 | 0.65 | 1.44 | 2.80 |
| | Layer F2 | | 2.34 | 2.34 | 2.34 | 2.35 | 3.15 |
| [(Overall thickness of layers F1):(Overall thickness of layers F2): (Overall thickness of surface layers)] | | | [2:7.2:4] | [2:7.2:4] | [2:7.2:4] | [2.5:4:3] | [1:1.1:1] |
| The total number of layers in shrink film | | | 11 | 11 | 11 | 11 | 11 |
| The number of layers in base layer part | | | 9 | 9 | 9 | 9 | 9 |
| Overall thickness of shrink film (μm) | | | 25 | 25 | 25 | 35 | 35 |
| Interlaminar strength in 180° direction at 90°C (N) | | | 6.30 | 0.90 | 3.21 | 5.45 | 5.20 |
| Interlaminar strength in 180° direction at ordinary temperature (N) | | | 0.40 | 0.60 | 0.38 | 0.33 | 1.10 |

EP 2 977 979 B1

68

(continued)

| | | Example 16 (Reference) | Example 17 (Reference) | Example 18 (Reference) | Example 19 | Example 20 (Reference) |
|---|---|---|---|---|---|---|
| Raw material | Trade name | | | | | |
| Delamination during shrinking process | | Good | Poor | Good | Good | Good |
| Drop resistance of label | | Good | Good | Good | Good | Poor |
| Tearability of label | | Good | Good | Good | Good | Good |
| * The numeric value described in the table indicates the thickness of the layer F1 other than the layer F1 serving as the outermost layer of the base layer part, and the thickness of the layer F1 serving as the outermost layer of the base layer part is half the thicknesses described in the table. | | | | | | |

As is also evident from Table 5, the shrink labels of the present specification according to the specific aspect (5) (Examples 16, 18, and 19) were not delaminated even during the shrinking process. In addition, this shrink labels were excellent in the drop resistance and tearability of the label. By contrast, the shrink label in which the interlaminar strength in the 180° direction at 90°C of the interface [R/S] was less than 2 N (Example 17) could undergo delamination during the shrinking process. Also, the shrink label in which the interlaminar strength in the 180° direction at ordinary temperature of the interface [R/S] was not less than 1 N (Example 20) exhibited the reduced drop resistance of the label.

Table 6 shows the composition of a raw material for the surface layer (raw material (c)), a raw material for the layer A (raw material (a)), a raw material for the layer B (raw material (b)), and a raw material for forming a resin layer (layer B') used instead of layer B (raw material for the layer B') used in Examples 21 to 26 and Comparative Example 3, and the constitutions and evaluation results, etc., of shrink films and shrink labels prepared in Examples 21 to 26 and Comparative Example 3.

Example 21

(Raw material)

The raw material used to constitute layer B (raw material for the layer B) was 100% by weight of polyester resin B.

The raw material used to constitute layer A (raw material for the layer A) was a melt blend of 30% by weight of polystyrene resin A and 70% by weight of polystyrene resin B.

The raw material used to constitute each surface layer (raw material for the surface layer) was 100% by weight of polyester resin B.

(Shrink film)

The raw material for the layer A was added to extruder x heated to 220°C, the raw material for the layer B was added to extruder y heated to 220°C, and the raw material for the surface layer was added to extruder z heated to 220°C. These 3 extruders were used to carry out melt extrusion. The melted raw material for the layer A and the melted raw material for the layer B were split, joined, and laminated with a 2-kind 3-layer structure [raw material for the layer B/raw material for the layer A/raw material for the layer B] as one repeat unit using a lamination apparatus equipped with a feed block having a 2-kind 3-layer confluence system in combination with a quadrisection multiplier, to prepare laminate (XIII) (laminate having four 2-kind 3-layer structures mentioned above (the number of repeats: 4)). The melted raw material for the surface layer was joined and laminated on both sides of the laminate (XIII) using the feed block to prepare laminate (XIV). The laminate (XIV) was further extruded from a-T-die and then rapidly cooled on a casting drum cooled to 25°C to obtain a laminated unstretched film comprising the surface layers disposed on both sides of the base layer part.

Next, the laminated unstretched film was stretched by tenter stretching 5 times in the width direction at 85°C to obtain a long object of a stretched film (shrink film) stretched mainly in the width direction and having heat shrinkability in the direction.

The shrink film had a 9-layer structure [surface layer/layer A/layer B/layer A/layer B/layer A/layer B/layer A/surface layer]. Although the base layer part in this shrink film was supposed to comprise 12 layers because the repeat units of the 2-kind 3-layer structures were laminated with the number of repeats of 4, the overlapping portions of the raw materials for the layer B, in actuality, yielded one layer due to the invisible interface between the layers. In addition, the raw material for the surface layer and the raw material for the layer B serving as the outermost layer of the base layer part had the same composition and therefore formed one surface layer due to the invisible interface between the layers. The base layer part therefore had a 7-layer structure [layer A/layer B/layer A/layer B/layer A/layer B/layer A], and each outermost layer of the base layer part was the layer A. In the base layer part, the number of interfaces formed by the layer A and the layer B adjacent to each other was 6.

(Shrink sleeve label and labeled container)

A shrink sleeve label and a labeled container were obtained in the same way as in Example 10 using the long object of the shrink film thus obtained.

Examples 22 to 25

Each shrink film, shrink sleeve label, and labeled container were obtained in the same way as in Example 21 except that, for example, the composition or component ratios of the raw material (a), the raw material (b), and the raw material (c) was changed as shown in Table 6. Of the raw material (a), the raw material (b), and the raw material (c), a raw material used in the form of a mixed resin was a melt blend of a plurality of resins.

Although the base layer part in each of the shrink films in Examples 22 and 24 were supposed to comprise 12 layers because the repeat units of the 2-kind 3-layer structures were laminated with the number of repeats of 4, the overlapping portions of the raw materials for the layer B, in actuality, yielded one layer due to the invisible interface between the layers. For this reason, these shrink films had an 11-layer structure [surface layer/layer B/layer A/layer B/layer A/layer B/layer A/layer B/layer A/layer B/surface layer]. Thus, the base layer part in each of these shrink films had a 9-layer structure [layer B/layer A/layer B/layer A/layer B/layer A/layer B/layer A/layer B], and each outermost layer of the base layer part was the layer B. In the base layer part, the number of interfaces formed by the layer A and the layer B adjacent to each other was 8.

Although the base layer part in each of the shrink films in Examples 23 and 25 were supposed to comprise 12 layers because the repeat units of the 2-kind 3-layer structures were laminated with the number of repeats of 4, the overlapping portions of the raw materials for the layer B, in actuality, yielded one layer due to the invisible interface between the layers. In the shrink film, the raw material for the layer B serving as the outermost layer of the base layer part and the raw material for the surface layer originally had the same composition and therefore formed one surface layer due to the invisible interface between the surface layer and the layer B serving as the outermost layer of the base layer part. For this reason, these shrink films had a 9-layer structure [surface layer/layer A/layer B/layer A/layer B/layer A/layer B/layer A/surface layer]. Thus, the base layer part in each of these shrink films had a 7-layer structure [layer A/layer B/layer A/layer B/layer A/layer B/layer A], and each outermost layer of the base layer part was the layer A. In the base layer part, the number of interfaces formed by the layer A and the layer B adjacent to each other was 6.

Example 26 (Reference Example)

A shrink film, a shrink sleeve label, and a labeled container were prepared in the same way as in Example 21 except that the raw material for the layer B was not used, and instead, 23% by weight of polystyrene resin A, 47% by weight of polystyrene resin B, and 30% by weight of polyester resin B were melt-blended and used as a raw material for the layer B'.

Although the base layer part in the shrink film in Example 26 were supposed to comprise 12 layers because the repeat units of the 2-kind 3-layer structures were laminated with the number of repeats of 4, the overlapping portions of the raw materials for the layer B', in actuality, yielded one layer due to the invisible interface between the layers. For this reason, this shrink film had an 11-layer structure [surface layer/layer B'/layer A/layer B'/layer A/layer B'/layer A/layer B'/layer A/layer B'/surface layer]. Thus, the base layer part in the shrink film had a 9-layer structure [layer B'/layer A/layer B'/layer A/layer B'/layer A/layer B'/layer A/layer B'], and each outermost layer of the base layer part was the layer B'.

Comparative Example 3

(Raw material)

The raw material used to constitute layer B (raw material for the layer B) was a melt blend of 6% by weight of polystyrene resin A, 14% by weight of polystyrene resin B, and 80% by weight of polyester resin B.

The raw material used to constitute layer A (raw material for the layer A) was a melt blend of 30% by weight of polystyrene resin A and 70% by weight of polystyrene resin B. I

The raw material used to constitute each surface layer (raw material for the surface layer) was 100% by weight of polyester resin B.

(Shrink film)

The raw material for the layer A was added to extruder x heated to 220°C, the raw material for the layer B was added to extruder y heated to 220°C, and the raw material for the surface layer was added to extruder z heated to 220°C. These 3 extruders were used to carry out melt extrusion. The melted raw material for the layer A and the melted raw material for the layer B were prepared into laminate (XV) having a 2-kind 3-layer structure [raw material for the layer B/raw material for the layer A/raw material for the layer B] using a feed block having, a 2-kind 3-layer confluence system. The melted raw material for the surface layer was joined and laminated on both sides of the laminate (XV) using the feed block to prepare laminate (XVI). The laminate (XVI) was further extruded from a T-die and then rapidly cooled on a casting drum cooled to 25°C to obtain a laminated unstretched film having the surface layers disposed on both sides of the base layer part.

Next, the laminated unstretched film was stretched by tenter stretching 5 times in the width direction at 85°C to obtain a long object of a stretched film (shrink film) stretched mainly in the width direction and having heat shrinkability in the direction.

The shrink film had a 5-layer structure [surface layer/layer B/layer A/layer B/surface layer]. Thus, the base layer part in this shrink film had a 3-layer structure [layer B/layer A/layer B], and each outermost layer of the base layer part was the layer B. In the base layer part, the number of interfaces formed by the layer A and the layer B adjacent to each other was 2.

(Shrink sleeve label and labeled container)

A shrink sleeve label and a labeled container were obtained in the same way as in Example 21 using the long object of the shrink film thus obtained.

(Evaluation)

The shrink films, the shrink labels, and the shrink sleeve labels obtained in Examples 21 to 26 and Comparative Example 3 were each evaluated for drop resistance of the label, label tearability, and compressive strength. The evaluation results are shown in Table 6. The drop resistance of the label was evaluated in the same way as in the paragraph (12) Drop resistance of label. The label tearability was evaluated in the same way as in the paragraph (13) Label tearability. The compressive strength was measured in the same way as in the paragraph (3) Compressive strength.

[Table 6]

(Table 6)

| Raw material | | Trade name | Example 21 | Example 22 | Example 23 | Example 24 | Example 25 | Example 26 (Reference) | Comparative Example 3 |
|---|---|---|---|---|---|---|---|---|---|
| Content in raw material (c) (surface layer) (% by weight) | Polyester resin B | EMBRACE 21214 | 100 | 100 | 100 | 100 | 100 | 100 | 100 |
| Content in raw material (a) (layer A) (% by weight) | Polystyrene resin A | STYROLUX S | 30 | 30 | 25.8 | 24 | 0 | 30 | 30 |
| | Polystyrene resin B | STYROLUX T | 70 | 70 | 60.2 | 56 | 0 | 70 | 70 |
| | Polystyrene resin C | Modified SBS | 0 | 0 | 0 | 0 | 100 | 0 | 0 |
| | Polyester resin B | EMBRACE 21214 | 0 | 0 | 14 | 20 | 0 | 0 | 0 |
| Content in raw material (b) (layer B) (% by weight) | Polystyrene resin A | STYROLUX S | 0 | 6 | 0 | 6 | 0 | | 6 |
| | Polystyrene resin B | STYROLUX T | 0 | 14 | 0 | 14 | 0 | | 14 |
| | Polyester resin B | EMBRACE 21214 | 100 | 80 | 100 | 80 | 100 | | 80 |
| Content in raw material for layer B' (layer B') (% by weight) | Polystyrene resin A | STYROLUXS | | | | | | 23 | |
| | Polystyrene resin B | STYROLUX T | | | | | | 47 | |
| | Polyester resin B | EMBRACE 21214 | | | | | | 30 | |
| Thickness per layer | Surface layer | | 8.48 | 7.04 | 8.48 | 7.00 | 8.48 | 5.60 | 7.00 |
| | Layer A | | 2.35 | 2.35 | 2.35 | 2.92 | 2.35 | 3.15 | 9.33 |
| | Layer B (layer B')* | | 2.88 | 2.88 | 2.88 | 2.33 | 2.88 | 2.80 | 5.84 |

EP 2 977 979 B1

(continued)

| Raw material | Trade name | Example 21 | Example 22 | Example 23 | Example 24 | Example 25 | Example 26 (Reference) | Comparative Example 3 |
|---|---|---|---|---|---|---|---|---|
| [(Overall thickness of layers B (layers B')):(Overall thickness of layers A):(Overall thickness of surface layers)] | | [1:1.1:2] | [2.5:2:3] 2.5:2:3] | [1:1.1:2] | [2:2.5:3] | [1:1.1 :2] | [1:1.1:1] | [2.5:2:3] |
| The total number of layers in shrink film | | 9 | 11 | 9 | 11 | 9 | 11 | 5 |
| The number of layers in base layer part | | 7 | 9 | 7 | 9 | 7 | 9 | 3 |
| Overall thickness of shrink film (pm) | | 35 | 35 | 35 | 35 | 35 | 35 | 35 |
| Compressive strength (N) | | 7.6 | 7.4 | 8.1 | 8.3 | 7.6 | 3.8 | 6.9 |
| Drop resistance of label | | Good | Good | Good | Good | Good | Poor | Poor |
| Tearability of label | | Good | Good | Good | Good | Good | Good | Usable |

\* The numeric value described in the table about Examples 21 to 26 indicates the thickness of the layer B (layer B') other than the layer serving as the outermost layer of the base layer part, and the thickness of the layer B (layer B') serving as the outermost layer of the base layer part is half the thicknesses described in the table.

As is also evident from Table 6, the shrink labels of the present invention according to the specific aspect (6) (Examples 21 to 25) were excellent in the drop resistance and tearability of the label and had high compressive strength of the shrink film and high label stiffness. By contrast, the shrink label comprising a base layer part lacking the layer containing not less than 50% by weight of a polyester resin (layer B) (Example 26) was inferior in the drop resistance of the label and also had low compressive strength of the shrink film and low label stiffness, though having excellent label tearability. Also, the shrink label comprising a base layer part not comprising 5 to 65 layers as layers (Comparative Example 3) was inferior in both the drop resistance and tearability of the label.

Table 7 shows the composition of a raw material for the surface layer (raw material (c)), a raw material for the layer A (raw material (a)), a raw material for the layer B (raw material (b)), and a raw material for forming a resin layer (layer B') used instead of layer B (raw material for the layer B') used in Examples 27 to 31 and Comparative Example 4, and the constitutions and evaluation results, etc., of shrink films and shrink labels prepared in Examples 27 to 31 and Comparative Example 4.

Example 27

(Raw material)

The raw material used to constitute layer B (raw material for the layer B) was 100% by weight of polyester resin B.

The raw material used to constitute layer A (raw material for the layer A) was a melt blend of 30% by weight of polystyrene resin A and 70% by weight of polystyrene resin B.

The raw material used to constitute each surface layer (raw material for the surface layer) was 100% by weight of polyester resin B.

(Shrink film)

The raw material for the layer A was added to extruder x heated to 220°C, the raw material for the layer B was added to extruder y heated to 220°C, and the raw material for the surface layer was added to extruder z heated to 220°C. These 3 extruders were used to carry out melt extrusion. The melted raw material for the layer A and the melted raw material for the layer B were split, joined, and laminated with a 2-kind 3-layer structure [raw material for the layer B/raw material for the layer A/raw material for the layer B] as one repeat unit using a lamination apparatus equipped with a feed block having a 2-kind 3-layer confluence system in combination with a quadrisection multiplier, to prepare laminate (XVII) (laminate having four 2-kind 3-layer structures mentioned above (the number of repeats: 4)). The melted raw material for the surface layer was joined and laminated on both sides of the laminate (XVII) using the feed block to prepare laminate (XVIII). The laminate (XVIII) was further extruded from a T-die and then rapidly cooled on a casting drum cooled to 25°C to obtain a laminated unstretched film having the surface layers disposed on both sides of the base layer part.

Next, the laminated unstretched film was stretched by tenter stretching 5 times in the width direction at 85°C to obtain a long object of a stretchd film (shrink film) stretched mainly in the width direction and having heat shrinkability in the direction.

The shrink film had a 9-layer structure [surface layer/layer A/layer B/layer. A/layer B/layer A/layer B/layer A/surface layer]. Although the base layer part in this shrink film was supposed to comprise 12 layers because the repeat units of the 2-kind 3-layer structures were laminated with the number of repeats of 4, the overlapping portions of the raw materials for the layer B, in actuality, yielded one layer due to the invisible interface between the layers. In addition, the raw material for the surface layer and the raw material for the layer B serving as the outermost layer of the base layer part had the same composition and therefore formed one surface layer due to the invisible interface between the layers. The base layer part therefore had a 7-layer structure [layer A/layer B/layer A/layer B/layer A/layer B/layer A], and each outermost layer of the base layer part was the layer A. In the base layer part, the number of interfaces formed by the layer A and the layer B adjacent to each other was 6. The layer A intervened between all of the layers B.

(Shrink sleeve label and labeled container)

A shrink sleeve label and a labeled container were obtained in the same way as in Example 10 using the long object of the shrink film thus obtained.

Examples 28 to 30

Each shrink film, shrink sleeve label, and labeled I container were obtained in the same way as in Example 27 except that, for example, the composition or component ratios of the raw material (a), the raw material (b), and the raw material (c) was changed as shown in Table 7. Of the raw material (a), the raw material (b), and the raw material (c), a raw material used in the form of a mixed resin was a melt blend of a plurality of resins.

Although the base layer part in the shrink film in Example 28 were supposed to comprise 12 layers because the repeat units of the 2-kind 3-layer structures were laminated with the number of repeats of 4, the overlapping portions of the raw materials for the layer B, in actuality, yielded one layer due to the invisible interface between the layers. For this reason, this shrink film had an 11-layer structure [surface layer/layer B/layer A/layer B/layer A/layer B/layer A/layer B/layer A/layer B/surface layer]. Thus, the base layer part in this shrink films had a 9-layer structure [layer B/layer A/layer B/layer A/layer B/layer A/layer B/layer A/layer B], and each outermost layer of the base layer part was the layer B. In the base layer part, the number of interfaces formed by the layer A and the layer B adjacent to each other was 8. The layer A intervened between all of the layers B.

Although the base layer part in each of the shrink films in Examples 29 arid 30 were supposed to comprise 12 layers because the repeat units of the 2-kind 3-layer structures were laminated with the number of repeats of 4, the overlapping portions of the raw materials for the layer B, in actuality, yielded one layer due to the invisible interface between the layers. In the shrink film, the raw material for the layer B serving as the outermost layer of the base layer part and the raw material for the surface layer originally had the same composition and therefore formed one surface layer due to the invisible interface between the surface layer and the layer B serving as the outermost layer of the base layer part. For this reason, these shrink films had a 9-layer structure [surface layer/layer A/layer B/layer A/layer B/layer A/layer B/layer A/surface layer]. Thus, the base layer part in each of these shrink films had a 7-layer structure [layer A/layer B/layer A/layer B/layer A/layer B/layer A], and each outermost layer of the base layer part was the layer A. In the base layer part, the number of interfaces formed by the layer A and the layer B adjacent to each other was 6. The layer A intervened between all of the layers B.

Example 31 (Reference Example)

A shrink film, a shrink sleeve label, and a labeled container were prepared in the same way as in Example 27 except that the raw material for the layer B was not used, and instead, 23% by weight of polystyrene resin A, 47% by weight of polystyrene resin B, and 30% by weight of polyester resin B were melt-blended and used as a raw material for the layer B'.

Although the base layer part in the shrink film in Example 31 was supposed to comprise 12 layers because the repeat units of the 2-kind 3-layer structures were laminated with the number of repeats of 4, the overlapping portions of the raw materials for the layer B', in actuality, yielded one layer due to the invisible interface between the layers. For this reason, this shrink film had an 11-layer structure [surface layer/layer B'/layer A/layer B'/layer A/layer B'/layer A/layer B'/layer A/layer B'/surface layer]. Thus, the base layer part in the shrink film had a 9-layer structure [layer B'/layer A/layer B'/layer A/layer B'/layer A/layer B'/layer A/layer B'], and each outermost layer of the base layer part was the layer B'.

Comparative Example 4

(Raw material)

The raw material used to constitute layer B (raw material for the layer B) was a melt blend of 6% by weight of polystyrene resin A, 14% by weight of polystyrene resin B, and 80% by weight of polyester resin B.

The raw material used to constitute layer A (raw material for the layer A) was a melt blend of 30% by weight of polystyrene resin A and 70% by weight of polystyrene resin B.

The raw material used to constitute each surface layer (raw material for the surface layer) was 100% by weight of polyester resin B.

(Shrink film)

The raw material for the layer A was added to extruder x heated to 220°C, the raw material for the layer B was added to extruder y heated to 220°C, and the raw material for the surface layer was added to extruder z heated to 220°C. These 3 extruders were used to carry out melt extrusion. The melted raw material for the layer A and the melted raw material for the layer B were prepared into laminate (XIX) having a 2-kind 3-layer structure [raw material-for the layer B/raw material for the layer A/raw material for the layer B] using a feed block having a 2-kind 3-layer confluence system. The melted raw material for the surface layer was joined and laminated on both sides of the laminate (XIX) using the feed block to prepare laminate (XX). The laminate (XX) was further extruded from a T-die and then rapidly cooled on a casting drum cooled to 25°C to obtain a laminated unstretched film having the surface layers disposed on both sides of the base layer part.

Next, the laminated unstretched film was stretched by tenter stretching 5 times in the width direction at 85°C to obtain a long object of a stretched film (shrink film) stretched mainly in the width direction and having heat shrinkability in the direction.

The shrink film had a 5-layer structure [surface layer/layer B/layer A/layer B/surface layer]. Thus, the base layer part in this shrink film had a 3-layer structure [layer B/layer A/layer B], and each outermost layer of the base layer part was the layer B. In the base layer part, the number of interfaces formed by the layer A and the layer B adjacent to each other was 2.

(Shrink sleeve label and labeled container)

A shrink sleeve label and a labeled container were obtained in the same way as in Example 27 using the long object of the shrink film thus obtained.

(Evaluation)

The shrink films, the shrink labels, and the shrink sleeve labels obtained in Examples 27 to 31 and Comparative Example 4 were each evaluated for label tearability and compressive strength. The evaluation results are shown in Table 7. The label tearability was evaluated in the same way as in the paragraph (13) Label tearability. The compressive strength was measured in the same way as in the paragraph (3) Compressive strength.

[Table 7]

(Table 7)

| | | | Example 27 | Example 28 | Example 29 | Example 30 | Example 31 (Reference) | Comparative Example 4 |
|---|---|---|---|---|---|---|---|---|
| Raw material | | Trade name | | | | | | |
| Content in raw material (c) (surface layer) (% by weight) | Polyester resin B | EMBRACE 21214 | 100 | 100 | 100 | 100 | 100 | 100 |
| Content in raw material (a) (layer A) (% by weight) | Polystyrene resin A | STYROLUX S | 30 | 30 | 25.8 | 0 | 30 | 30 |
| | Polystyrene resin B | STYROLUX T | 70 | 70 | 60.2 | 0 | 70 | 70 |
| | Polystyrene resin C | Modified SBS | 0 | 0 | 0 | 100 | 0 | 0 |
| | Polyester resin B | EMBRACE 21214 | 0 | 0 | 14 | 0 | 0 | 0 |
| Content in raw material (b) (layer B) (% by weight) | Polystyrene resin A | STYROLUX S | 0 | 6 | 0 | 0 | | 6 |
| | Polystyrene resin B | STYROLUX T | 0 | 14 | 0 | 0 | | 14 |
| | Polyester resin B | EMBRACE 21214 | 100 | 80 | 100 | 100 | | 80 |
| Content in raw material for layer B' (layer B') (% by weight) | Polystyrene resin A | STYROLUX S | | | | | 23 | |
| | Polystyrene resin B | STYROLUX T | | | | | 47 | |
| | Polyester resin B | EMBRACE 21214 | | | | | 30 | |
| Thickness per layer (μm) | Surface layer | | 8.48 | 7.04 | 8.48 | 8.48 | 5.06 | 7.00 |
| | Layer A | | 2.35 | 2.35 | 2.35 | 2.35 | 3.15 | 9.33 |
| | Layer B (layer B')* | | 2.88 | 2.88 | 2.88 | 2.88 | 2.80 | 5.83 |

(continued)

| | | Example 27 | Example 28 | Example 29 | Example 30 | Example 31 (Reference) | Comparative Example 4 |
|---|---|---|---|---|---|---|---|
| Raw material | Trade name | | | | | | |
| [(Overall thickness of layers B (layers B')):(Overall thickness of layers A): (Overall thickness of surface layers)] | | [1:1.1:2] | [2.5:2:3] | [1:1.1:2] | [1:1.1:2] | [8:9:8] | [2.5:2:3] |
| The total number of layers in shrink film | | 9 | 11 | 9 | 9 | 11 | 5 |
| The number of layers in base layer part | | 7 | 9 | 7 | 7 | 9 | 3 |
| Overall thickness of shrink film ($\mu$m) | | 35. | 35 | 35 | 35 | 35 | 35 |
| Compressive strength (N) | | 7.6 | 7.4 | 8.1 | 7.6 | 3.8 | 7.1 |
| Tearability of label | | Good | Good | Good | Good | Good | Usable |

*The numeric value described in the table about Examples 28 and 31 indicates the thickness of the layer B (layer B') other than the layer serving as the outermost layer of the base layer part, and the thickness of the layer B (layer B') serving as the outermost layer of the base layer part is half the thicknesses described in the table.

As is also evident from Table 7, the shrink labels of the present invention according to the specific aspect (7) (Examples 27 to 30) had high compressive strength and excellent tearability. By contrast, the shrink label comprising a base layer part lacking the layer containing not less than 50% by weight of a polyester resin (layer B) (Example 31) had low compressive strength, though having excellent label tearability. Also, the shrink label comprising a base layer part not comprising 5 to 65 layers as layers (Comparative Example 4) was inferior in label tearability, though having high compressive strength.

Industrial Applicability

The shrink label of the present invention has high label stiffness by virtue of the aforementioned specific constitution and can therefore prevent defects responsible for poor application upon application of the label to a bottle using a labeler. The shrink label of the present invention is therefore applied to a container (e.g., a container for drinks) for use as a labeled container. The shrink label of the present invention may be used for an object other than the container, and, for example, the shrink label (particularly, the shrink sleeve label) of the present invention is placed around a container such that the shrink label of the present invention is in a tubular form, and then applied to the container by thermal shrinkage to obtain a labeled container (labeled container comprising the shrink label of the present invention).

Reference Signs List

1:        Shrink film of the present invention
11:       Surface layer
12:       Base layer part
12a:      Layer A
12b:      Layer F
2:        Print layer
3:        Shrink label of the present invention
4:        Shrink sleeve label of the present invention
41:       Seam
D:        Circumferential direction
51:       Background print layer
52:       Designed print layer
53:       Solvent or adhesive

**Claims**

1.  A shrink label comprising a shrink film, wherein
    the shrink film comprises a base layer part and surface layers disposed on both sides of the base layer part,
    the surface layers each contain not less than 50% by weight of a polyester resin, and
    the base layer part comprises 5 to 65 layers as layers, wherein the layers comprise at least a layer containing not less than 50% by weight of a polystyrene resin (layer A) and a layer containing not less than 50% by weight of a polyester resin (layer B) as the layers.

2.  The shrink label according to claim 1, wherein the base layer part comprises at least 3 layers of the layer B as the layers.

3.  The shrink label according to claim 1 or 2, wherein the layer B further contains more than 0% by weight and not more than 50% by weight of a polystyrene resin.

4.  The shrink label according to any one of claims 1 to 3, wherein the base layer part comprises not less than 2 interfaces formed by the layer A and the layer B adjacent to each other.

5.  The shrink label according to any one of claims 1 to 4, wherein
    the shrink film comprises the surface layers laminated one by one directly on both sides of the base layer part,
    each outermost layer of the base layer part is the layer B, and the layer B and each of the surface layers are layers differing in composition from each other.

**6.** The shrink label according to any one of claims 1 to 5, wherein
the shrink film comprises the surface layers laminated one by one directly on both sides of the base layer part,
the base layer part comprises a total of 5 to 65 alternate layers of the layer A and the layer B as the layers, and
each outermost layer of the base layer part is the layer B.

**7.** The shrink label according to any one of claims 1 to 6, wherein
the shrink film comprises at least a laminate structure in which a resin layer (R) and a resin layer (S) are adjacent to each other,
the combination of the respective main component resins of the resin layer (R) and the resin layer (S) is a polyester resin and a polystyrene resin, a polyester resin and a polyolefin resin, or a polystyrene resin and a polyolefin resin, and
the interlaminar strength in the 180° direction at 90°C of an interface formed by the resin layer (R) and the resin layer (S) adjacent to each other is larger than the shrinkage stress at 90°C of the shrink film,
wherein the interlaminar strength and the shrinkage stress are measured as described in the specification.

**8.** The shrink label according to any one of claims 1 to 7, wherein
the base layer part comprises interfaces formed by the layers adjacent to each other, and
not less than 3 of the interfaces are interfaces having T-peel strength lower than that between the surface layers and the base layer part (interfaces (L)),
wherein the T-peel strength is measured as described in the specification.

**9.** The shrink label according to any one of claims 1 to 8, wherein
the shrink film comprises at least a laminate structure in which a resin layer (R) and a resin layer (S) are adjacent to each other,
the combination of the respective main component resins of the resin layer (R) and the resin layer (S) is a polyester resin and a polystyrene resin, a polyester resin and a polyolefin resin, or a polystyrene resin and a polyolefin resin,
the interlaminar strength in the 180° direction at 90°C of an interface formed by the resin layer (R) and the resin layer (S) adjacent to each other is not less than 2 N, and
the interlaminar strength in the 180° direction at ordinary temperature of the interface formed by the resin layer (R) and the resin layer (S) adjacent to each other is more than 0 N and less than 1 N,
wherein the interlaminar strength is measured as described in the specification.

**10.** The shrink label according to any one of claims 1 to 9,
the shrink label comprising a print layer on at least one surface of the shrink film, wherein
the overall thickness of the shrink film is 15 to 35 $\mu$m,
the total thickness of the surface layers is not less than 40% of the overall thickness of the shrink film, and
the print layer is a solvent drying-type print layer.

**11.** A method for producing a shrink label, comprising a step of preparing a shrink film, wherein the step of preparing a shrink film comprises:

a first stage of melting a raw material (a) comprising a polystyrene resin content of not less than 50% by weight, a raw material (f) comprising a polyester resin content of not less than 50% by weight, and a raw material (c) comprising a polyester resin content of not less than 50% by weight, respectively;
a second stage of laminating the raw material (a) and the raw material (f) melted at the first stage, followed by further layer multiplication to form a laminate; and
a third stage of laminating the raw material (c) melted at the first stage one by one on both sides of the laminate formed at the second stage.

**Patentansprüche**

**1.** Schrumpfetikett, umfassend eine Schrumpffolie, wobei
die Schrumpffolie einen Basisschichtteil und auf beiden Seiten des Basisschichtteils angeordnete Oberflächenschichten umfasst,
die Oberflächenschichten jeweils nicht weniger als 50 Gew.-% eines Polyesterharzes enthalten,
der Basisschichtteil 5 bis 65 Schichten als Schichten umfasst, wobei die Schichten mindestens eine Schicht, die nicht weniger als 50 Gew.-% eines Polystyrolharzes (Schicht A) enthält, und eine Schicht, die nicht weniger als 50 Gew.-% eines Polyesterharzes (Schicht B) enthält, als die Schichten umfassen.

**2.** Schrumpfetikett nach Anspruch 1, wobei der Basisschichtteil mindestens 3 Schichten der Schicht B als die Schichten umfasst.

**3.** Schrumpfetikett nach Anspruch 1 oder 2, wobei die Schicht B ferner mehr als 0 Gew.-% und nicht mehr als 50 Gew.-% eines Polystyrolharzes enthält.

**4.** Schrumpfetikett nach einem der Ansprüche 1 bis 3, wobei der Basisschichtteil nicht weniger als zwei Grenzflächen umfasst, die durch die nebeneinander liegende Schicht A und Schicht B gebildet werden.

**5.** Schrumpfetikett nach einem der Ansprüche 1 bis 4, wobei
die Schrumpffolie die Oberflächenschichten umfasst, die nacheinander direkt auf beiden Seiten des Basisschichtteils laminiert sind,
jede äußerste Schicht des Basisschichtteils die Schicht B ist, und die Schicht B und jede der Oberflächenschichten Schichten sind, die sich in ihrer Zusammensetzung voneinander unterscheiden.

**6.** Schrumpfetikett nach einem der Ansprüche 1 bis 5, wobei
die Schrumpffolie die Oberflächenschichten umfasst, die nacheinander direkt auf beiden Seiten des Basisschichtteils laminiert sind,
der Basisschichtteil insgesamt 5 bis 65 alternierende Schichten der Schicht A und der Schicht B als die Schichten umfasst, und
jede äußerste Schicht des Basisschichtteils die Schicht B ist.

**7.** Schrumpfetikett nach einem der Ansprüche 1 bis 6, wobei
die Schrumpffolie mindestens eine Laminatstruktur umfasst, in der eine Harzschicht (R) und eine Harzschicht (S) nebeneinander liegen,
die Kombination der jeweiligen Hauptkomponentenharze der Harzschicht (R) und der Harzschicht (S) ein Polyesterharz und ein Polystyrolharz, ein Polyesterharz und ein Polyolefinharz, oder ein Polystyrolharz und ein Polyolefinharz ist, und
die interlaminare Festigkeit in 180°-Richtung bei 90 °C einer Grenzfläche, die durch die nebeneinander liegende Harzschicht (R) und Harzschicht (S) gebildet wird, größer als die Schrumpfspannung bei 90 °C der Schrumpffolie ist, wobei die interlaminare Festigkeit und die Schrumpfungsspannung, wie in der Beschreibung beschrieben, gemessen werden.

**8.** Schrumpfetikett nach einem der Ansprüche 1 bis 7, wobei
der Basisschichtteil Grenzflächen umfasst, die durch die nebeneinander liegenden Schichten gebildet werden, und nicht weniger als 3 der Grenzflächen Grenzflächen mit einer geringeren T-Schälfestigkeit als der zwischen den Oberflächenschichten und dem Basisschichtteil (Grenzflächen (L)) sind,
wobei die T-Schälfestigkeit, wie in der Beschreibung beschrieben, gemessen wird.

**9.** Schrumpfetikett nach einem der Ansprüche 1 bis 8, wobei
die Schrumpffolie mindestens eine Laminatstruktur umfasst, in der eine Harzschicht (R) und eine Harzschicht (S) nebeneinander liegen,
die Kombination der jeweiligen Hauptkomponentenharze der Harzschicht (R) und der Harzschicht (S) ein Polyesterharz und ein Polystyrolharz, ein Polyesterharz und ein Polyolefinharz, oder ein Polystyrolharz und ein Polyolefinharz ist,
die interlaminare Festigkeit in 180°-Richtung bei 90 °C einer Grenzfläche, die durch die nebeneinander liegende Harzschicht (R) und Harzschicht (S) gebildet wird, nicht weniger als 2 N beträgt, und
die interlaminare Festigkeit in 180°-Richtung bei gewöhnlicher Temperatur der Grenzfläche, die durch die nebeneinander liegende Harzschicht (R) und Harzschicht (S) gebildet wird, mehr als 0 N und weniger als 1 N beträgt,
wobei die interlaminare Festigkeit, wie in der Beschreibung beschrieben, gemessen wird.

**10.** Schrumpfetikett nach einem der Ansprüche 1 bis 9,
wobei das Schrumpfetikett eine Druckschicht auf mindestens einer Oberfläche der Schrumpffolie umfasst, wobei die Gesamtdicke der Schrumpffolie 15 bis 35 $\mu$m beträgt,
die Gesamtdicke der Oberflächenschichten nicht weniger als 40% der Gesamtdicke der Schrumpffolie beträgt, und die Druckschicht eine Druckschicht vom Lösungsmitteltrocknungstyp ist.

**11.** Verfahren zum Herstellen eines Schrumpfetiketts, umfassend einen Schritt zum Herstellen einer Schrumpffolie, wobei der Schritt zum Herstellen einer Schrumpffolie umfasst:

eine erste Stufe des Schmelzens eines Rohmaterials (a) umfassend einen Polystyrolharzgehalt von nicht weniger als 50 Gew.-%, eines Rohmaterials (f) umfassend einen Polyesterharzgehalt von nicht weniger als 50 Gew.-%, und eines Rohmaterials (c) umfassend einen Polyesterharzgehalt von nicht weniger als 50 Gew.-%;
eine zweite Stufe des Laminierens des in der ersten Stufe geschmolzenen Rohmaterials (a) und des Rohmaterials (f), gefolgt von einer weiteren Schichtvervielfachung, um ein Laminat zu bilden; und
eine dritte Stufe des Laminierens des in der ersten Stufe geschmolzenen Rohmaterials (c) nacheinander auf beiden Seiten des in der zweiten Stufe gebildeten Laminats.

## Revendications

1. Étiquette rétractable comprenant un film rétractable, dans laquelle
le film rétractable comprend une partie de couche de base et des couches de surface disposées sur les deux côtés de la partie de couche de base,
les couches de surface contiennent chacune au moins 50 % en poids d'une résine polyester, et
la partie de couche de base comprend 5 à 65 couches sous forme de couches, les couches comprenant au moins une couche ne contenant pas moins de 50 % en poids d'une résine de polystyrène (couche A) et une couche ne contenant pas moins de 50 % en poids d'une résine polyester (couche B) en tant que couches.

2. Étiquette rétractable selon la revendication 1, dans laquelle la partie de couche de base comprend au moins 3 couches de la couche B en tant que couches.

3. Étiquette rétractable selon la revendication 1 ou 2, dans laquelle la couche B contient en outre plus de 0 % en poids et pas plus de 50 % en poids d'une résine polystyrène.

4. Étiquette rétractable selon l'une quelconque des revendications 1 à 3, dans laquelle la partie de couche de base ne comprend pas moins de 2 interfaces formées par la couche A et la couche B adjacentes l'une à l'autre.

5. Étiquette rétractable selon l'une quelconque des revendications 1 à 4, dans laquelle
le film rétractable comprend les couches de surface stratifiées une par une directement sur les deux côtés de la partie de couche de base,
chaque couche la plus extérieure de la partie de couche de base est la couche B, et la couche B et chacune des couches de surface sont des couches ayant une composition différente les unes des autres.

6. Étiquette rétractable selon l'une quelconque des revendications 1 à 5, dans laquelle
le film rétractable comprend les couches de surface stratifiées une par une directement sur les deux côtés de la partie de couche de base,
la partie de couche de base comprend un total de 5 à 65 couches alternées de la couche A et de la couche B en tant que couches, et
chaque couche la plus extérieure de la partie couche de base est la couche B.

7. Étiquette rétractable selon l'une quelconque des revendications 1 à 6, dans laquelle
le film rétractable comprend au moins une structure stratifiée dans laquelle une couche de résine (R) et une couche de résine (S) sont adjacentes l'une à l'autre,
la combinaison des résines constituantes principales respectives de la couche de résine (R) et de la couche de résine (S) est une résine de polyester et une résine de polystyrène, une résine de polyester et une résine de polyoléfine, ou une résine de polystyrène et une résine de polyoléfine, et
la résistance interlaminaire dans la direction de 180 ° à 90 °C d'une interface formée par la couche de résine (R) et la couche de résine (S) adjacentes l'une à l'autre est supérieure à la contrainte de rétractation à 90 °C du film rétractable,
dans lequel la résistance interlaminaire et la contrainte de rétractation sont mesurées comme décrit dans la description.

8. Étiquette rétractable selon l'une quelconque des revendications 1 à 7, dans laquelle
la partie de couche de base comprend des interfaces formées par les couches adjacentes les unes aux autres, et
pas moins de 3 des interfaces sont des interfaces ayant une résistance au pelage inférieure à celle existant entre les couches de surface et la partie de couche de base (interfaces (L)),
dans laquelle la résistance au pelage est mesurée comme décrit dans la description.

9. Étiquette rétractable selon l'une quelconque des revendications 1 à 8, dans laquelle
le film rétractable comprend au moins une structure stratifiée dans laquelle une couche de résine (R) et une couche de résine (S) sont adjacentes l'une à l'autre,
la combinaison des résines constituantes principales respectives de la couche de résine (R) et de la couche de résine (S) est une résine polyester et une résine polystyrène, une résine polyester et une résine polyoléfine, ou une résine polystyrène et une résine polyoléfine,
la résistance interlaminaire dans la direction de 180 ° à 90 °C d'une interface formée par la couche de résine (R) et la couche de résine (S) adjacentes l'une à l'autre n'est pas inférieure à 2N, et
la résistance interlaminaire dans la direction de 180° à température ordinaire de l'interface formée par la couche de résine (R) et la couche de résine (S) adjacentes l'une à l'autre est supérieure à 0 N et inférieure à 1 N,
dans lequel la résistance interlaminaire est mesurée comme décrit dans la description.

10. Étiquette rétractable selon l'une quelconque des revendications 1 à 9,
l'étiquette rétractable comprenant une couche imprimée sur au moins une surface du film rétractable, dans laquelle
l'épaisseur totale du film rétractable est de 15 à 35 $\mu$m,
l'épaisseur totale des couches de surface n'est pas inférieure à 40 % de l'épaisseur totale du film rétractable, et
la couche imprimée est une couche imprimée du type à séchage au solvant.

11. Procédé de production d'une étiquette rétractable, comprenant une étape de préparation d'un film rétractable, dans lequel l'étape de préparation d'un film rétractable comprend :

une premier stade de fusion d'une matière première (a) comprenant une teneur en résine de polystyrène d'au moins 50 % en poids, d'une matière première (f) comprenant une teneur en résine polyester d'au moins 50 % en poids, et d'une matière première (c) comprenant une teneur en résine polyester d'au moins 50 % en poids, respectivement ;
un deuxième stade de stratification de la matière première (a) et de la matière première (f) fusionnées lors du premier stade, suivi d'une multiplication de couches supplémentaire pour former un stratifié ; et
un troisième stade de stratification de la matière première (c) fusionnée lors du premier stade une à une des deux côtés du stratifié formé au second stade.

[Fig.1]

[Fig.2]

[Fig.3]

[Fig.4]

[Fig.5]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4028788 B
- JP 2002351332 A
- JP 2009178887 A
- US 2013224412 A